# EUROPEAN PATENT APPLICATION

(11) **EP 1 283 152 A1**
(43) Date of publication of application: **12.02.2003**
(21) Application number: 01930169.6
(22) Date of filing: 15.05.2001
(51) Int. Cl.: B62D 55/253

(54) **RUBBER CRAWLER**

(30) Priority: 15.05.2000 JP 2000141587; 01.09.2000 JP 2000265612; 05.12.2000 JP 2000369653
(71) Applicant: Fukuyama Gomu Kogyo Kabushiki Kaisha, Fukuyama-shi, Hiroshima-ken 720-8637 (JP)
(72) Inventor: Katoh, Yusaku, Fukuyama-shi, Hiroshima 720-0092 (JP); Kimura, Hideki, Fukuyama-shi, Hiroshima 720-2413 (JP)
(74) Representative: Laufhütte, Dieter, Dr.-Ing.
(86) International application number: JP0104054
(87) International publication number: WO01087693

(57) **Abstract**

The present invention relates to a rubber crawler, and prevents occurrence of abnormal tension to the rubber crawler under severe use conditions. For this purpose, rectangular parallelepiped blocks **5** are arranged at the left and the right with a sprocket engaging hole **2** between them, the left and right rectangular parallelepiped blocks **5** are connected with rod bodies **4** inserted through through-holes **7** thereof, and the rectangular parallelepiped blocks **5** adjacent in a lengthwise direction (front and rear in a circumference direction) are connected directly or with connecting members (connecting blocks, connecting rings), whereby a skeleton part of the rubber crawler is constructed, and the skeleton part is embedded in a rubber crawler main body, or a rubber crawler unit main body.

## Description

### Technical Field

The present invention relates to a rubber crawler, which is fitted to full-track traveling equipment that is a base carrier for an agricultural working vehicle, civil engineering machinery, construction equipment and the like.

### Background Art

Conventionally, iron crawlers are frequently used for full-track traveling equipment used for traveling units of construction equipment and the like. In recent years, however, construction equipment and the like using rubber crawlers are used by choice since they do not damage pavements, and recently, the construction equipment and the like using rubber crawlers are also frequently used under the severe conditions other than the pavement or the like because of the advantage that they provide favorable riding comfort and operators feel less fatigue.

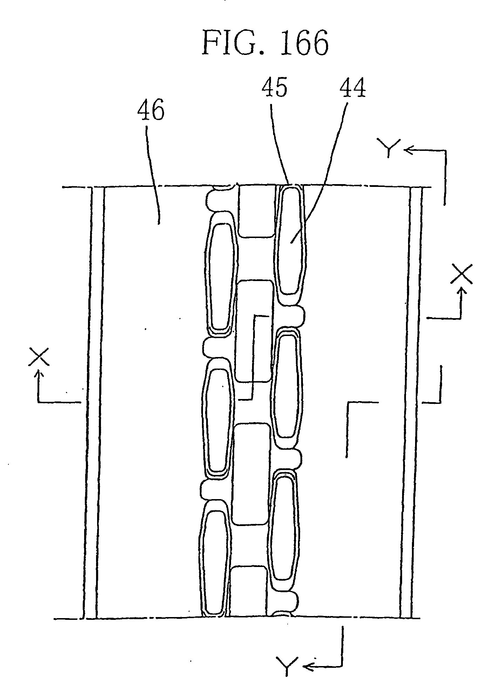

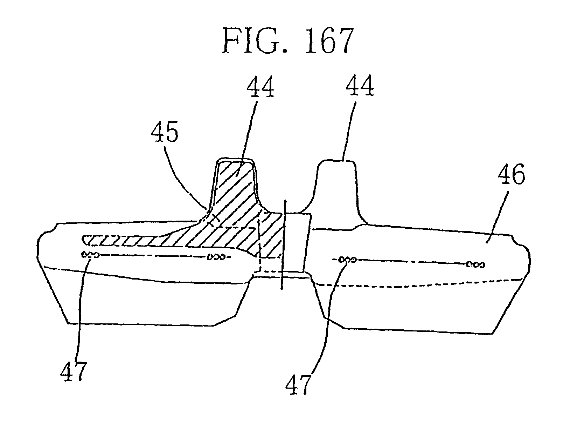

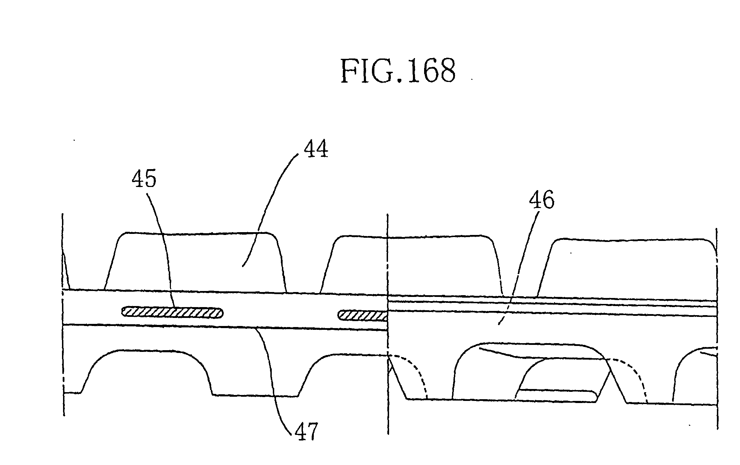

FIG. **166** is a plan view of an internal circumference (non-ground contact surface) side showing an example of a conventional rubber crawler, FIG. **168** is a sectional view taken along the X-X line in FIG. **166**, and FIG. **167** is a sectional view taken along the Y-Y line in FIG. **166**. In the drawings, reference numeral **44** denotes a core metal guide projection, reference numeral **45** denotes a core metal, reference numeral **46** denotes a rubbery elastic body, and reference numeral **47** denotes a tension reinforcement layer.

Because of the advantage that they provides favorable riding comfort and the operators feel less fatigue, rubber crawlers are used under the severe conditions other than the pavement or the like, which increases the chances of traveling on sharp rocks and stones, discarded materials of a civil engineering work and the like, and thus depending on the conditions of use, a foreign matter is caught between a driving wheel or an idler wheel and a rubber crawler to cause abnormal tension to the rubber crawler, thus sometimes causing accidents in which a steel cord being a tension reinforcement layer is cut and that a wrapping portion of the steel cord comes off.

In the phenomena in which a core metal guiding projection is caught by a chassis of traveling equipment, which is caused by the aforementioned catching of a foreign matter, and reverse warping of a rubber crawler occurring during traveling on an irregular ground, a very strong drive force from the driving wheel is applied to the core metal, and a bonding portion between the core metal and the steel cord is broken, which sometimes causes an accident of sticking out the core metal.

Further, during traveling on an irregular ground, cut scars and the like occur to the rubber portion, and when the scar reaches the steel cord as the tension reinforcement layer of the rubber crawler, the steel cord is cut by cutting, corrosion, and the like, thus presenting the problem of the disadvantage that the rubber portion cannot be used as a rubber crawler even though the rubber portion is still in a usable state.

### Disclosure of the Invention

The present invention is made to solve the above-described problem of the prior art, and has its object to provide a rubber crawler which does not easily become unusable even under the severe conditions of use.

The characteristic of this invention is that blocks are each shaped like a rectangular parallelepiped, include two through-holes with a space left in a lengthwise direction of an undersurface part and are arranged on the left and the right with a sprocket engaging hole therebetween, respectively, rod bodies that are inserted through the through-holes of the left and right rectangular parallelepiped blocks to connect these rectangular parallelepiped blocks are included, and the rectangular parallelepiped blocks adjacent in the lengthwise direction (at the front and the rear in a circumference direction) are connected to each other, whereby a skeleton part of the rubber crawler is constructed, and this is provided in a rubber crawler main body, or a rubber crawler unit main body; and thereby, even if a severe external damage is caused to the rubber crawler, a steel cord being a tension reinforcement layer is not broken as in the conventional rubber crawler; even if a core metal is caught by a chassis of a machine body, the core metal is not stuck out, thus making the rubber crawler highly reliable; and the trouble that the rubber crawler becomes unusable even if the rubber part is in a usable state is prevented, thus making the rubber crawler highly durable.

The rod body constructing the skeleton part of the rubber crawler is a rod material, as for its sectional shape, circular shapes, polygonal shapes and the like can be used according to the object of use, but this is not limited to them, and the rod body may be solid or hollow, if the rod body is solid, the rod body strength becomes the highest, and if the rod body is made hollow, the weight can be reduced.

Further, it is preferable that the sectional shape of the rod body is circular, since a circular shape has the highest strength, but the other shapes may be freely selected, and it is possible to form the rod body by press-working of a plate material.

With the construction in which a bush is fitted onto a sprocket engaging portion of the rod body, it is possible to correspond to sprockets of different sizes by changing the size of the bush, and if a hardwearing bush is used, the durability is improved, thus making it possible to provide a long-life rubber crawler. In this situation, if a center part including the sprocket engaging portion of the rod body is made thick-walled, the durability of the rod body engaging portion on which load from the sprocket is exerted can be improved.

The area other than the part fitted in the rectangular parallelepiped block may be formed into a flat shape with fixed thickness, and one end portion out of both end portions in the lengthwise direction of the rod body may be formed into a scoop shape with larger width than a diameter of the center part.

Next, if the through-hole formed in a rectangular parallelepiped block constructing the skeleton part of the rubber crawler is made larger than the rod body diameter and a gap between the rod body and the through-hole is filled with a rubber material or the like to be fixed via the rubber material, even if a heavy load is applied to the rubber crawler, extension to some degree occurs to the rubber crawler and abnormal tension is hardly caused as an iron link, and the rubber crawler is difficult to break.

Though the rod body and the through-hole of the rectangular parallelepiped block are fixed via an elastic material, they are fixed more firmly as compared with the conventional rubber crawler, and derailing of the rubber crawler can be decreased dramatically with extremely less vibration, thus making it possible to decrease swing of the individual rod body and decrease vibration.

The rod body revolves via a rubber layer between the rod body and the through-hole of the rectangular parallelepiped block, and thus friction between the through-hole of the rectangular parallelepiped block and the rod body is avoided, thus preventing abrasion, and preventing occurrence of a squeaking sound.

Further, the through-hole of the above-described rectangular parallelepiped block may be made larger at the side of the sprocket engaging hole and smaller at the other side, and a rod body swing prevention projection may be provided at an inner wall of the through-hole that is made larger, thus making it possible to further reduce a twist of the rubber crawler and swing of the rod body.

Further, with the construction in which a projectingly provided part of the rectangular parallelepiped block on the rubber crawler inner circumference side (non-ground contact side) is projectingly provided in a square shape, the projectingly provided part serves as a detachment prevention guide for the rollers or idler wheel, and if the top portion of the projectingly provided part is formed to be flat, it becomes a rolling contact surface for the rollers, thus making the rubber crawler compatible with an iron crawler.

In the rectangular parallelepiped block, slip prevention parts may be formed at both end portions in the lengthwise direction of the rectangular parallelepiped block, and when it is embedded in the rubber crawler, the slip prevention parts of the rectangular parallelepiped blocks adjacent longitudinally in the crawler circumference direction are made to overlap the respective slip prevention parts in the view in the crawler circumference direction, whereby lateral slip of the rubber crawler is prevented, and the rubber crawler can be prevented from being detached.

If one end portion of the slip prevention part is made a convex slip prevention part, the other end portion is made a concave slip prevention part, and the slip prevention parts overlap one another in a nest form, lateral slip and a twist of the rubber crawler are prevented, and the rubber crawler can be further prevented from being detached.

Further, as for the slip prevention part of the rectangular parallelepiped block, the slip prevention projections may be provided at an upper portion of a right side (or upper portion of a left side) and at an lower portion of the left side (or lower portion of the right side) of the rectangular parallelepiped block on one end side of the rectangular parallelepiped block, the slip prevention projections may be provided at the upper portion of the left side (or the upper portion of the right side) and the lower portion of the right side (or the lower portion of the left side) on the other end portion side of the rectangular parallelepiped block, and the respective slip prevention parts (slip prevention projections) may overlay one another in the vertical direction and the lateral direction of the crawler in the view in the crawler circumference direction, and they may overlay one another in the lateral direction in the view in the crawler width direction, thus not only preventing the rubber crawler from slipping laterally in the crawler width direction, but also preventing the rubber crawler form being twisted, and making it possible to prevent the rubber crawler from being detached from the traveling equipment efficiently.

Since the slip prevention projections are arranged in the opposite positions to each other at the upper portion and the lower portion of the rectangular parallelepiped block, it is possible to prevent a slip in the rightward direction and a slip in the leftward direction, that is, lateral slips in both the directions, with only one slip prevention part.

It may be suitable to adopt the construction in which connecting members (connecting rings, connecting blocks, or the like), which include insertion portions or insertion holes at the outer (end portion) side of the rectangular parallelepiped block in the crawler width direction, are arranged at the skeleton part of the rubber crawler.

The connecting member increases the rigidity of the rubber part, disperses a driving force received from the sprocket to the entire body of the rubber crawler to transmit it to the lug and thereby obtains a sufficient tractive force, and in this case, if a reinforcement layer is buried in the outer circumference side (ground contact side) of the connecting member, the driving force is dispersed more uniformly, thus obtaining a more sufficient tractive force.

As a raw material of the connecting ring of the connecting member, spring steel, steel cord, or high strength fiber are usable, which gives springiness to the connecting ring, prevents abnormal tension, and provides the rubber crawler to which breakage is hardly occurs, but it is possible to form by the material other than them.

If the top portion of the inner circumference (non-ground contact surface) side of the connecting ring is constructed to be the roller rolling portion, it becomes the rolling contact surface of the outer roller type of rollers.

The width of the connecting ring may be made small, the wing portion may be provided only at the ground contact surface side, the ground contact surface side of the connecting ring may be made wide, and the inner circumference side thereof may be formed to be narrow. This makes the area of the ground contact side, to which a load is always applied, large to improve durability, and makes the inner circumference side, to which a load is not applied, small to reduce the amount of the material to reduce the production cost, thus making it possible to produce the connecting ring at low cost.

Further, a rib may be provided on the surface of the wing portion on the inner circumference side, which is formed at the connecting ring, and this rib makes it possible to reinforce the wing portion of the connecting ring.

A center rib connecting the ground contact surface side and the inner circumference side may be formed at the center part of the connecting ring, whereby the connecting ring is reinforced, and the strength of the connecting ring is improved, to make it effective to be used in the outer roller type of crawler device. By providing the center rib, it is possible to make the wall thickness of the connecting ring smaller, and the weight can be reduced to make the assembly operation easy and reduce the production cost, thus making it possible to produce the connecting ring with high strength at low cost.

It is preferable to fold the outer end portion of the connecting ring in the rubber crawler width direction to the inner circumference side (non-ground contact surface side) of the rubber crawler, and provide an inclined surface at the outer circumference side (ground contact side) of the rubber crawler, whereby breakage (edge tearing) at both end portions in the rubber crawler width direction, which is caused by the rubber crawler riding on a curbstone or the like on the road surface, can be prevented, and the production cost of the rod body can be reduced, thus making it possible to produce the rubber crawler at low cost.

It is possible to adopt the construction in which the connecting member is made a connecting block in a block form, instead of the connecting ring in a ring form. In this situation, by adopting the construction in which the insertion hole provided in the connecting block is made larger than the outer diameter of the rod body, and the rod body is fixed via the rubber material as an elastic material in a gap between the insertion hole and the rod body, the rubber crawler is given extension to some degree and springiness, and abnormal tension hardly occurs while the rod body is firmly fixed, thus making the rubber crawler difficult to derail with less vibration.

Further, the insertion hole provided in the connecting block may be made larger at the sprocket engaging hole side, and made smaller at the other side as the through-hole of the rectangular parallelepiped block, and an inner projection may be provided on an inner wall of the insertion hole which is made larger, thus making it possible to further reduce the twist of the rubber crawler and the swing of the rod body.

By adopting the construction in which the top surface of the connecting block on the rubber crawler inner circumference side is exposed, or covered with a rubber layer as thin as a flash, the top surface of the rubber crawler inner circumference side becomes a rolling contact surface for the outer roller type of rollers.

The rod body may be integrally formed at the connecting member or the rectangular parallelepiped block, and further, all of the rod body, the connecting member, the rectangular parallelepiped block and the bush may be integrally formed, whereby the number of components can be reduced, the assembly operation steps is reduced at the time of production, and the assembly operation is facilitated, thus making it possible to simplify the number of man-hours for the operation and reduce the cost.

As the structure of connecting the rod body being the rubber crawler skeleton part by the rectangular parallelepiped block, or connecting by the rectangular parallelepiped block and the connecting member, for example, the following three constructions can be adopted, but it may be connected by the other constructions.

As the first construction, the rectangular parallelepiped blocks including two through-holes with a space left in the lengthwise direction of the undersurface portion are arranged at the left and the right with the sprocket engaging hole between them, they are placed in a zigzag fashion at the left and the right, and the rod body is inserted through one of the through-holes at the front and the rear in the crawler circumference direction of one of the rectangular parallelepiped blocks opposing each other on the left and right, and the other one of through-holes at the front and the rear in the crawler circumference direction of the other rectangular parallelepiped block, whereby the rod body is connected with the rectangular parallelepiped blocks.

In this zigzag arrangement structure, when the top surface of the rectangular parallelepiped block is made the roller rolling contact surface, the roller does not fall in, and it is possible to travel smoothly.

In this situation, it is desirable to adopt the construction in which the connecting member including the insertion portion at the outer (end portion) side of the rectangular parallelepiped block in the crawler width direction is placed, and the construction in which all the rod bodies are connected at both sides of the sprocket engaging holes by means of the rectangular parallelepiped blocks and the connecting members. In this construction, when the crawler winds around the driving wheel and idler wheel, and when the tension applied to the crawler changes, distortion repeatedly occurring to the rubber between the rectangular parallelepiped blocks is reduced, and fatigue failure of the rubber between the rectangular parallelepiped blocks is prevented. The crawler with less vibration and less twist is provided, and derailing of the rubber crawler can be prevented.

As the second construction, the rectangular parallelepiped blocks may be placed to face each other at the left and the right with the sprocket engaging hole between them, the respective adjacent through-holes of the adjacent rectangular parallelepiped blocks in the crawler circumference direction may be made to overlap one another, and the rod body may be inserted through the overlapping through-holes to thereby connect the rod body with the rectangular parallelepiped block, and in this situation, it is desirable to provide a step portion at the through-hole region of the rectangular parallelepiped block to form the wall thickness of the through-hole region to be thinner than the center part of the rectangular parallelepiped block, and to form the step portions to be in the opposite directions at the front and the rear in the longitudinal direction of the rectangular parallelepiped block.

In this rectangular parallelepiped block overlapping arrangement structure of the skeleton part, in the case in which the top surface of the rectangular parallelepiped block is made a roller rolling contact surface, the roller rolling contact surface becomes a rolling contact surface laterally continuous in the crawler width direction, and the rollers do not fall in, thus making it possible to travel smoothly, and further, connecting the rod body with two of the rectangular parallelepiped blocks, which firmly connects the rod body.

As the third construction, the rectangular parallelepiped blocks are placed to face each other at the left and the right with the sprocket engaging hole between them, then the rod body is inserted into the opposing through-holes of the opposing rectangular parallelepiped blocks, and the rod bodies inserted into the through-holes of the rectangular parallelepiped blocks adjacent in the crawler circumference direction are connected by means of the connecting member, whereby the rod bodies may be connected by means of the rectangular parallelepiped blocks and the connecting member.

The rubber crawler of the present invention is not limited to the endless and integral construction, but a rubber crawler unit as the minimum unit, which is constructed by a rubber crawler unit of the minimum unit constructed by the rectangular parallelepiped block and the rod body, may be formed, or a rubber crawler unit as the minimum unit, which is constructed by two of the rectangular parallelepiped blocks and one rod body may be formed, the connecting through-holes may be provided at the end portion of the rubber crawler unit in the crawler circumference direction, and the connecting rod body may be inserted through the through-hole to be connected to connect the rubber crawler units, whereby an endless rubber crawler may be made. In this situation, the connecting insertion holes may be provided in addition to the connecting through-holes.

As the rubber crawler unit, other than the rubber crawler unit as the minimum unit constructed by the rectangular parallelepiped block and the rod body, the rubber crawler unit constructed by two of the rectangular parallelepiped blocks and one rod body, the rubber crawler unit constructed by two of the rectangular parallelepiped blocks and one rod body, and two of the connecting members, and rubber crawler unit constructed by a plurality of the rectangular parallelepiped blocks and a plurality of the rod bodies, or by a plurality of the rectangular parallelepiped blocks, a plurality of the rod bodies and a plurality of the connecting members, with the required length, are formed, and only the same kind of rubber crawler units may be connected to be endless, or rubber crawler units with various constructions are formed, and these rubber crawler units may be properly combined and connected to make an endless form, or both end portions of one rubber crawler unit may be connected to make an endless rubber crawler.

By adopting the above construction, even when part of the rubber crawler is broken, the rubber crawler can be used without purchasing a new rubber crawler by replacing only the broken part, and the cost can be reduced as compared with replacement of the entire rubber crawler, thus reducing waste, and facilitating waste disposal.

Further, a belt body formed at the outer portion of the rectangular parallelepiped block in the crawler width direction may have the structure in which a pipe, connecting ring, or a connecting block is embedded in the rubber part of a main body of the belt body, and may have the construction in which the rod body of the skeleton part of the rubber crawler is fitted into an insertion portion or an insertion hole of the pipe, the connecting ring, or the connecting block which are embedded in the main body of the belt crawler.

By using this construction, attaching and detaching of the belt body is made possible, and when the rubber portion is damaged, only the belt body as the rubber portion can be replaced, and an economical rubber crawler with only the damaged rubber portion being replaced early is made.

In this situation, if the belt body has the construction divided into the belt bodies with an end having the length for fitting in a plurality of rod bodies, from the belt unit corresponding to the length for fitting in two rod bodies, when the rubber portion is damaged, replacement of the rubber portion is facilitated, thus making it possible to freely select the division at one spot or at a plurality of spots, and if the construction, in which only the belt unit corresponding to the length for fitting in two rod bodies are used, is adopted, the divided unit of the belt body becomes small, thus making production possible with a compact molding apparatus, and facilitating production, transportation, and replacement.

If the rubber portion of the belt body is formed by integrating a ground contact lug and a middle lug, even if the rubber portion at the center part of the crawler is damaged, only the belt body may be replaced, and the middle lug can be replaced without replacing the skeleton part at the center part of the rubber crawler.

On the other hand, if the construction in which the end portions in the crawler circumference direction of the belt units or the belt bodies with ends of the above-described divided rubber crawler are faced in contact with each other, a gap is eliminated between the belt units or between the belt bodies with ends, and mud, foreign matters and the like are prevented from coming up to the rubber crawler inner circumference side, thus preventing the risk of occurrence of abnormal tension and derailing, which are causes by a foreign matter being caught between the sprocket and the like and the rubber crawler, preventing the rubber crawler from sinking on a soft land, and also preventing reduction in turnability.

In the case of the construction in which the end portions in the crawler circumference direction, of the belt units or the belt bodies with the end of the divided rubber crawler, are faced in contact with each other, if the circular arc of the end portion is on the circular arc with the rod body center as its center in the sectional view in the rod body lengthwise direction, when the rubber crawler winds around the idler and sprocket, or even when the rubber crawler is deformed to the inner or outer circumference side while traveling on the road surface with irregularities, and the contact position of the end portions are moved, the end portions keep facing in contact with each other, and even in this state, mud, and a foreign matter are prevented from entering the rubber crawler inner circumference side, thus making it possible to prevent the danger of abnormal tension and derailing, which are caused by a foreign mater being caught between the sprocket or the like and the rubber crawler as described above.

When reinforcement layers are buried in the inner and outer circumference of the rod body, a driving force exerted on the rod body from the sprocket is dispersed to the entire body of the rubber crawler via the reinforcement layer to transmit it to the lug efficiently, and a sufficient tractive force can be obtained. At the same time, local stress in the vicinity of the rod body is relieved, and the durability of the rubber crawler is improved.

As the reinforcement layer, vinylon, nylon, Tetron, Kevlar, a steel cord and the like can be selected, the outer circumference side reinforcement layer and the inner circumference side reinforcement layer may be of the same material or different materials, and its form may be a linear form or woven fabric form, but the form is not limited to this.

The reinforcement layer may be provided only in the inner circumference side or the outer circumference side.

The construction, in which the length is such that the end portion of the rod body is not located at an outer side from the outer end portion of the connecting member in the rubber crawler width direction, may be adopted, or the length of the rod body may be made smaller so that the end portion of the rod body is not located at the outer side from the outer end portion of the connecting member in the rubber crawler width direction, or the length of the connecting member in the rubber crawler width direction is made larger so that the end portion of the rod body is not located at the outer side from the outer end portion of the connecting member in the rubber crawler width direction.

In this situation, it is possible to shorten the rod body, and further reduce the material cost, and if the rubber portion of the rubber crawler main body corresponding to this is deleted, it is made possible to reduce the material cost more, the fixtures for fixing the connecting part of the rubber crawler unit and the fixture for fixing the belt body to the rubber crawler skeleton part are located at the inner side from the end portion in the width direction of the rubber crawler, thus preventing the fixtures from colliding against an obstacle on the road surface or a curbstone on a pavement to be damaged.

As the rubber elastic body used for the rubber crawler, natural rubber, or sole compounding of synthetic rubber such as SBR, BR, urethane or the like, or compounding with natural rubber, synthetic rubber, a high polymer resin such as a high styrene resin being blended, can be used, a compounding design is properly made and used according to the conditions of use of the rubber crawler, cost and the like, and the other materials can be used without being limited to them.

### Brief Description of the Drawings

FIG. **1** is a plan view showing an inner circumference side of a rubber crawler of a first embodiment.
FIG. **2** is a plan view showing an outer circumference side of the rubber crawler of the first embodiment.
FIG. **3** is a sectional view taken along the X-X line in FIG. **1**.
FIG. **4** is a sectional view taken along the Y-Y line in FIG. **1**.
FIG. **5A** is a plan view of a block like rectangular parallelepiped block of the first embodiment, **B** is a front view of the rectangular parallelepiped block of the first embodiment, **C** is a rear view of the rectangular parallelepiped block of the first embodiment, and **D** is a side view of the rectangular parallelepiped block of the first embodiment.
FIG. **6A** is a perspective view showing the rectangular parallelepiped block of the first embodiment, and **B** is a perspective view showing a rod body of the first embodiment.
FIG. **7** is a perspective view of the inner circumference side showing combination of the rod bodies and the rectangular parallelepiped blocks being a rubber crawler skeleton part of the first embodiment.
FIG. **8** is a front view of assembly showing an assembled state of the rectangular parallelepiped block and the rod body of the first embodiment.
FIG. **9** is a perspective view showing an outline of an inner circumference side of the rubber crawler of the first embodiment.
FIG. **10A** is a perspective view showing another example 1 of the rod body, and **B** is a perspective view showing another example 2 of the rod body.
FIG. **11A** is a plan view of a rectangular parallelepiped block of a second embodiment, **B** is a front view of the rectangular parallelepiped block of the second embodiment, **C** is a rear view of the rectangular parallelepiped block of the second embodiment, and **D** is a side view of the rectangular parallelepiped block of the second embodiment.
FIG. **12A** is a perspective view showing the rectangular parallelepiped block of the second embodiment, and **B** is a perspective view showing a rod body of the second embodiment.
FIG. **13A** is a plan view of a rectangular parallelepiped block of a third embodiment, **B** is a front view of the rectangular parallelepiped block of the third embodiment, **C** is a rear view of the rectangular parallelepiped block of the third embodiment, and **D** is a side view of the rectangular parallelepiped block of the third embodiment.
FIG. **14A** is a perspective view showing the rectangular parallelepiped block of the third embodiment, and **B** is a perspective view showing the rod body of the third embodiment.
FIG. **15** is a perspective view of the rectangular parallelepiped block of the third embodiment.
FIG. **16** is a plan view showing an inner circumference side of a rubber crawler of a fourth embodiment.
FIG. **17** is a plan view showing an outer circumference side of the rubber crawler of the fourth embodiment.
FIG. **18** is a sectional view taken along the X-X line in FIG. **16**.
FIG. **19** is a sectional view taken along the Y-Y line in FIG. **16**.
FIG. **20** is a plan view showing an inner circumference side of a rubber crawler of a fifth embodiment.
FIG. **21** is a plan view showing an outer circumference side of the rubber crawler of the fifth embodiment.
FIG. **22** is a sectional view taken along the X-X line in FIG. **20**.
FIG. **23A** is a plan view of a rectangular parallelepiped block of a sixth embodiment, **B** is a front view, **C** is a rear view, and **D** is a side view.
FIG. **24** is a perspective view of the rectangular parallelepiped block of the sixth embodiment.
FIG. **25** is a plan view of an inner circumference side showing an assembly state of the rectangular parallelepiped blocks and a rod bodies being a skeleton part of the sixth embodiment.
FIG. **26A** is a plan view of the rectangular parallelepiped block showing another example of the sixth embodiment, **B** is a front view, **C** is a rear view, and **D** is a side view.
FIG. **27A** is a plan view of a rectangular parallelepiped block of a seventh embodiment, **B** is a front view, **C** is a bottom view, **D** is a rear view, **E** is a right side view, and **F** is a left side view.
FIG. **28A** is a front perspective view showing the rectangular parallelepiped block of the seventh embodiment, and **B** is a rear perspective view.
FIG. **29** is a plan view of combination showing an inner circumference side of rod bodies and the rectangular parallelepiped blocks being a skeleton part of the seventh embodiment.
FIG. **30** is a perspective view of combination showing an inner circumference side of the rod bodies and the rectangular parallelepiped blocks being a skeleton part of the seventh embodiment.
FIG. **31** is an explanatory view explaining an engaging state of lateral slip prevention projections of the seventh embodiment.
FIG. **32A** is a plan view of the rectangular parallelepiped block showing another example of the seventh embodiment, **B** is a front view, **C** is a bottom view, **D** is a rear view and **E** is a lateral side view.
FIG. **33** is a plan view showing an inner circumference side of a rubber crawler of an eighth embodiment.
FIG. **34** is a sectional view taken along the X-X line in FIG. **33**.
FIG. **35** is a sectional view taken along the Y-Y line in FIG. **33**.
FIG. **36** is a perspective view of combination of an inner circumference side showing arrangement relationship between reinforcement layers and the rod bodies showing another example 1 of the eighth embodiment.
FIG. **37** is a perspective view of combination of an inner circumference side showing arrangement relationship between the reinforcement layers and the rod bodies showing another example 2 of the eighth embodiment.
FIG. **38** is a plan view showing an inner circumference side of a rubber crawler of a ninth embodiment.
FIG. **39** is a sectional view taken along the X-X line in FIG. **38**.
FIG. **40** is a sectional view taken along the Y-Y line in FIG. **38**.
FIG. **41A** is a side view in the crawler circumference direction, of a connecting ring of the ninth embodiment, **B** is a plan view, and **C** is a side view in the crawler width direction.
FIG. **42A** is a side view in the crawler circumference direction showing another example 1 of the connecting ring of the ninth embodiment.
FIG. **43A** is a side view in the crawler circumference direction showing another example 2 of the connecting ring of the ninth embodiment, **B** is a plan view, and **C** is a side view in the crawler width direction.
FIG. **44A** is a side view in the crawler circumference direction showing another example 3 of the connecting ring of the ninth embodiment, **B** is a plan view, and **C** is a side view in the crawler width direction.
FIG. **45** is a sectional view showing another example 1 of the rubber crawler of the ninth embodiment.
FIG. **46** is a sectional view showing another example 2 of the rubber crawler of the ninth embodiment.
FIG. **47** is a sectional view showing another example 3 of the rubber crawler of the ninth embodiment.
FIG. **48A** is a side view in the crawler circumference direction showing another example 4 of the connecting ring of the ninth embodiment, **B** is a plan view, and **C** is a side view in the crawler width direction.
FIG. **49** is a perspective view in the inner circumference side showing combination of the rod bodies, the rectangular parallelepiped blocks and the connecting rings of the other example 4 of the rubber crawler of the ninth embodiment.
FIG. **50** is a sectional view in a rubber crawler width direction of a tenth embodiment.
FIG. **51** is a side view (partial side view) in a rubber crawler circumference direction of the tenth embodiment.
FIG. **52** is a plan view showing an inner circumference side of a rubber crawler of an eleventh embodiment.
FIG. **53** is a sectional view taken along the X-X line in FIG. **52**.
FIG. **54A** is a plan view showing a connecting block of the eleventh embodiment, **B** is a front view, and **C** is a side view.
FIG. **55** is a perspective view of combination in the inner circumference side showing rod bodies, rectangular parallelepiped blocks and connecting blocks being a skeleton part of the eleventh embodiment.
FIG. **56A** is a plan view showing an outer circumference side of a rubber crawler unit of a twelfth embodiment, **B** is a plan view showing the inner circumference side, **C** is a left side view and **D** is a right side view.
FIG. **57** is a perspective view showing the outer circumference side of the rubber crawler unit of the twelfth embodiment.
FIG. **58** is a perspective view showing the inner circumference side of the rubber crawler unit of the twelfth embodiment.
FIG. **59** is a perspective view of assembly in the inner circumference side showing a combination state of the rod bodies and the rectangular parallelepiped blocks and connecting rings being a skeleton part provided in the rubber crawler unit of the twelfth embodiment.
FIG. **60** is an explanatory view about the connection of the adjacent rubber crawler units of the twelfth embodiment, **A** is a plan view of the outer circumference side showing a state before the connection, and **B** is a plan view of the outer circumference side showing a state after the connection.
FIG. **61** is a plan view showing an outer circumference side of a rubber crawler unit of a thirteenth embodiment.
FIG. **62** is a plan view showing the outer circumference side of a rubber crawler formed to be endless by connecting the rubber crawler units of the thirteenth embodiment.
FIG. **63** is a plan view showing an outer circumference side of a rubber crawler unit of a fourteenth embodiment.
FIG. **64** is a plan view showing the outer circumference side of a rubber crawler formed to be endless by connecting the rubber crawler units of the fourteenth embodiment.
FIG. **65A** is a plan view of the outer circumference side of the connected combination of the rubber crawler unit of the twelfth embodiment, **B** is a plan view of the outer circumference side of the connected combination of the rubber crawler unit of the fourteenth embodiment, and **C** is a plan view of the outer circumference side of the connected combination of the rubber crawler unit of the twelfth embodiment and the rubber crawler unit of the fourteenth embodiment.
FIG. **66** is a plan view showing an outer circumference side of a long rubber crawler unit.
FIG. **67** is a plan view showing an inner circumference side of a rubber crawler of a fifteenth embodiment.
FIG. **68** is a sectional view taken along the X-X line in FIG. **67**.
FIG. **69** is a sectional view taken along the Y-Y line in FIG. **67**.
FIG. **70** is a partially enlarged view of FIG. **68**.
FIG. **71** is a partially enlarged view of FIG. **69**.
FIG. **72** is a plan view showing an inner circumference side of a rubber crawler of a sixteenth embodiment.
FIG. **73** is a sectional view taken along the X-X line in FIG. **72**.
FIG. **74** is a sectional view taken along the Y-Y line in FIG. **72**.
FIG. **75** is a perspective view of the inner side showing the rubber crawler of the sixteenth embodiment.
FIG. **76** is a perspective view of the inner circumference side showing another example of the rubber crawler of the sixteenth embodiment.
FIG. **77** is a plan view showing an inner circumference side of a rubber crawler of a seventeenth embodiment.
FIG. **78** is a sectional view taken along the X-X line in FIG. **77**.
FIG. **79** is a perspective view of the inner circumference side showing the rubber crawler of the seventeenth embodiment.
FIG. **80** is a perspective view of the inner circumference side showing another example of the rubber crawler of the seventeenth embodiment.
FIG. **81** is a plan view showing an outer circumference side of a rubber crawler of an eighteenth embodiment.
FIG. **82** is a plan view showing an inner circumference side of the rubber crawler of the eighteenth embodiment.
FIG. **83** is a side view showing the rubber crawler of the eighteenth embodiment.
FIG. **84** is a sectional view taken along the X-X line in FIG. **81**.
FIG. **85** is a plan view of the outer circumference side showing a belt unit of the rubber crawler of the eighteenth embodiment.
FIG. **86** is a plan view of the inner circumference side showing the belt unit of the rubber crawler of the eighteenth embodiment.
FIG. **87** is a side view showing the belt unit of the rubber crawler of the eighteenth embodiment.
FIG. **88** is a front view showing the belt unit of the rubber crawler of the eighteenth embodiment.
FIGS. **89A** and **B** are perspective views each showing a connecting block embedded in the belt unit of the eighteenth embodiment.
FIG. **90** is a perspective view showing a connecting block of another example of the connecting block embedded in the belt unit of the eighteenth embodiment.
FIG. **91** is a perspective view of the inner circumference side explaining combination of the rod bodies and the rectangular parallelepiped blocks and the connecting block being a skeleton part of the eighteenth embodiment.
FIG. **92** is a plan view of the outer circumference side explaining attachment and detachment of the belt unit of the eighteenth embodiment.
FIG. **93** is a sectional view showing another method of fixing the belt unit to the rod body.
FIG. **94** is a sectional view in a crawler width direction showing a rubber crawler of a nineteenth embodiment.
FIG. **95** is a perspective view of an inner circumference side explaining combination of rod bodies and rectangular parallelepiped blocks and connecting rings being a skeleton part of the nineteenth embodiment.
FIG. **96** is a sectional view in the crawler width direction showing another example of the nineteenth embodiment.
FIG. **97** is a plan view of the inner side showing a rubber crawler of a twentieth embodiment.
FIG. **98** is a sectional view taken along the X-X line in FIG. **97**.
FIG. **99** is a perspective view of an inner circumference side explaining combination of rod bodies and rectangular parallelepiped blocks, and connecting rings being a skeleton part of the twentieth embodiment.
FIGS. **100A** and **B** are perspective views each showing the connecting ring embedded in the rubber crawler of the twentieth embodiment.
FIGS. **101A** and **B** are perspective views each showing the rectangular parallelepiped block embedded in the rubber crawler of the twentieth embodiment.
FIG. **102** is a sectional view showing a rubber crawler of a twenty-first embodiment.
FIG. **103** is a perspective view of an inner circumference side explaining combination of rod bodies, rectangular parallelepiped blocks, and connecting rings being a skeleton part of the rubber crawler of the twenty-first embodiment.
FIG. **104** is a perspective view showing the connecting ring embedded in the rubber crawler of the twenty-first embodiment.
FIG. **105** is a perspective view showing another example of the connecting ring embedded in the rubber crawler of the twenty-first embodiment.
FIG. **106A** is a plan view of an outer circumference side showing a rubber crawler unit of a twenty-second embodiment, and **B** is a front view.
FIG. **107A** is a plan view of an inner circumference side showing the rubber crawler unit of the twenty-second embodiment, and **B** and **C** are side views.
FIG. **108A** is a plan view of the inner circumference side explaining combination of rod bodies, rectangular parallelepiped blocks, and connecting rings being a skeleton part provided in the rubber crawler unit of the twenty-second embodiment, and **B** is a front view.
FIG. **109** is a perspective view of the inner circumference side explaining combination of the rod bodies, the rectangular parallelepiped blocks and the connecting rings being a skeleton part provided in the rubber crawler unit of the twenty-second embodiment.
FIG. **110** is a perspective view of the outer circumference side showing the rubber crawler unit of the twenty-second embodiment.
FIG. **111** is a perspective view of the inner circumference side showing the rubber crawler unit of the twenty-second embodiment.
FIG. **112** is a plan view showing an inner circumference side of a rubber crawler of a twenty-third embodiment.
FIG. **113** is a sectional view taken along the X-X line in FIG. **112**.
FIG. **114** is a perspective view of the inner circumference side showing the rubber crawler of the twenty-third embodiment.
FIG. **115** is a perspective view showing a rectangular parallelepiped block provided in the rubber crawler of the twenty-third embodiment.
FIG. **116** is a perspective view of an inner circumference side showing a rubber crawler of a twenty-fourth embodiment.
FIG. **117** is a perspective view of the inner circumference side showing another example of the rubber crawler of the twenty-fourth embodiment.
FIG. **118A** is a plan view showing an outer circumference side of a rubber crawler of a twenty-fifth embodiment, and **B** is a plan view showing an inner circumference side.
FIG. **119** is a perspective view of the inner circumference side explaining combination of rod bodies, rectangular parallelepiped blocks, and connecting rings being a skeleton part provided in a rubber crawler unit of the twenty-fifth embodiment.
FIG. **120** is a plan view of an inner circumference side of a rubber crawler of a twenty-sixth embodiment.
FIG. **121** is a sectional view taken along the X-X line in FIG. **120**.
FIG. **122** is a side view showing the rubber crawler of the twenty-sixth embodiment.
FIG. **123** is a perspective view of the inner circumference side showing the rubber crawler of the twenty-sixth embodiment.
FIG. **124** is a plan view of the inner circumference side showing a rubber crawler of a twenty-seventh embodiment.
FIG. **125** is a sectional view taken along the X-X line in FIG. **124**.
FIG. **126** is a side view showing the rubber crawler of the twenty-seventh embodiment.
FIG. **127** is a perspective view of the inner circumference side of combination of rod bodies, rectangular parallelepiped blocks and connecting rings being a skeleton part provided in the rubber crawler of the twenty-seventh embodiment.
FIGS. **128A** and **B** are perspective views each showing another example of the rectangular parallelepiped block of the skeleton part provided in the rubber crawler of the twenty-seventh embodiment.
FIG. **129** is a perspective view of an inner circumference side of combination of the rod bodies, the rectangular parallelepiped blocks and the connecting rings being the skeleton part using the rectangular parallelepiped blocks shown in FIG. **128**.
FIG. **130A** is a plan view showing an outer circumference side of a rubber crawler unit of a twenty-eighth embodiment, and **B** is a plan view showing an inner circumference side.
FIG. **131** is a plan view of an inner circumference side showing a rubber crawler of a twenty-ninth embodiment.
FIG. **132** is a plan view of an outer circumference side showing the rubber crawler of the twenty-ninth embodiment.
FIG. **133** is a sectional view taken along the X-X line in FIG. **131**.
FIG. **134** is a side view showing the rubber crawler of the twenty-ninth embodiment.
FIG. **135** is a perspective view of the inner circumference side showing a connecting block used in the twenty-ninth embodiment.
FIG. **136** is a plan view of the outer circumference side showing another example 1 of the rubber crawler of the twenty-ninth embodiment.
FIG. **137** is a plan view of the outer circumference side showing another example 2 of the twenty-ninth embodiment.
FIG. **138** is a plan view of the outer circumference side showing another example 3 of the twenty-ninth embodiment.
FIG. **139** is a plan view of an inner circumference side showing a rubber crawler of a thirtieth embodiment.
FIG. **140** is a sectional view taken along the X-X line in FIG. **139**.
FIG. **141** is a side view showing the rubber crawler of the thirtieth embodiment.
FIG. **142A** is a sectional view of a rubber pad of the thirtieth embodiment, and **B** is a plan view of an inner circumference side of the rubber pad of the thirtieth embodiment.
FIG. **143** is a plan view of an inner circumference side showing a rubber crawler of a thirty-first embodiment.
FIG. **144** is a sectional view taken along the X-X line in FIG. **143**.
FIG. **145** is a side view showing the rubber crawler of the thirty-first embodiment.
FIG. **146** is a sectional view of a rubber crawler showing another example 1 of the rubber crawler of the thirty-first embodiment.
FIG. **147** is a sectional view of a rubber crawler showing another example 2 of the rubber crawler of the thirty-first embodiment.
FIG. **148** is a sectional view showing a rubber crawler of a thirty-second embodiment.
FIG. **149** is a perspective view showing a connecting block of a thirty-third embodiment.
FIG. **150** is a perspective view of an inner circumference side explaining combination of a core metal being a skeleton part of a rubber crawler of the thirty-third embodiment.
FIG. **151A** is a perspective view of a connecting block used for connecting an end portion of a rubber crawler unit of a thirty-fourth embodiment, and **B** is a perspective view of the connecting block used for connecting the end portion of the rubber crawler unit of the thirty-fourth embodiment.
FIG. **152** is a perspective vies of an inner side explaining combination of a metal core as a skeleton part of a rubber crawler of the thirty-fourth embodiment.
FIG. **153** is a perspective view showing a rectangular parallelepiped block (the rectangular parallelepiped block in which a wing portion is formed at the rectangular parallelepiped block and a rod body is integrally formed) of a thirty-fifth embodiment.
FIG. **154** is a perspective view of an inner circumference side explaining combination of a core metal being a skeleton part embedded in a rubber crawler, and reinforcement layers of the thirty-fifth embodiment.
FIGS. **155A** and **B** are perspective views each of a rectangular parallelepiped block (the rectangular parallelepiped block in which a wing portion is formed at the rectangular parallelepiped block and a rod body is integrally formed) of a thirty-sixth embodiment.
FIG. **156** is a perspective view of an inner circumference side explaining combination of a core metal being a skeleton part of a rubber crawler of the thirty-sixth embodiment.
FIG. **157** is a perspective view of a rectangular parallelepiped block (the rectangular parallelepiped block in which a pair of rectangular parallelepiped blocks are integrally formed via a bush) of a thirty-seventh embodiment.
FIG. **158A** is a sectional view showing another example 1 about a fixing method of connecting part of a rubber crawler unit and a belt body, and **B** is a sectional view showing another example 2 about the fixing method of the connecting part of the rubber crawler unit and the belt body.
FIG. **159A** is a sectional view showing another example 3 about the fixing method of the connecting part of the rubber crawler unit and the belt body, **B** is an enlarged explanatory view of the fixing region, and **C** is a plan view showing an E-shaped retainer ring.
FIG. **160A** is a sectional view showing a rubber crawler of a thirty-eighth embodiment, and **B** is a side view.
FIG. **161A** is a sectional view showing another example 1 of the rubber crawler of the thirty-eighth embodiment, and **B** is a side view.
FIG. **162A** is a sectional view showing another example 2 of the rubber crawler of the thirty-eighth embodiment, and **B** and **C** are side views.
FIG. **163** is a sectional view showing a rubber crawler of a thirty-ninth embodiment.
FIG. **164** is a sectional view showing another example 1 of the rubber crawler of the thirty-ninth embodiment.
FIG. **165** is a sectional view showing a rubber crawler of a fortieth embodiment.
FIG. **166** is a plan view showing an example of a conventional rubber crawler.
FIG. **167** is a sectional view taken along the X-X line in FIG. **166**.
FIG. **168** is a sectional view taken along the Y-Y line in FIG. **166**.

### Best Mode for Carrying out the Invention

Embodiments of the present invention will be explained in detail below with use of the drawings.

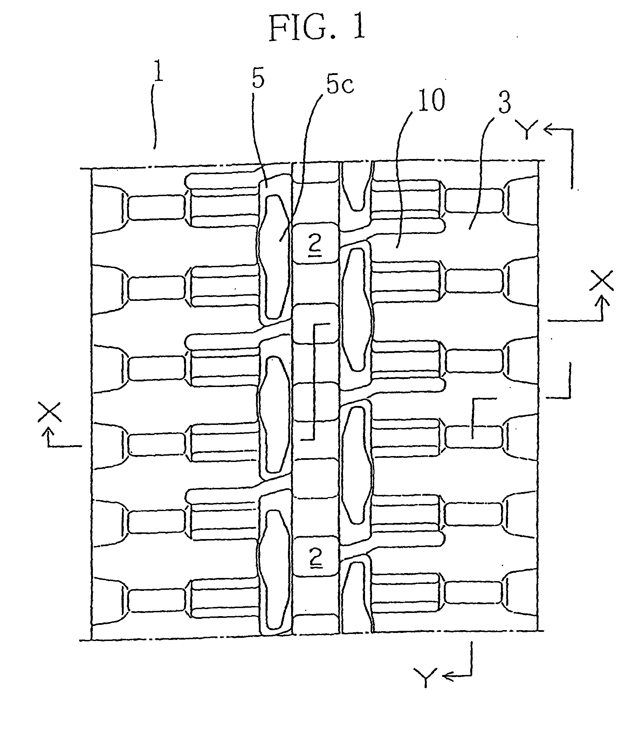

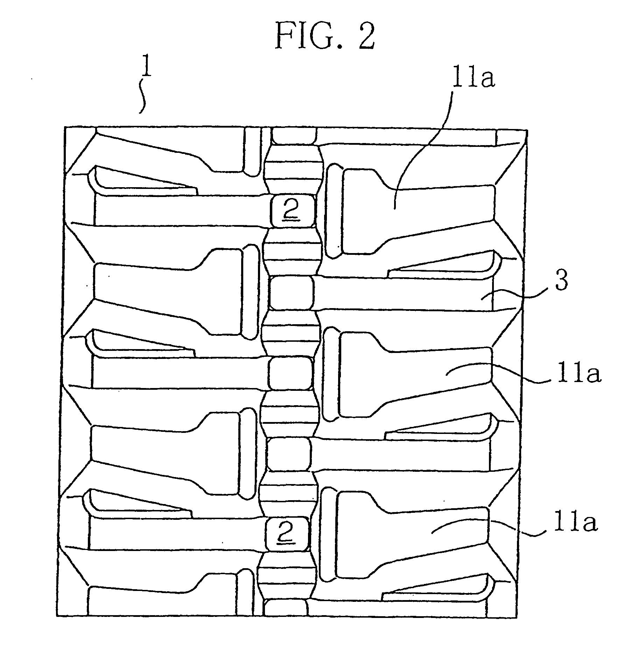

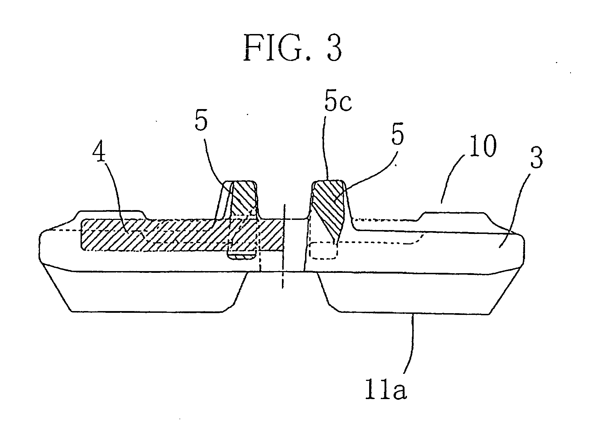

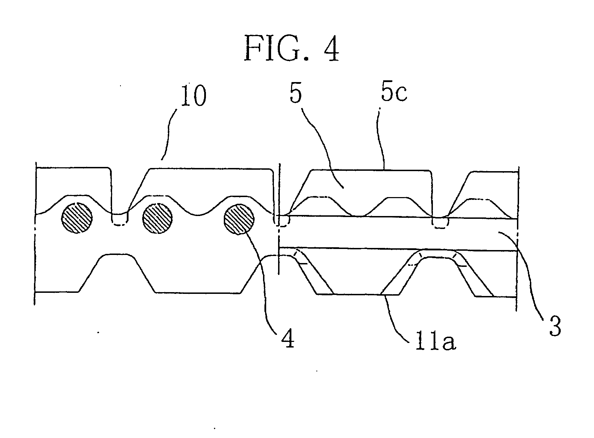

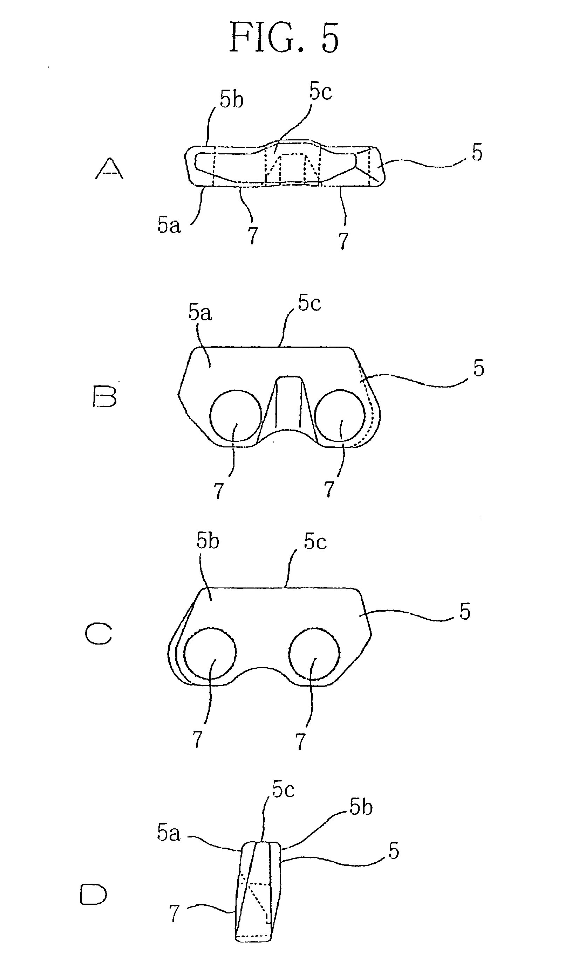

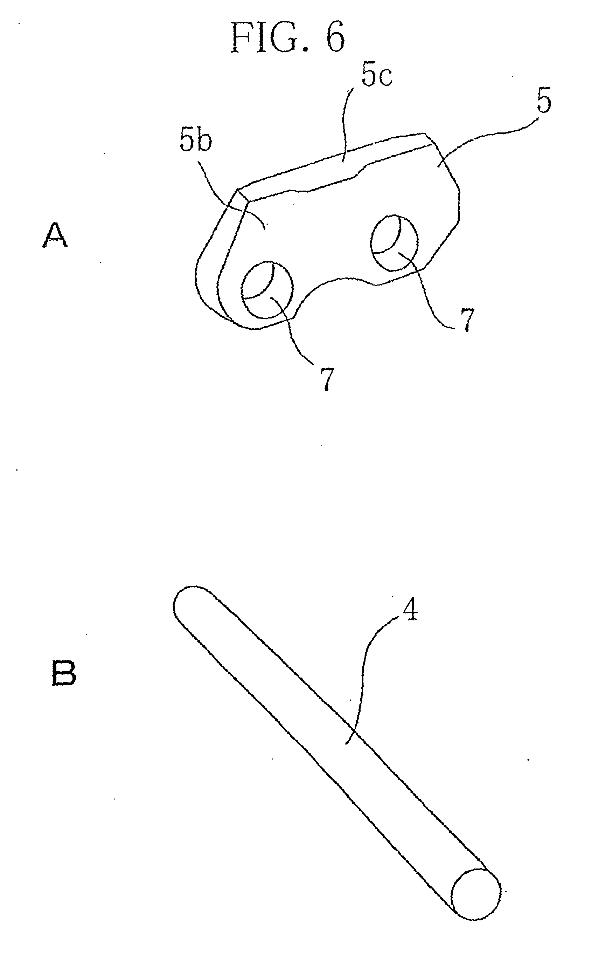

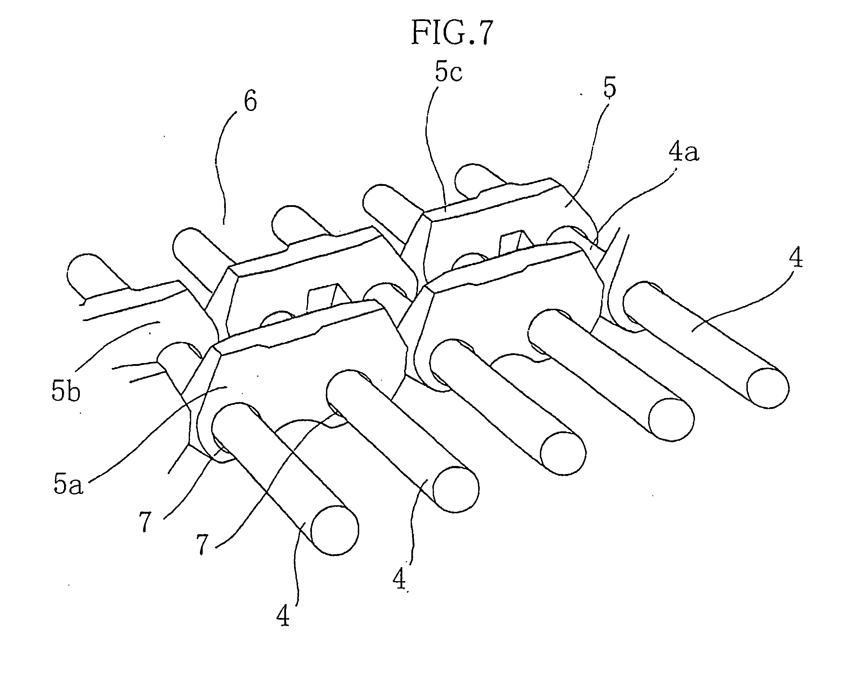

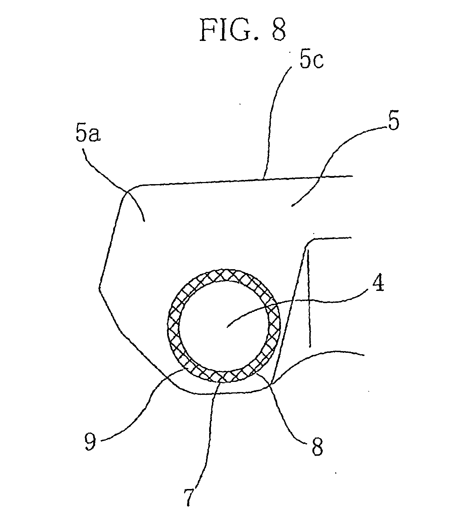

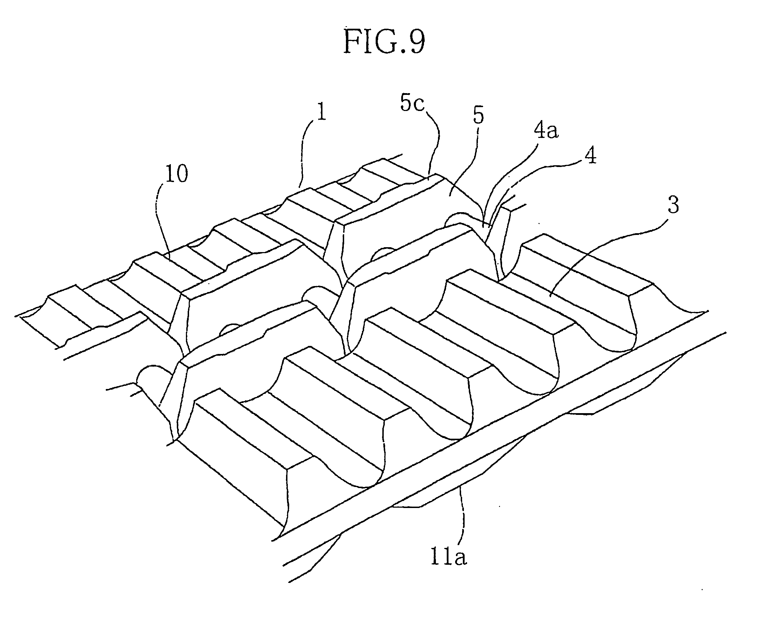

FIG. **1** is a plan view showing an inner circumference side (non-ground contact surface side) of a rubber crawler of a first embodiment of the present invention, FIG. **2** is a plan view showing an outer circumference side (ground contact surface side) of the rubber crawler, FIG. **3** is a sectional view taken along the X-X line in FIG. **1**, FIG. **4** is a sectional view taken along the Y-Y line in FIG. **1**, FIGS. **5A** to **D** show a block **5** like rectangular parallelepiped provided in a rubber crawler main body **3**, **A** is a plan view, **B** is a front view, **C** is a rear view, **D** is a side view, FIGS. **6A** and **B** are perspective views each showing the rectangular parallelepiped block **5** and a rod body **4** that are provided in the rubber crawler main body **3**, FIG. **7** is a view of combination of the rod bodies **4** and the rectangular parallelepiped blocks **5**, FIG. **8** is a plan view of combination showing a combination (fitting) state of the rectangular parallelepiped block **5** and the rod body **4**, and FIG. **9** is a schematic perspective view of the inner circumference side of the rubber crawler.

In a rubber crawler **1** of the first embodiment, a rubber crawler skeleton part **6**, which is made an endless form with the rod bodies **4** being connected by the rectangular parallelepiped blocks **5**, is embedded in the endless rubber crawler main body **3** with engaging holes **2** being provided in a center.

The rod body **4** is a rod material with a circular sectional shape, which is embedded in a rubber crawler main body **3** with being inserted through a through-hole **7** provided in the rectangular parallelepiped block **5**, and a center part **4a** of the rod body **4** is engaged with a sprocket (not shown). Two of the through-holes **7** and **7** penetrating through a rear surface **5b** are provided in a front surface **5a** of the rectangular parallelepiped block **5** with a space left in a lengthwise direction of the bottom surface portion, with the adjacent rod bodies **4** and **4** being inserted therethrough, the rectangular parallelepiped blocks **5** are placed at both sides of the engaging holes **2** in succession in a zigzag fashion and with the rod bodies **4** being connected, they are provided in the rubber crawler main body **3**. An inner diameter of the through-hole **7** of the rectangular parallelepiped block **5** is made larger than an outer diameter of the rod body **4**, rubber **9** is filled in a gap **8** between the through-hole **7** and the rod body **4**, and the rubber **9** is bonded to the rectangular parallelepiped block **5**.

An upper surface portion of the rectangular parallelepiped block **5** is protruded to the rubber crawler inner circumference side **10** (non-ground contact side), a top surface of a protruded portion is formed into a flat surface, it becomes a rolling contact surface **5c** on which a track roller of the traveling equipment included in a machine body, rolls, and the protruded portion becomes a slip-off prevention guide for the track rollers and the idler wheel. In this situation, the top surface **5c** of the protruded portion is without rubber being attached or coated with rubber as thin as a flash. The rod body **4** and the rectangular parallelepiped block **5** are bonded to the rubber of the rubber crawler main body **3**.

In the rubber crawler with the aforementioned construction, the rod bodies **4** and **4** adjacent to each other longitudinally in a crawler circumference direction are successively inserted through the through-holes **7** and **7** of the rectangular parallelepiped block **5** placed at both sides of the engaging holes **2** in a zigzag fashion to be connected, the rectangular parallelepiped blocks **5** support the respective rod bodies **4**, the individual rod bodies **4** do not vibrate, thus decreasing vibration and twist, and therefore detaching of the crawler can be decreased. In addition, since the rectangular parallelepiped block **5** and the rod body **4** are connected via the rubber **9** as an elastic material, the rubber crawler has flexibility in some degree, thus making it difficult for abnormal tension to occur, and as long as the rod body **4** and the rectangular parallelepiped block **5** do not break, the rubber crawler is not broken. Reference numeral **11a** in the drawings denotes a ground contact lug.

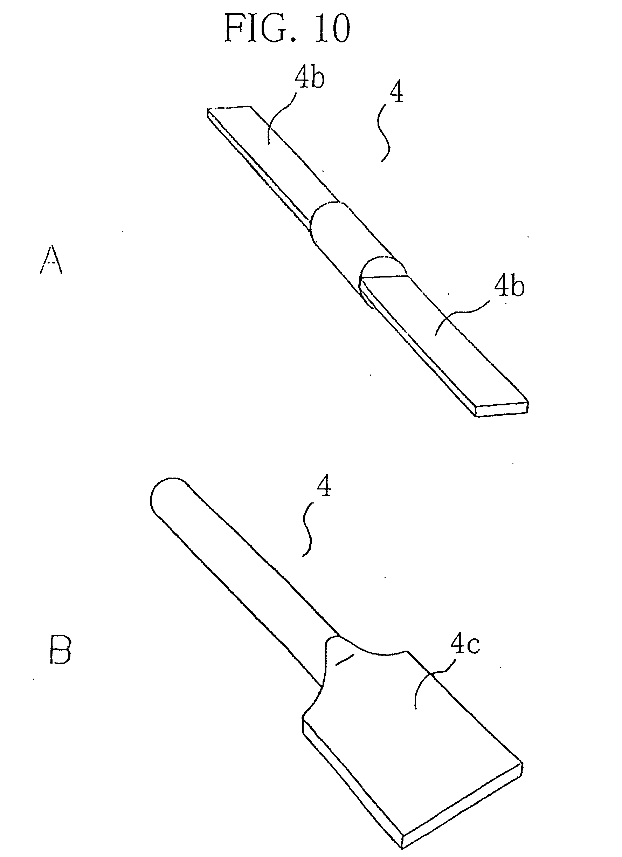

FIGS. **10A** to **B** are examples showing another mode of the rod body **4**, the rod body **4** in FIG. **10A** is formed into a planar portion **4b** in a flat plate form with fixed thickness in an area other than a region fitted in the rectangular parallelepiped blocks **5** and a central engaging part, and in the rod body **4** in FIG. **10B**, one side end portion out of both end portions in a longitudinal direction of the rod body is formed into a scoop part **4c** which is formed into a scoop shape having larger width than a diameter of the central part.

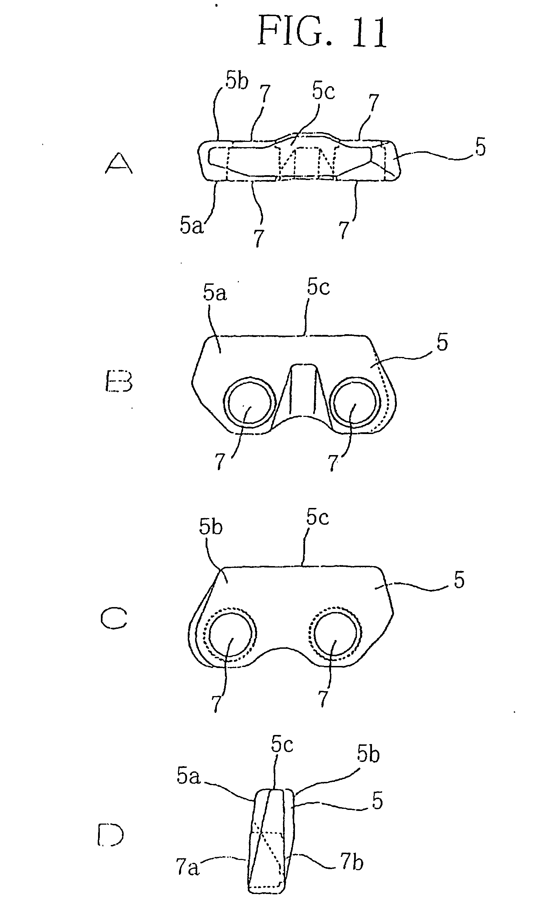

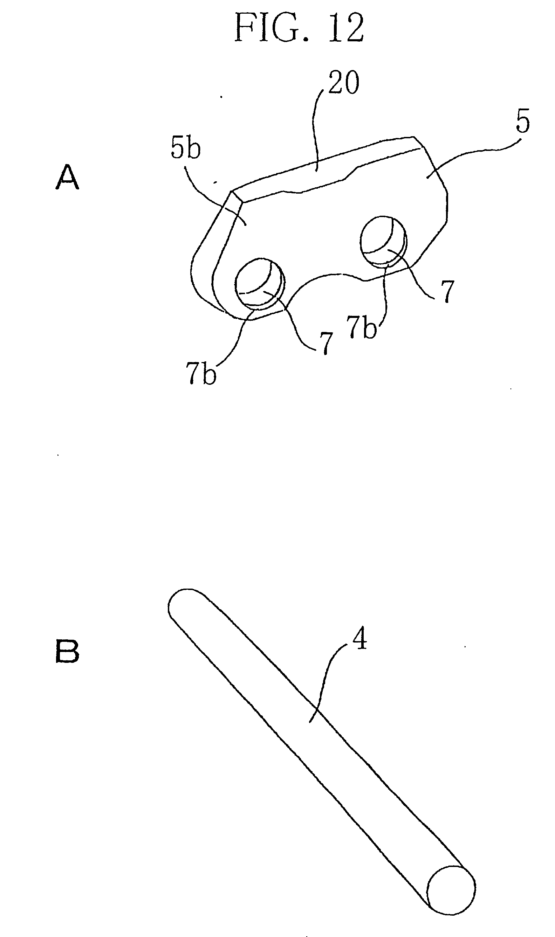

A second embodiment of the present invention is shown in FIGS. **11A** to **D**, FIGS. **12A** to **B**. FIGS. **11A** to **D** show the rectangular parallelepiped block **5, A** is a plan view, **B** is a front view, **C** is a rear view, and **D** is a side view. FIGS. **12A** and **B** are perspective views each showing the rectangular parallelepiped block **5** and the rod body **4**.

In the second embodiment, the gap **8** between a through-hole **7b** of the rear surface (the outside in the direction of the rubber crawler width) **5b** of the rectangular parallelepiped block **5** and the rod body **4** is made small in the construction of the first embodiment to prevent the rod body **4** from swinging more than a fixed amount in the through-hole **7**. According to the construction of the present embodiment, it is made easy to locate the rod body **4** in the center of the through-hole **7**, the thickness of the rubber **9** filled in the gap **8** is made substantially uniform on a circumference of the rod body **4**, fatigue of the rubber **9** due to a twist of the rod body **4** and the rectangular parallelepiped block **5** becomes uniform, and thus a partial early breakage can be prevented.

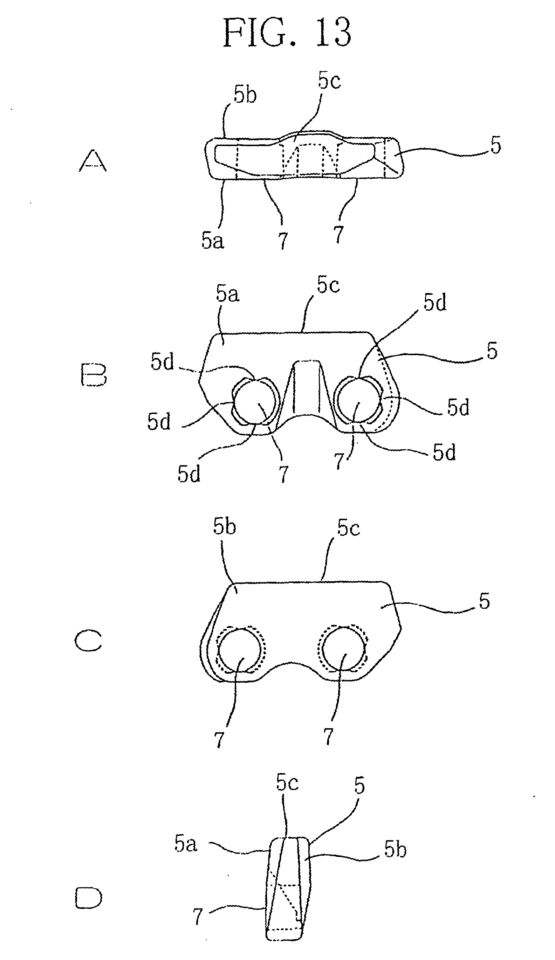

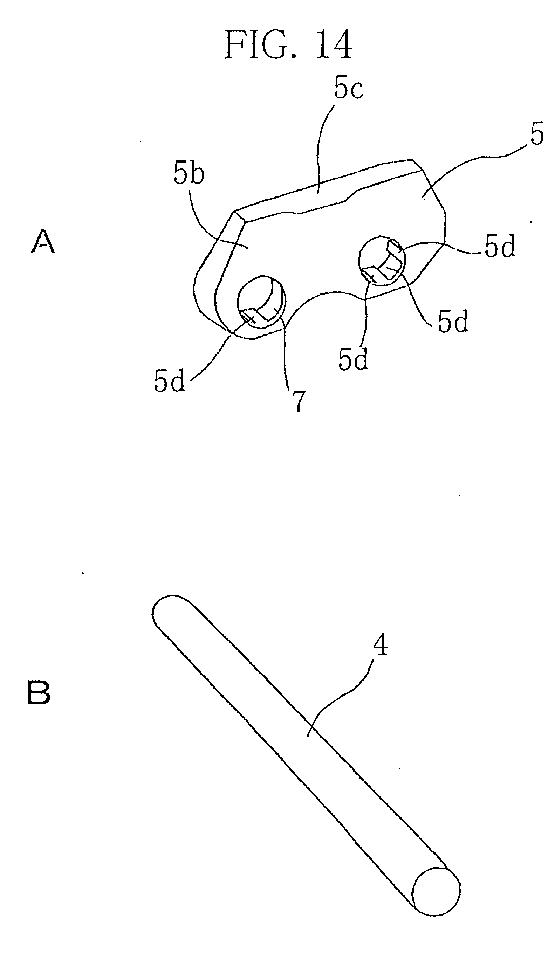

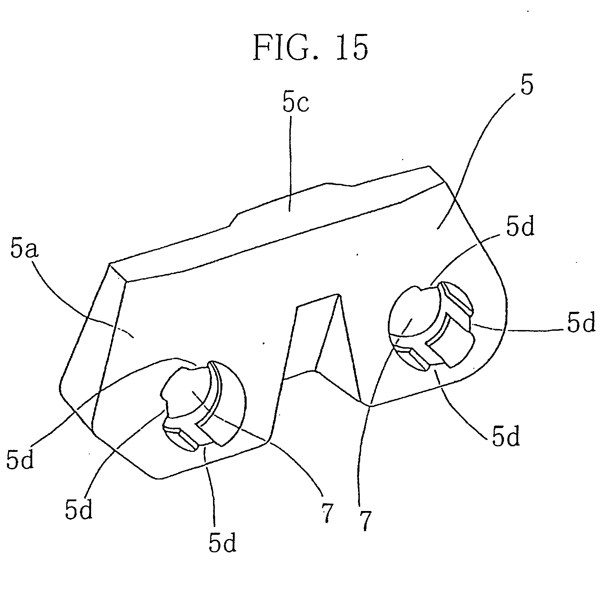

A third embodiment of the present invention will be explained with use of FIGS. **13A** to **D**, FIGS. **14A** and **B**, and FIG. **15**. The third embodiment is characterized in that stabilizer projections **5d, 5d** and **5d** for the rod body **4** are provided in the through-hole **7** of the front surface (engaging hole side) **5a** of the rectangular parallelepiped block **5** in the construction of the second embodiment. The total of three rod body stabilizer projections **5d** are provided at the positions of the through-hole **7**, which are at the outer side of the rectangular parallelepiped block **5** out of upper and lower and left and right positions, and the rod body **4** is prevented from swinging more than a constant amount in the vertical direction (the inner and outer circumference direction of the rubber crawler) and an extension direction in the crawler circumference direction. According to the construction of this embodiment, the rod body **4** does not swing in the vertical and extension directions more than necessary, thus making the rubber crawler resistant to being detached with less vibrations.

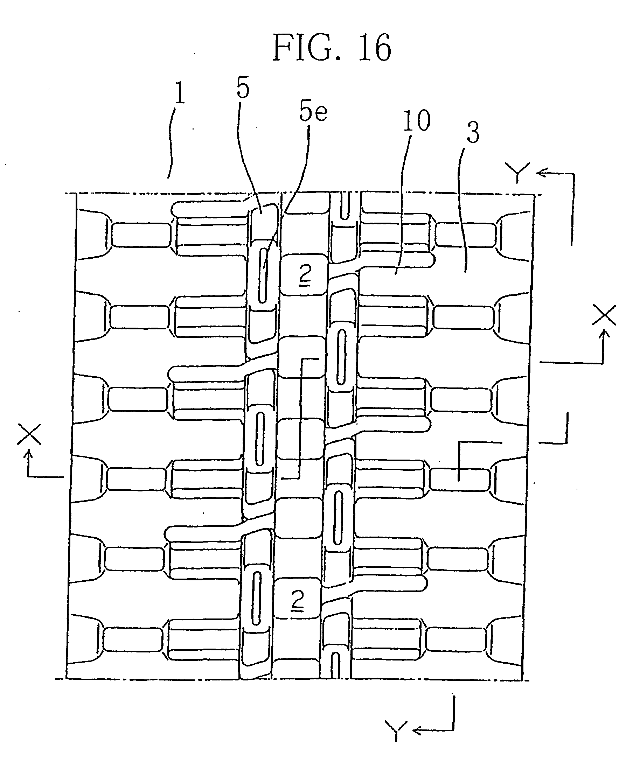

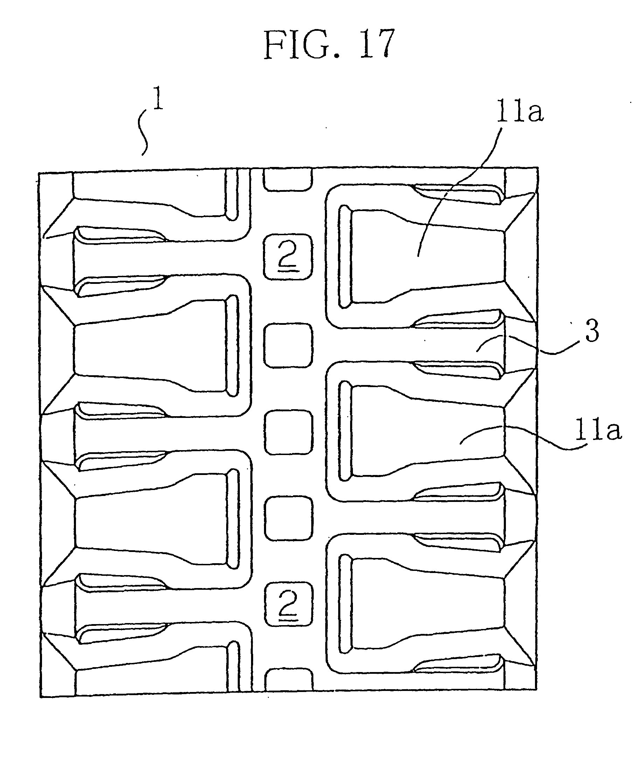

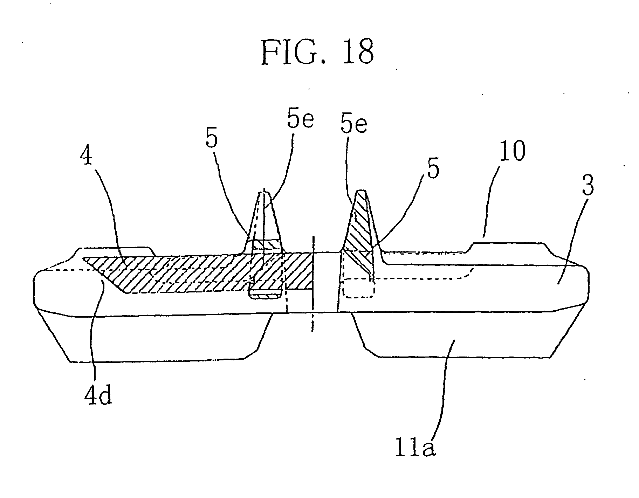

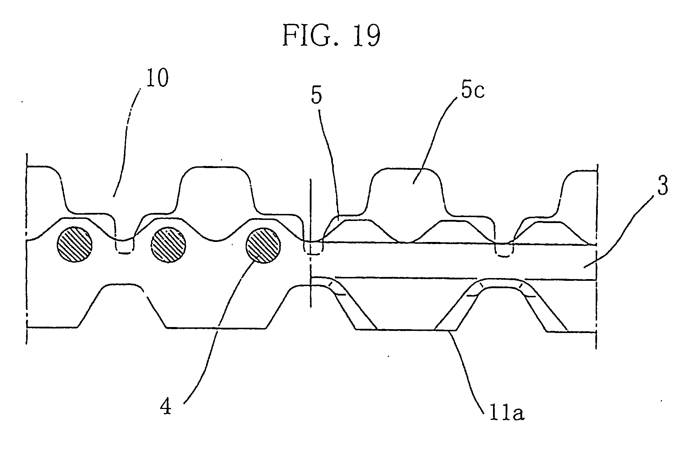

FIG. **16** to FIG. **19** show a fourth embodiment of the present invention. FIG. **16** is a plan view showing the inner circumference side **10** of the rubber crawler, FIG. **17** is a plan view showing an outer circumference side of the rubber crawler, FIG. **18** is a sectional view taken along the X-X line in FIG. **16**, and FIG. **19** is a sectional view taken along the Y-Y line in FIG. **16**.

In the fourth embodiment, the protruded portion of the rectangular parallelepiped block **5** on the rubber crawler inner circumference side **10** (non-ground contact side) is made a rectangular projection **5e**, and the rectangular projection **5e** becomes a slipping-off prevention guide for the track rollers and the idler wheel.

Further, in the fourth embodiment, both end portions in the lengthwise direction of the rod body **4** is made an inclined plane **4d** toward the ground contact surface side. Thereby, breakage (edge tearing) of the both end portions in the width direction of the rubber crawler, which is caused by the rubber crawler riding on a curbstone and the like on a road surface is prevented, and durability of the both end portions in the width direction of the rubber crawler is improved.

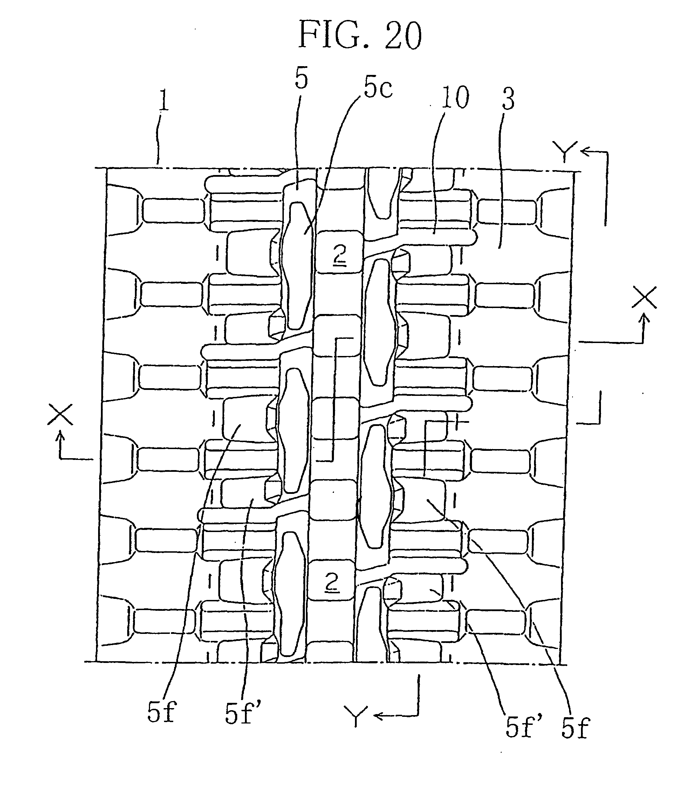

FIG. **20** to FIG. **22** show a fifth embodiment of the present invention. The fifth embodiment is characterized in that wing portions **5f** and **5f'** are provided at the rear surface **5b** of the rectangular parallelepiped block **5**, namely at the outer side in the width direction of the rubber crawler in the state in which it is embedded in the rubber crawler main body **3** in the construction of the first embodiment.

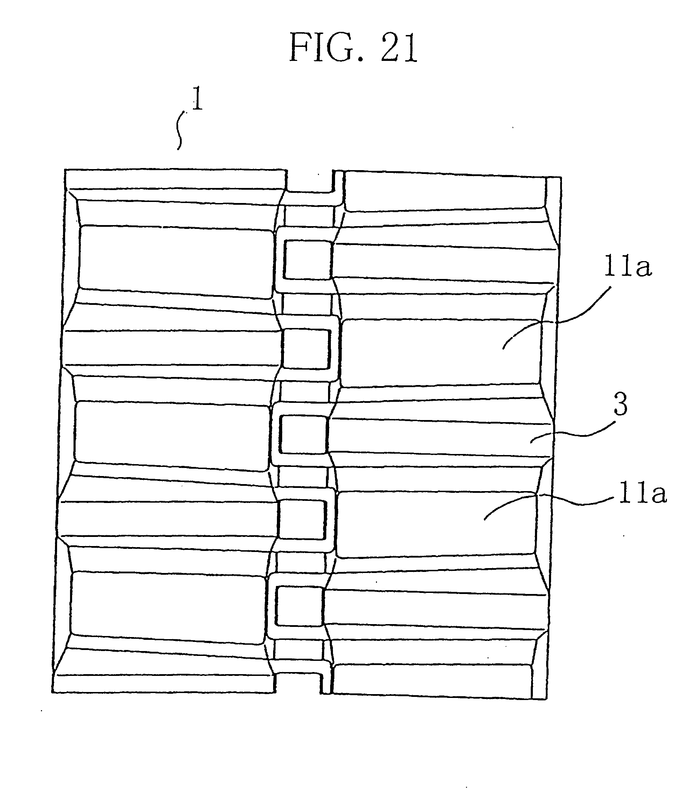

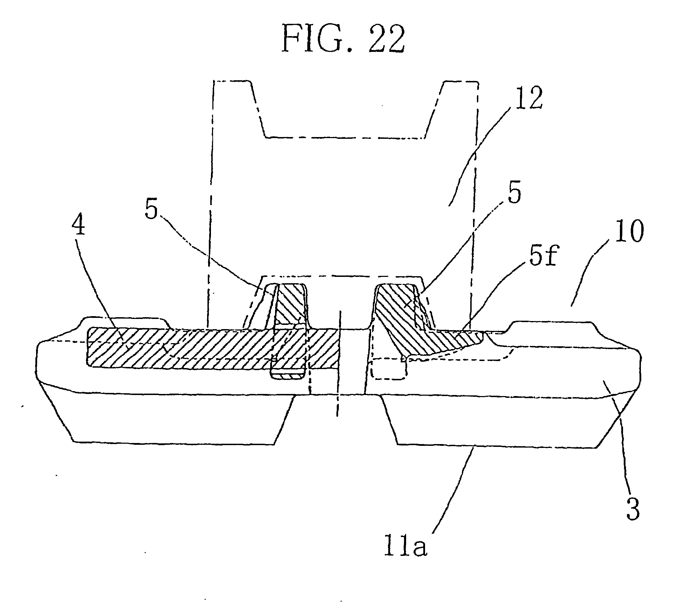

FIG. **20** is a plan view showing the inner circumference side **10** (non-ground contact surface side) of the rubber crawler of this embodiment, FIG. **21** is a plan view showing the ground contact surface side of the rubber crawler, and FIG. **22** is a sectional view taken along the X-X line in FIG. **20**.

The rectangular parallelepiped block **5** of this embodiment is provided with the wing portions **5f** and **5f'** at the rear surface **5b** (the outer side in the width direction of the rubber crawler), and is connected with the rod bodies **4** and **4** adjacent to each other longitudinally in the crawler circumference direction to be provided in the rubber crawler main body **3**, and the wing portions **5f** and **5f'** are respectively located between the adjacent rod bodies **4** and **4**, whereby when the outer track roller **12** rolls to travel, the outer track roller **12** is prevented from falling in between the rod bodies **4** and **4** to make smooth travelling possible.

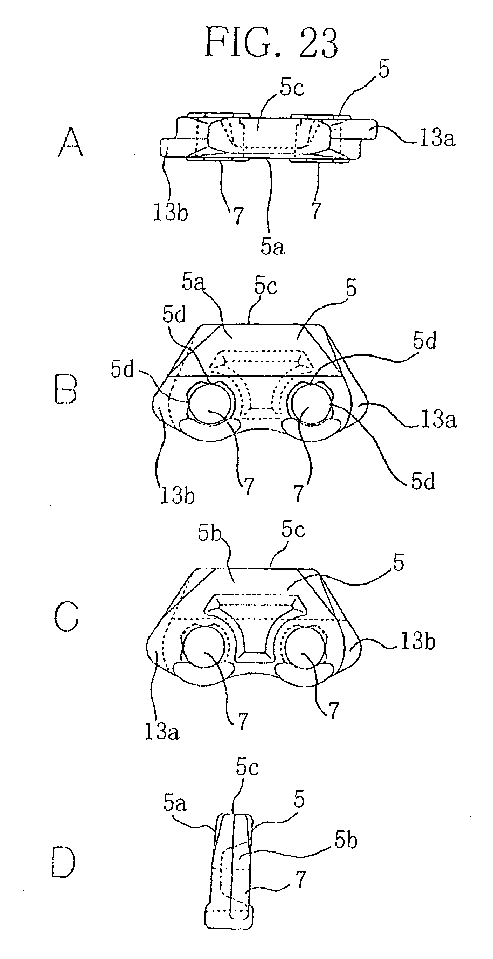

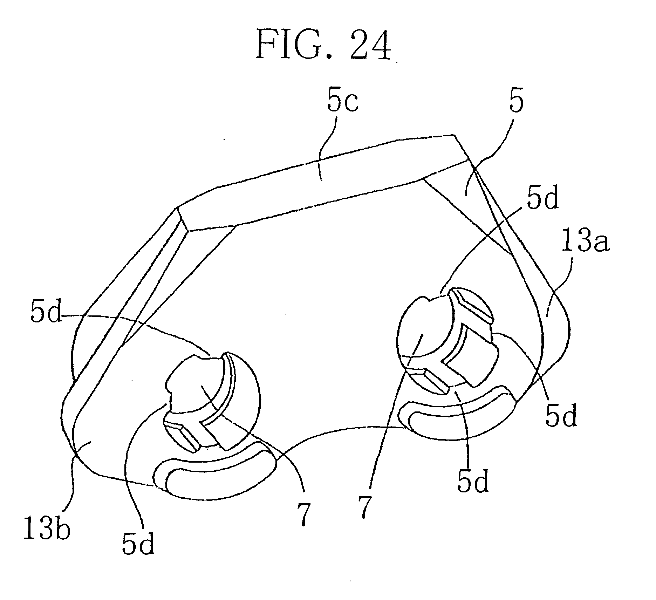

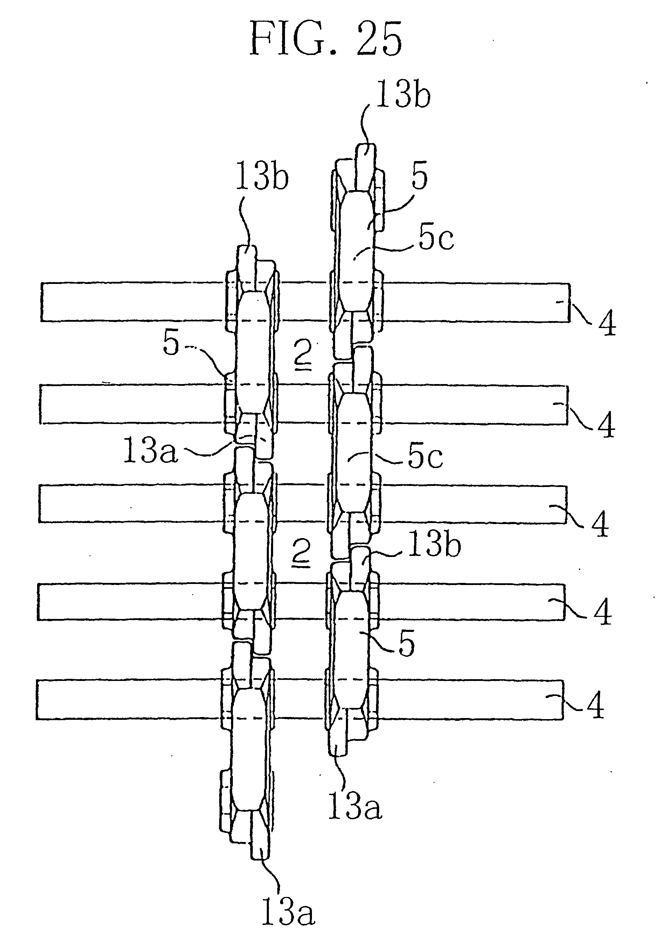

FIG. **23** to FIG. **25** show a sixth embodiment of the present invention. In the sixth embodiment, lateral slip preventing portion **13** is provided at both end portions in the lengthwise direction of the rectangular parallelepiped block **5**. The lateral slip preventing portion **13** is constructed by a lateral slip preventing portion **13a** which is formed at one end portion in the lengthwise direction of the rectangular parallelepiped block **5**, and a lateral slip preventing portion **13b** which is formed at the other end portion, and the lateral slip preventing portions **13a** and **13b** of the rectangular parallelepiped blocks longitudinally adjacent in the crawler circumference direction overlap the respective lateral slip preventing portions **13a** and **13b** in the view in the crawler circumference direction, so that the lateral slip of the rubber crawler is prevented and the rubber crawler is prevented from being detached from the traveling equipment.

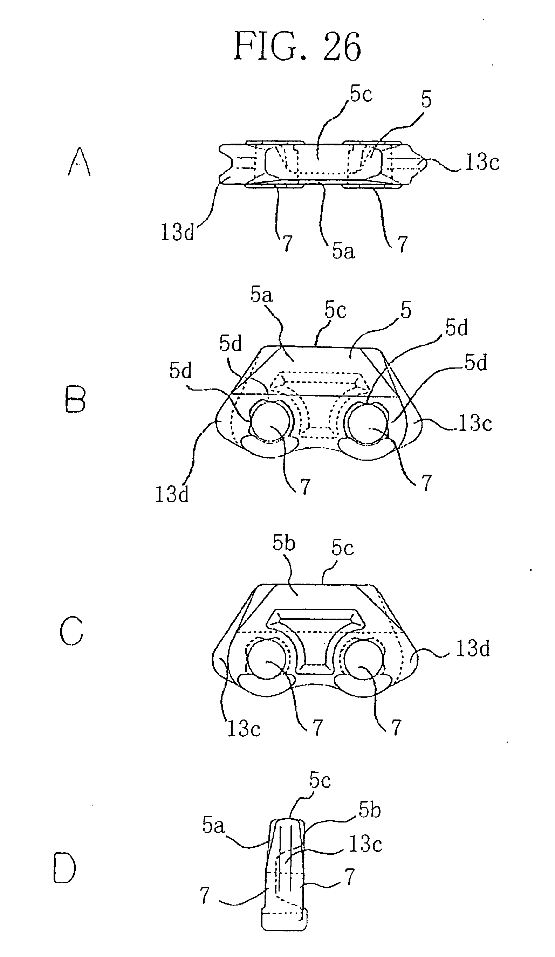

FIG. **26** shows another example of the sixth embodiment. In this embodiment, a lateral slip preventing portion **13c** in a convex form is provided at one end portion of both end portions in the lengthwise direction of the rectangular parallelepiped block **5**, a lateral slip preventing portion **13d** in a concave form is provided at the other end portion, and the lateral slip preventing portions **13c** and **13d** of the rectangular parallelepiped block longitudinally adjacent in the crawler circumference direction are nested to overlap one another in the view in the crawler circumference direction, whereby a twist is prevented in addition to the lateral slip of the rubber crawler being prevented, and the rubber crawler can be prevented from being detached more effectively.

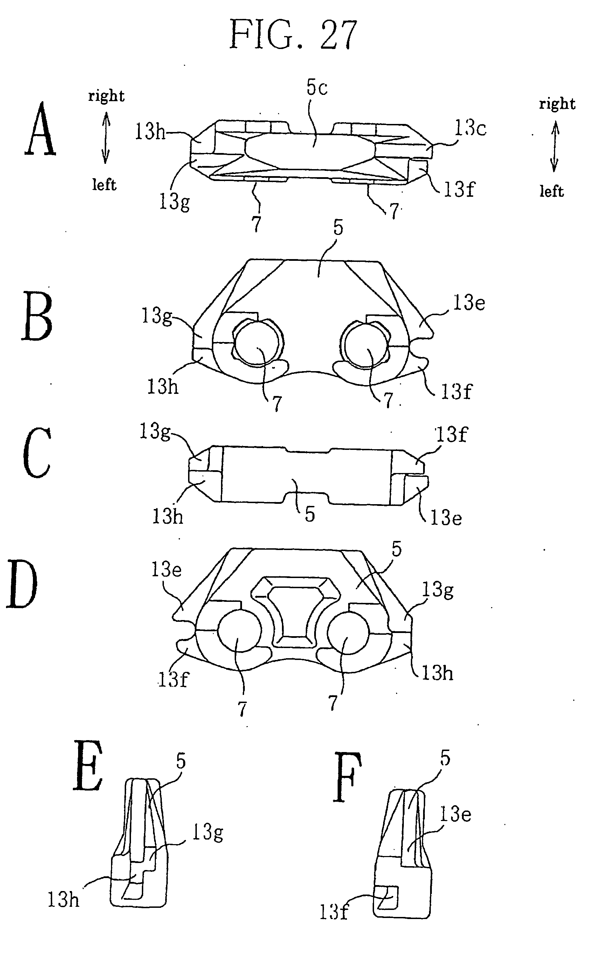

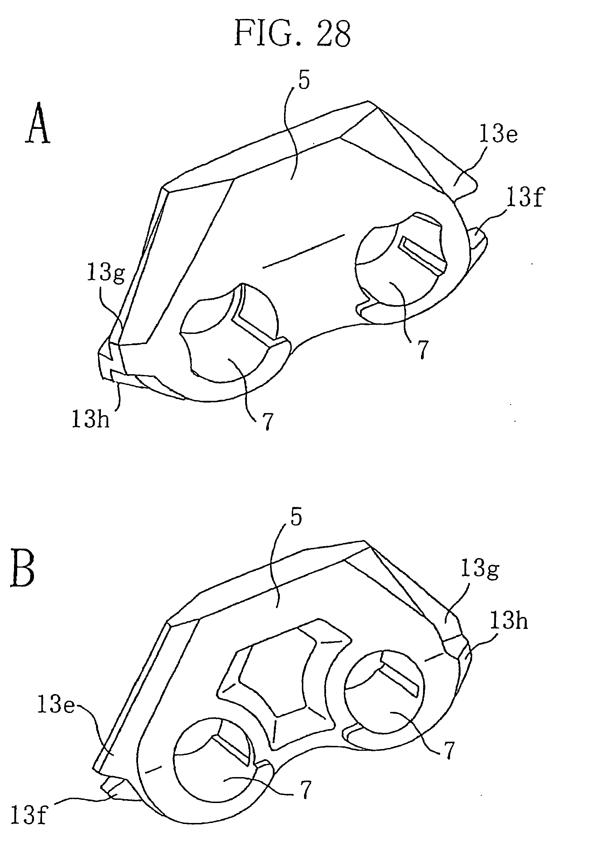

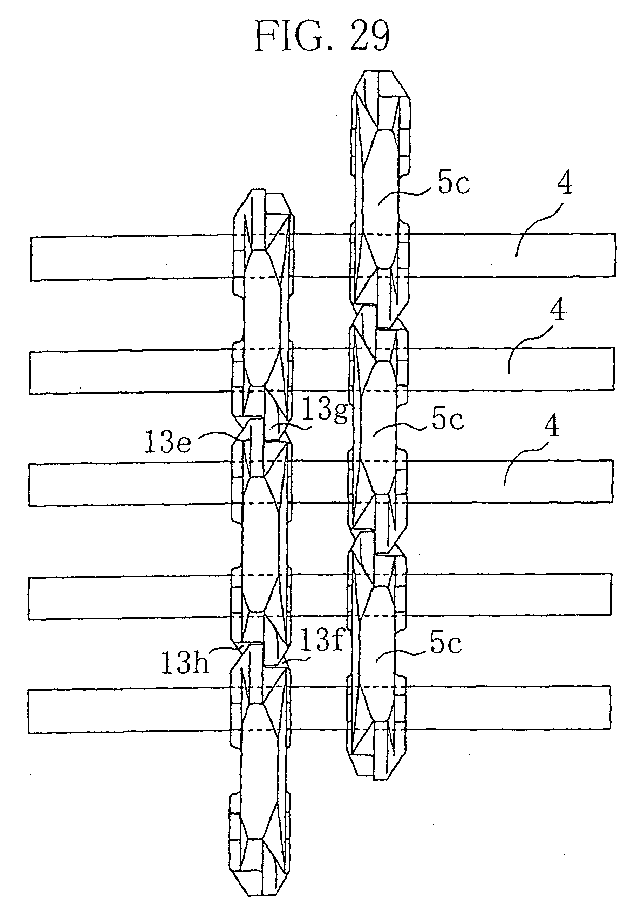

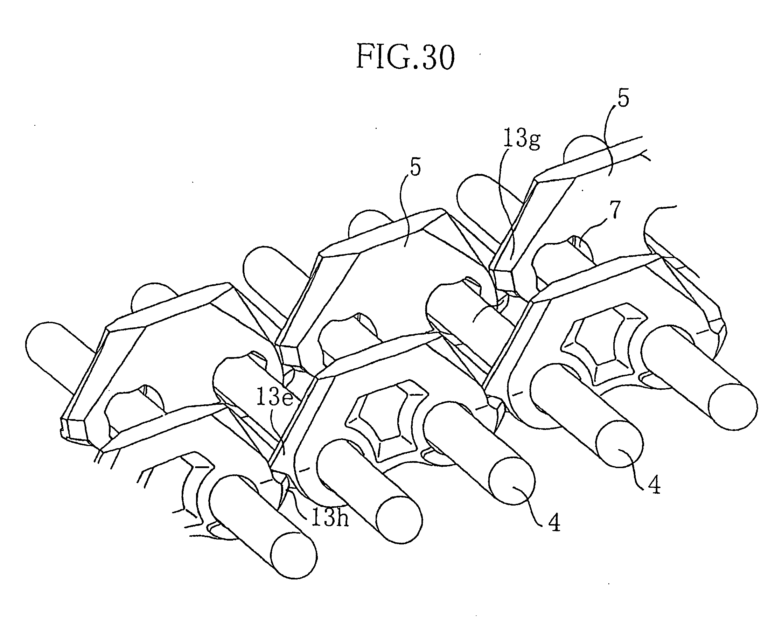

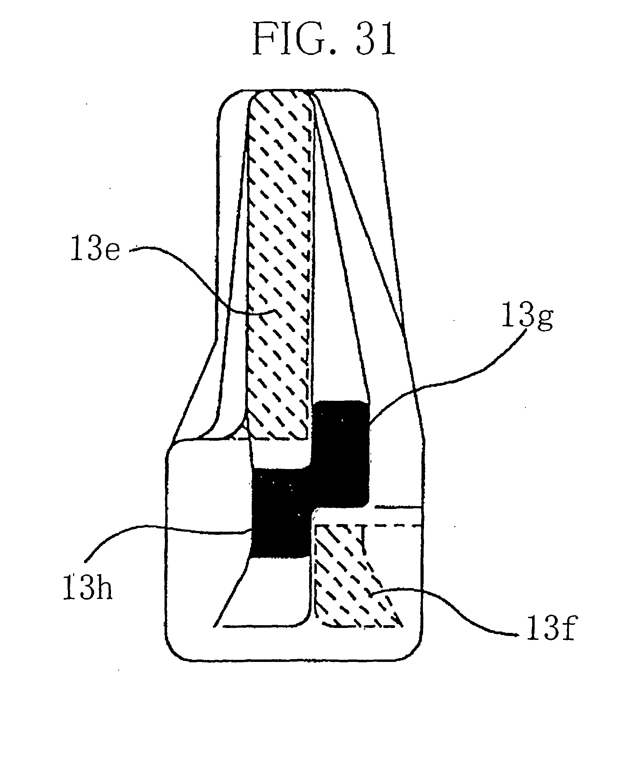

FIGS. **27A** to **F,** FIGS. **28A** and **B**, and FIG. **29** to FIG. **31** show a seventh embodiment of the present invention, FIG. **27A** is a plan view of the rectangular parallelepiped block **5** of this embodiment, **B** is a front view, **C** is a bottom view, **D** is a rear view, **E** is a left side view, **F** is a right side view, FIG. **28A** is a perspective front view, **B** is a perspective rear view, FIG. **29** is a plan view of combination of the rod body **4** and the rectangular parallelepiped block **5**, FIG. **30** is a perspective view of combination of the rod body **4** and the rectangular parallelepiped block **5**, and FIG. **31** is an explanatory view explaining an engaging state of slip prevention projections.

In this embodiment, slip prevention parts are formed at both end portions in the lengthwise direction of the rectangular parallelepiped block **5**, the slip prevention parts of the rectangular parallelepiped blocks adjacent longitudinally in the crawler circumference direction are each provided with a slip prevention projection **13e** at an upper portion of a right side of the rectangular parallelepiped block and a slip prevention projection **13f** at a lower portion of a left side, on one end of the rectangular parallelepiped block, and provided with a slip prevention projection **13g** at an upper portion of a left side of the rectangular parallelepiped block and a slip prevention projection **13h** at a lower portion of a right side, on the other end portion of the rectangular parallelepiped block, the slip prevention projection **13g** and the slip prevention projection **13h** are connected and integrally formed. As for the right side and the left side of the rectangular parallelepiped block, the right side is on the upper side of the drawing and the left side is on the lower side of the drawing for convenience as shown in FIG. **27A**.

As for the slip prevention projections of the rectangular parallelepiped blocks **5** adjacent to each other in the rubber crawler circumference direction, the respective lateral slip prevention projections overlap in the vertical direction and the lateral direction in the view in the crawler circumference direction and overlap in the lateral direction in the view in the crawler width direction, as shown in FIG. **31**.

Namely, the region painted black corresponds to the slip prevention projections **13g** and **13h** of the rectangular parallelepiped block **5** at the back side of the drawing, and the region shown by the broken line corresponds to the slip prevention projections **13e** and **13f** of the rectangular parallelepiped block at the front side of the drawing, they overlap in the vertical direction, lateral direction and the longitudinal direction of the drawing, whereby a twist can be prevented in addition to slip of the rubber crawler is prevented, and the rubber crawler can be more effectively prevented from being detached.

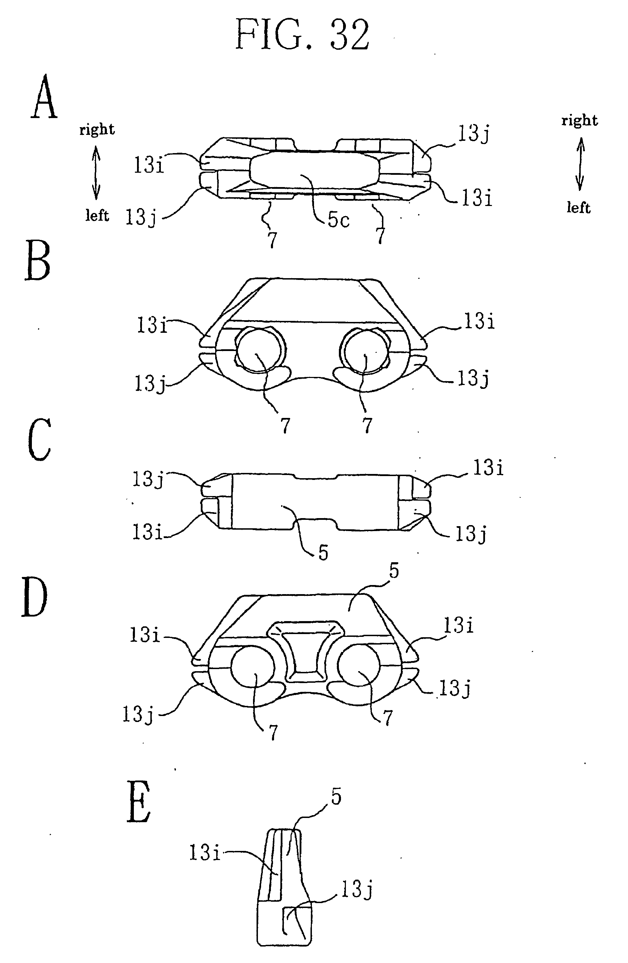

FIGS. **32A** to **E** show another example of the seventh embodiment, FIG. **32A** is a plan view of the rectangular parallelepiped block **5** of this embodiment, **B** is a front view, **C** is a bottom view, **D** is a rear view, and **E** is a lateral side view.

In this example, a slip prevention parts are formed at both end portions in the lengthwise direction of the rectangular parallelepiped block **5**, and the slip prevention parts of the rectangular parallelepiped block adjacent longitudinally in the crawler circumference direction are each provided with a slip prevention projection **13i** at an upper portion of a left side of the rectangular parallelepiped block and a slip prevention projection **13j** at a lower portion of a right side, on one end side of the rectangular parallelepiped block, and provided with the slip prevention projection **13i** at an upper portion of a left side and the slip prevention projection **13j** at a lower portion of a right side, on the other end portion side of the rectangular parallelepiped block.

In this embodiment, the slip prevention projections of the rectangular parallelepiped blocks **5** adjacent to each other in the rubber crawler circumference direction overlap in the vertical direction and the lateral direction of the crawler in the view in the crawler circumference direction, and overlap in the lateral direction in the view in the crawler width direction as in the seventh embodiment, and a twist can be prevented in addition to the lateral slip of the rubber crawler being prevented, thus making it possible to prevent the rubber crawler from being detached more effectively, as in the seventh embodiment.

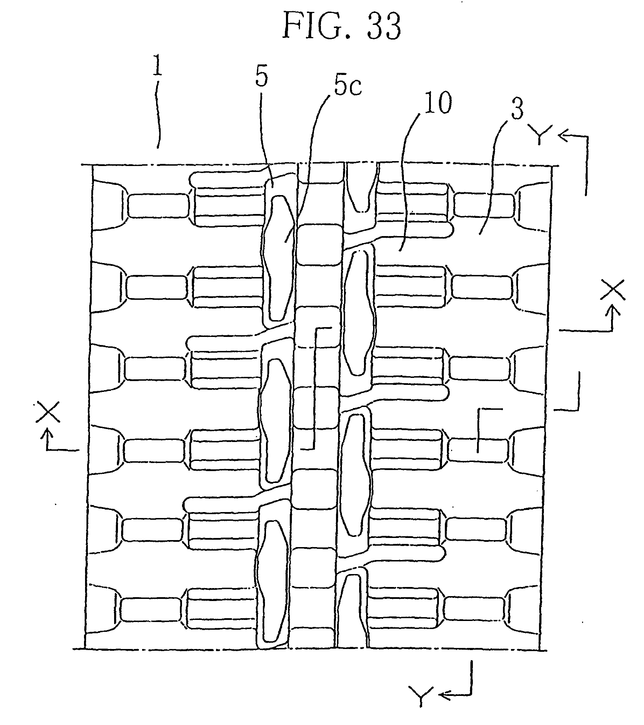

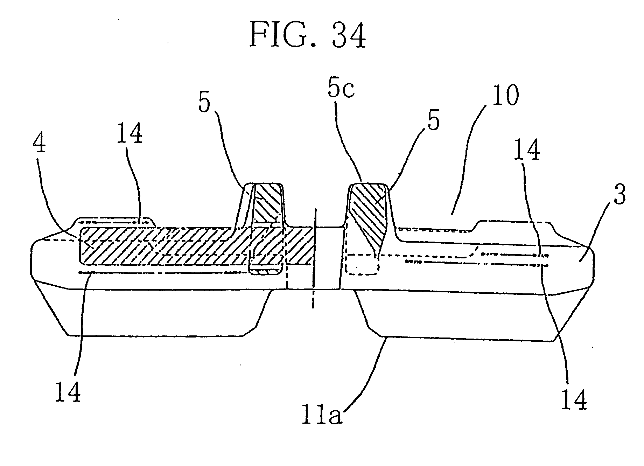

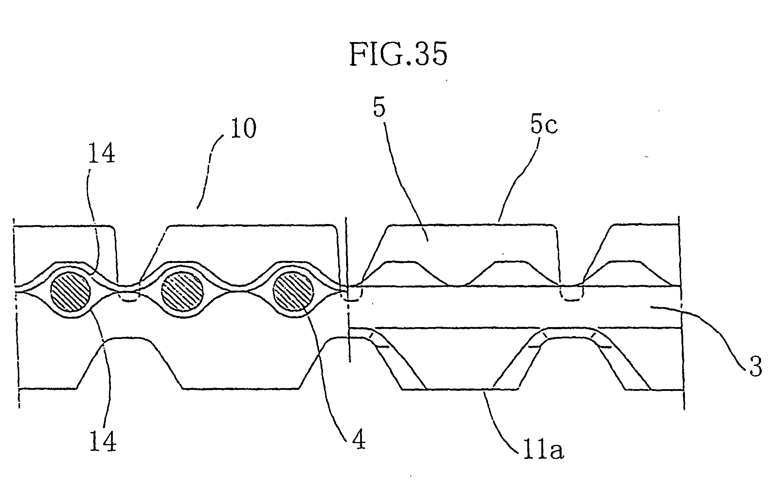

FIG. **33** to FIG. **35** show an eighth embodiment of the present invention. FIG. **33** is a plan view of the inner circumference side of the eighth embodiment, FIG. **34** is a sectional view taken along the X-X line in FIG. **33**, and FIG. **35** is a sectional view taken along the Y-Y line in FIG. **33**.

In the eighth embodiment, reinforcement layers **14** are buried in the outer circumference side (ground contact side) and the inner circumference side **10** (non-ground contact side) of the rod bodies **4** by being divided in the crawler width direction over an entire circumference of the rubber crawler main body **3** in the construction of the first embodiment. The reinforcement layer **14** winds its way (is waved) to the center in the crawler thickness direction between the rod body **4** and the rod body **4**, in the crawler circumference direction as shown in FIG. **35**, and is buried so as to be along the surface of the rod body **4**. In this situation, the reinforcement layer **14** is bonded to the rubber of the rubber crawler main body **3**.

As a result of burying the reinforcement layer **14**, the rubber crawler of this embodiment uniformly disperses a driving force transmitted to the rod body **4** and transmits it to a lug **11a**, whereby a secure tractive force can be obtained. Further, local stress near the rod body **4** is relieved and durability of the rubber crawler is improved.

In this situation, the reinforcement layer **14** may be buried in either one of the outer circumference side or the inner circumference side. It goes without saying that this embodiment is not limited to the construction of the first embodiment, and it can be also adopted in the other embodiments at will.

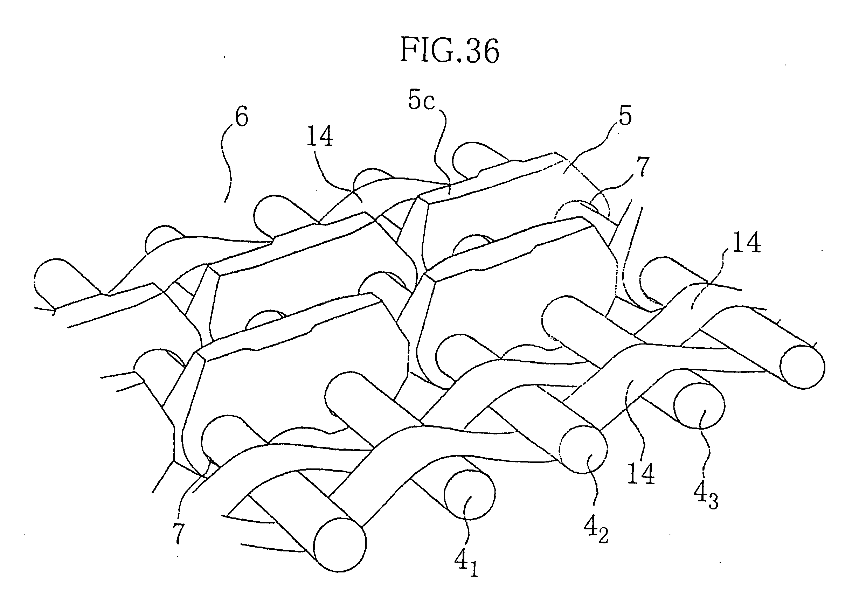

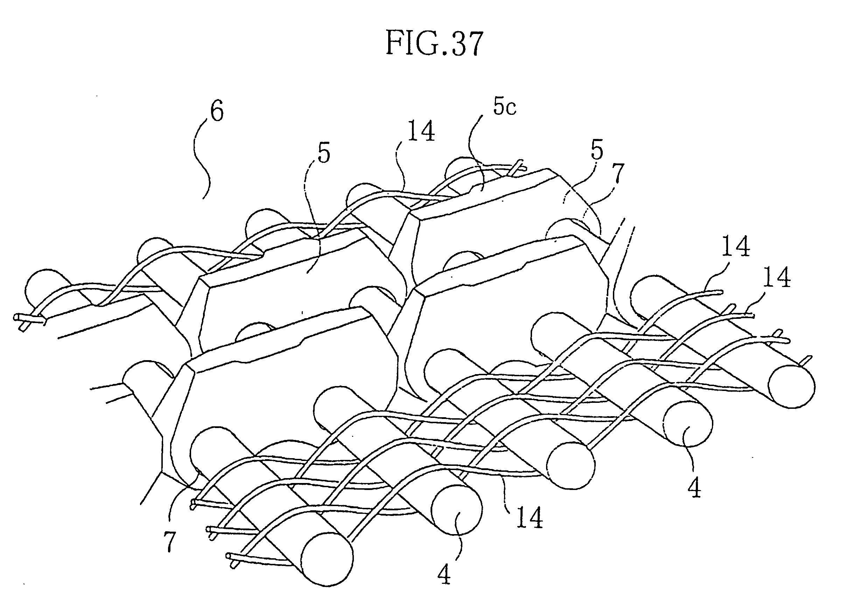

FIG. **36** and FIG. **37** are the drawings showing another example of the eighth embodiment of the present invention, and both of the drawings are perspective views of the combination of arrangement relationship between the reinforcement layer **14** and the rod body **4**. As shown in FIG. **36**, the reinforcement layer **14** may be buried to wind its way to be alternately arranged in the outer circumference side and the inner circumference side of the rod body **4** so that the reinforcement layer **14** passes the inner circumference side of the rod body **41**, passes the outer circumference side of the adjacent rod body **42**, and further passes the inner circumference side of the adjacent rod body **43**.

In the embodiment shown in FIG. **36**, the reinforcement layers **14**, which are buried in the outer side part at the left and the right in the crawler width direction from the center part of the rubber crawler in which the engaging part and the rectangular parallelepiped blocks are arranged, are laterally divided into two, and the locations at which the left and right reinforcement layers **14** are buried alternately in the outer circumference side and the inner circumference side of the rod body **4** are made opposite at the left and the right.

The reinforcement layer may be further divided as shown in FIG. **37**.

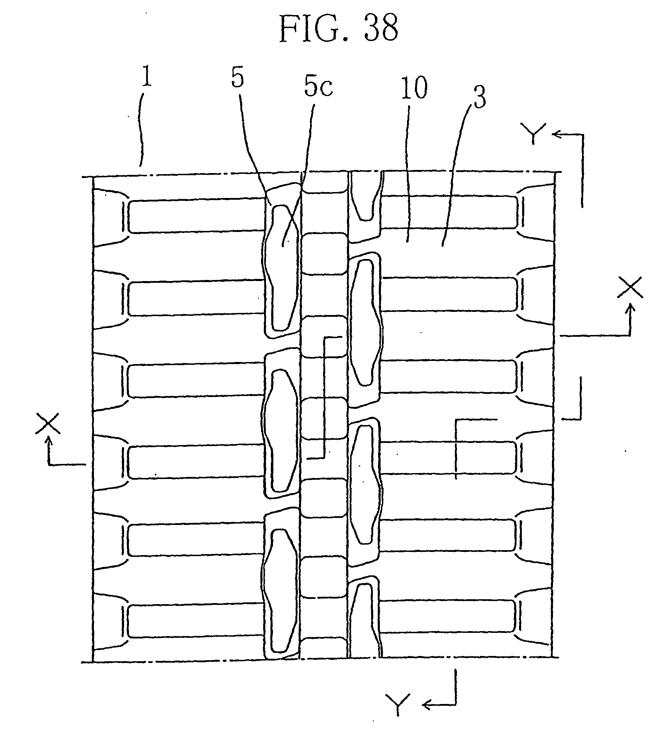

A ninth embodiment of the present invention will be explained with use of FIG. **38** to FIG. **40**, and FIGS. **41A** to **C**. The ninth embodiment of the present invention is characterized in that a connecting ring **15** is provided in the construction of the first embodiment.

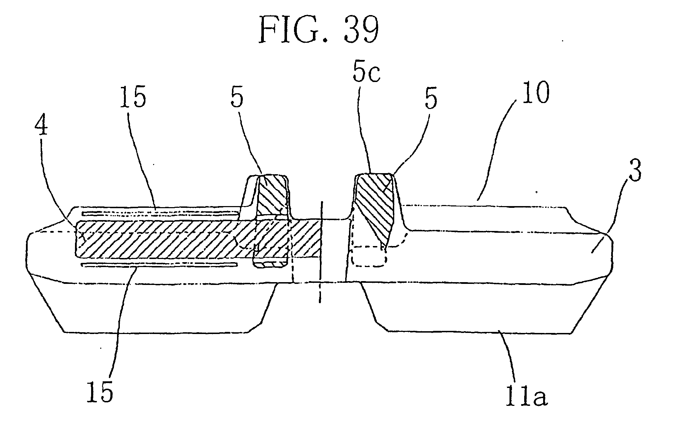

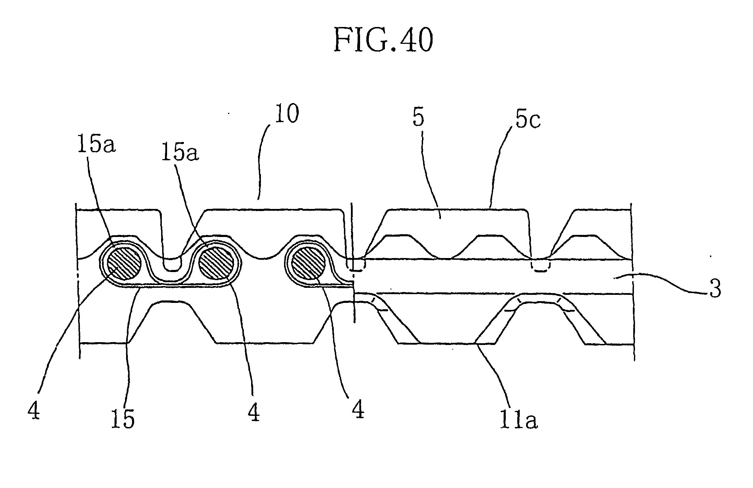

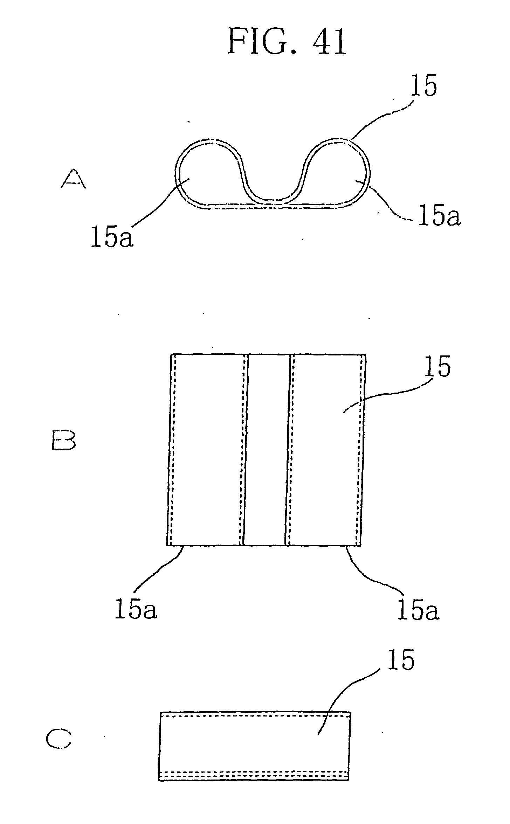

FIG. **38** is a plan view showing the inner circumference side **10** of the rubber crawler of this embodiment, FIG. **39** is a sectional view taken along the X-X line in FIG. **38**, FIG. **40** is a sectional view taken along the Y-Y line in FIG. **38**, FIGS. **41A** to **C** show a connecting ring **15**, FIG. **41A** is a side view in the crawler circumference direction, **B** is a plan view, and **C** is a side view in the crawler width direction.

The connecting rings **15** are placed in a zigzag fashion by being displaced by a half pitch from the rectangular parallelepiped blocks **5** in the crawler circumference direction, and placed at the outer side of the rectangular parallelepiped blocks **5** in the crawler width direction, and they are buried in the rubber crawler main body **3** by inserting the adjacent rod bodies **4** and **4** through insertion portions **15a** and **15a** at both sides of the connecting rings **15** in order. According to the above-described construction, since the rod body **4** is connected at both sides of the engaging hole **2**, a crawler has less vibrations and less twist, and the connecting ring **15** is constituted by spring steel, steel cord, high strength fiber or the like, and has springiness due to the effect of the shape, thus making the rubber crawler difficult to break, with abnormal tension hardly occurring thereto.

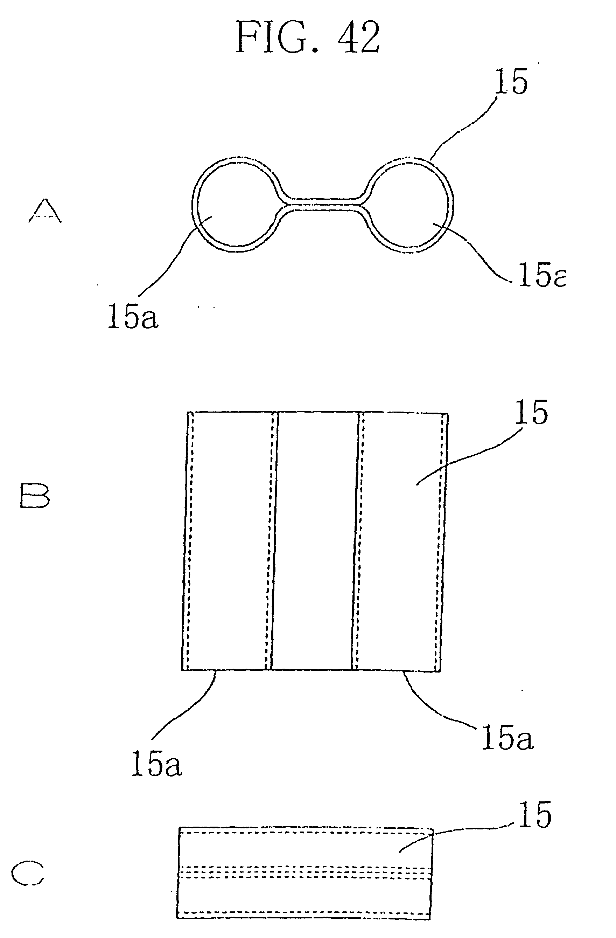

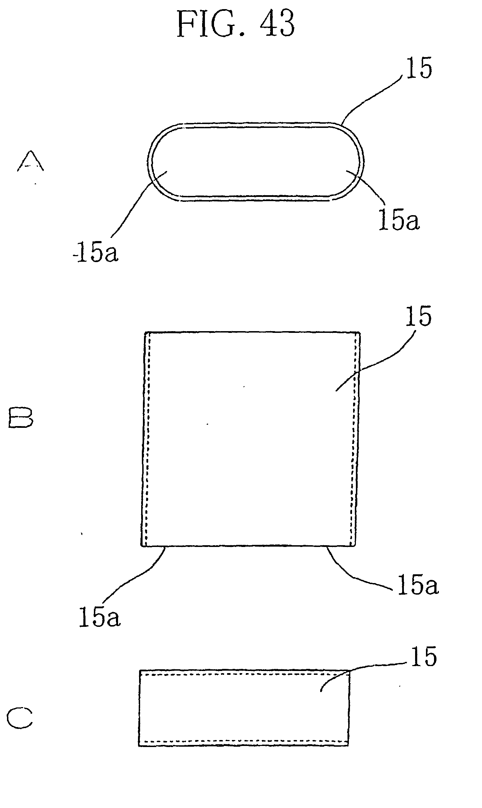

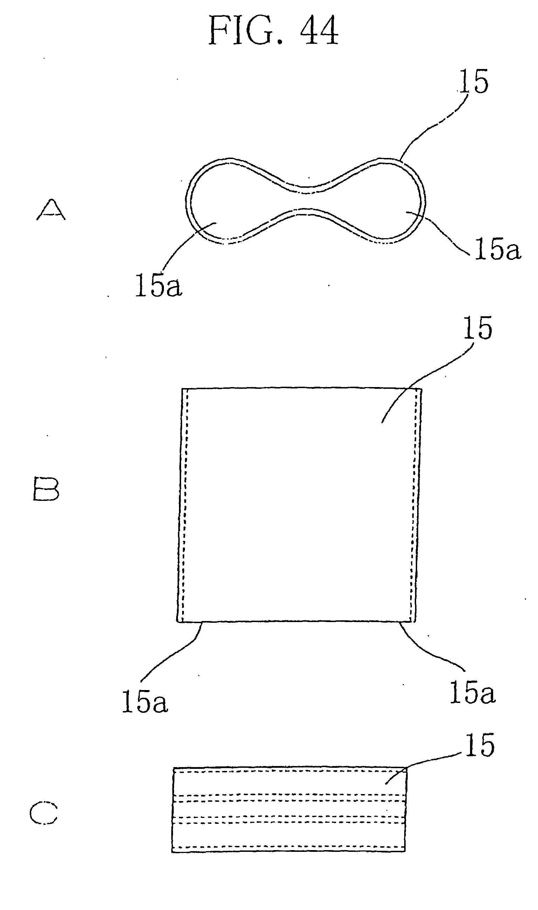

The shape of the connecting ring **15** is not limited to the constitution shown in FIGS. **41A** to **C**, and it may be the shapes in FIGS. **42A** to C, FIGS. **43A** to **C**, FIGS. **44A** to **C** and the like.

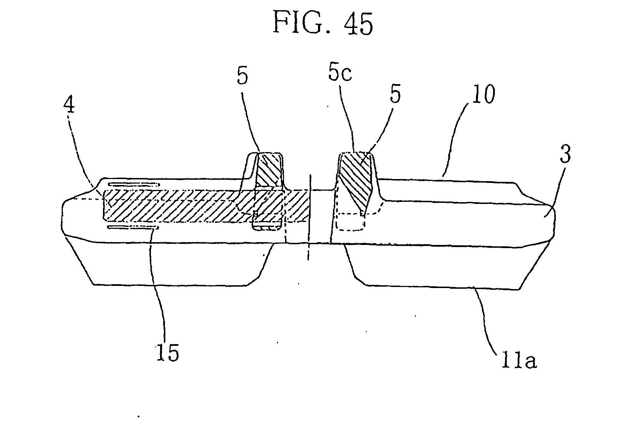

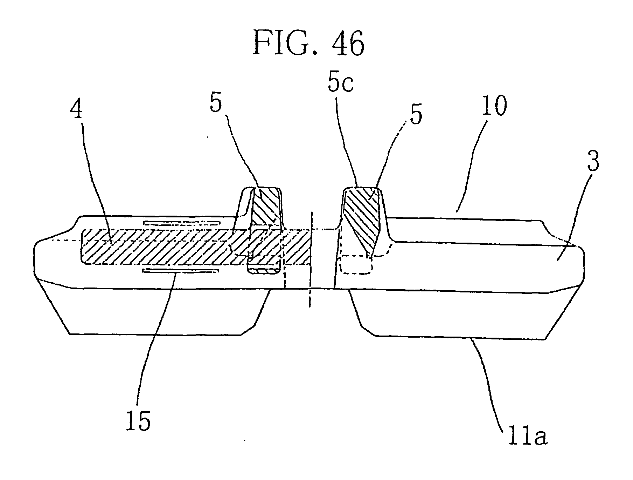

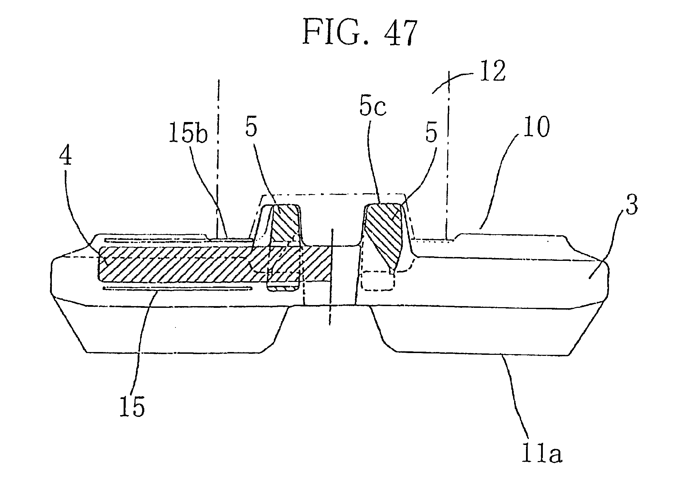

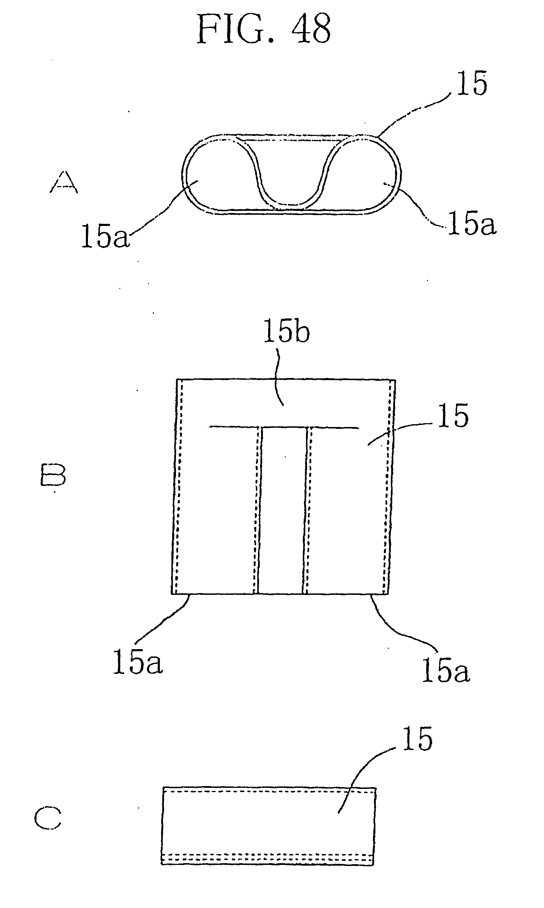

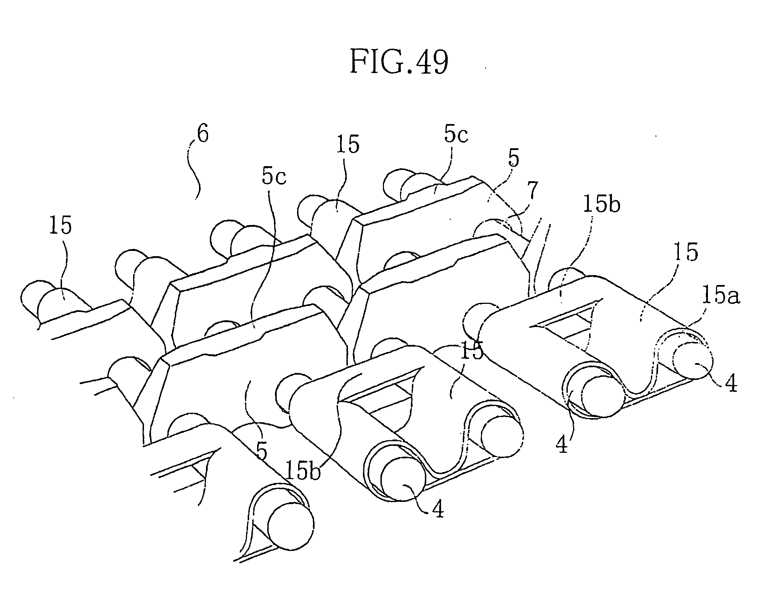

The width of the connecting ring **15**, the insertion position with respect to the rubber crawler width direction is freely selected, and an example of them is shown in FIG. **45** and FIG. **46**. As shown in FIGS. **47** to **49**, a track roller rolling contact surface **15b**, which is made by forming the top surface of the inner circumference side into a flat form, is formed at least on a region of the connecting ring **15**, adjacent to the rectangular parallelepiped block, and the track roller rolling contact surface **15b** is exposed to the rubber crawler inner circumference side **10**, or it is coated with such rubber as a flash, on which surface the outer track roller **12** included in the machine body can roll to travel.

In each embodiment, a lug **11a** is placed optionally, and in the construction in which the lug **11a** is provided by being displaced by a half pitch with respect to the connecting ring **15** (one pitch with respect to the rod body **4**), the lug **11a** is located between the connecting ring **15** and the connecting ring **15**, so that reduction in rigidity between the connecting rings **15** is prevented, the entire crawler has balanced rigidity, and a tractive force is efficiently transmitted to the lug **11a**.

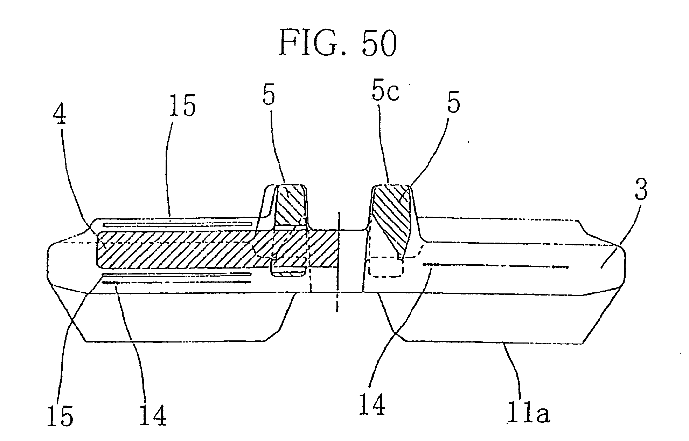

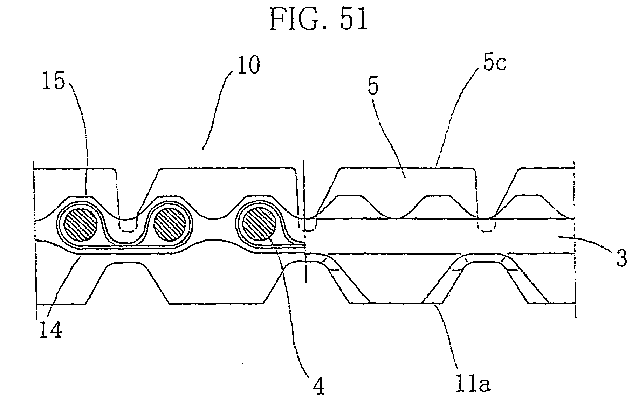

A tenth embodiment of the present invention will be explained with use of FIG. **50** to FIG. **51**. In the tenth embodiment, the reinforcement layers **14** are buried in the rubber crawler main body **3** on the outer circumference side (ground contact side) of the connecting rings **15** by being divided in the crawler width direction extending over the entire circumference in the construction of the ninth embodiment. The reinforcement layer **14** winds its way to the crawler inner circumference side **10** (non-ground contact side) between the connecting ring **15** and the connecting ring **15** and is buried to be along the surface of the connecting ring **15** in the crawler circumference direction as shown in FIG. **51**. The tenth embodiment has the effects of both of the ninth embodiment and the eighth embodiment, and can provide the rubber crawler, with less twist, which is difficult to break, and which can provide a secure tractive force.

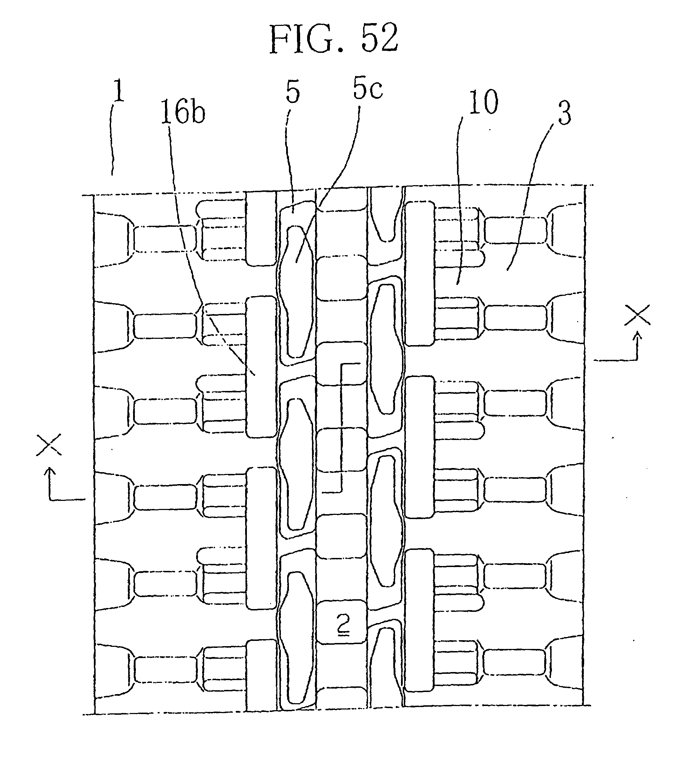

An eleventh embodiment of the present invention will be explained with use of FIG. **52**, FIG. **53**, FIGS. **54A** to **C** and FIG. **55**.

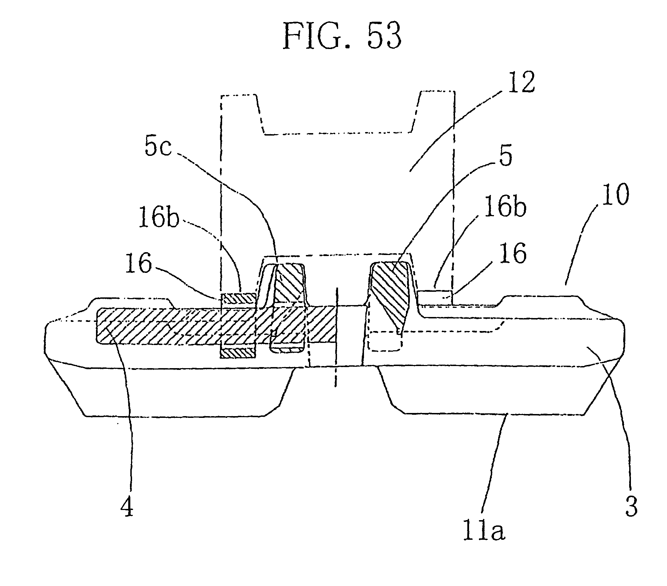

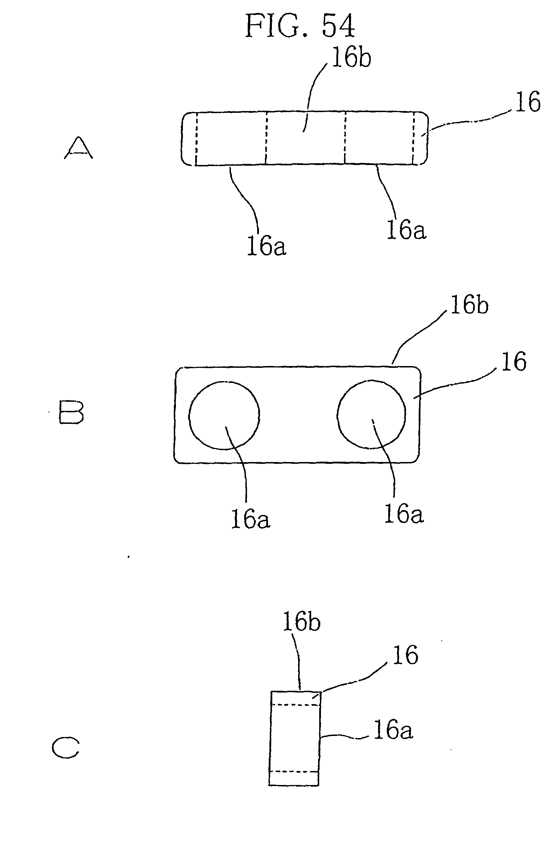

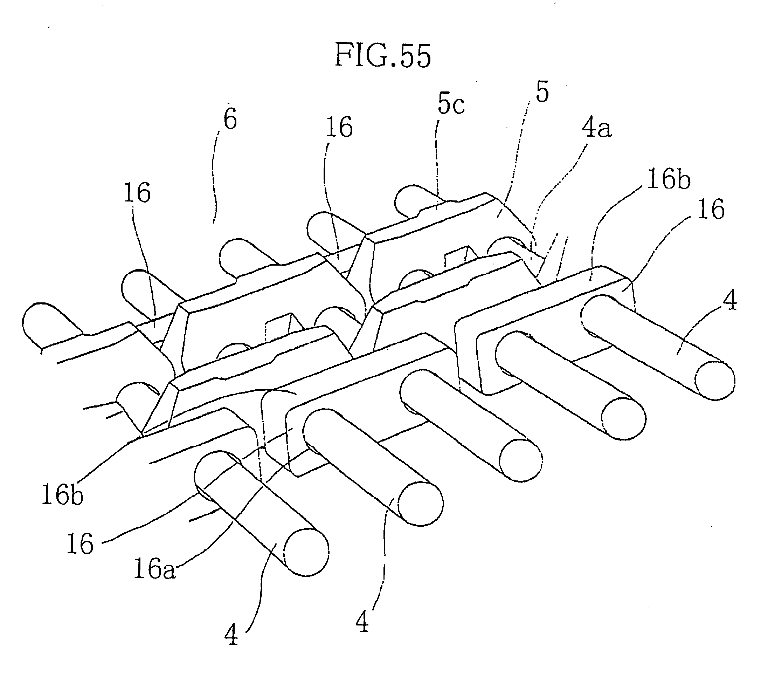

The eleventh embodiment is characterized in that the connecting ring **15** is made a block body, and connecting blocks **16** are provided. FIG. **52** is a plan view showing the inner circumference side **10** (non-ground contact surface side) of the rubber crawler of this embodiment, FIG. **53** is a sectional view taken along the X-X line of FIG. **52**, FIGS. **54A** to **C** show a connecting block **16** in this embodiment, **A** is a plan view, **B** is a front view, and **C** is a side view, FIG. **55** is a view of combination of the rod bodies, the rectangular parallelepiped blocks **5** and the connecting blocks **16**.

The connecting blocks **16** are provided with connecting block through-holes **16a** and **16a** at positions that are at the front and the rear in the crawler circumference direction, they are placed in a zigzag fashion displaced by a half pitch from the rectangular parallelepiped blocks **5** in the crawler circumference direction and at the outer side of the rectangular parallelepiped block **5** in the crawler width direction, and are embedded in the rubber crawler main body **3** with the adjacent rod bodies **4** and **4** being inserted through the through-holes **16a** and **16a**. A top surface of the connecting block **16** is in a flat form, and is exposed on the rubber crawler inner circumference side **10** (non-ground contact surface side), or coated with such rubber as a flash to be a rolling contact surface **16b**, on which the outer track roller **12** included in the machine body can roll to travel.

The through-hole **16a** provided in the connecting block **16** is made larger than an outer diameter of the rod body **4**, rubber is filled in a gap between the through-hole **16a** and the rod body **4**, the rubber is constructed to be bonded to the through-hole **16a** and the rod body **4**, and the rod body **4** is fixed into the connecting block **16** via the rubber as an elastic material. Consequently, the rubber crawler has both suitable springiness and sufficient rigidity.

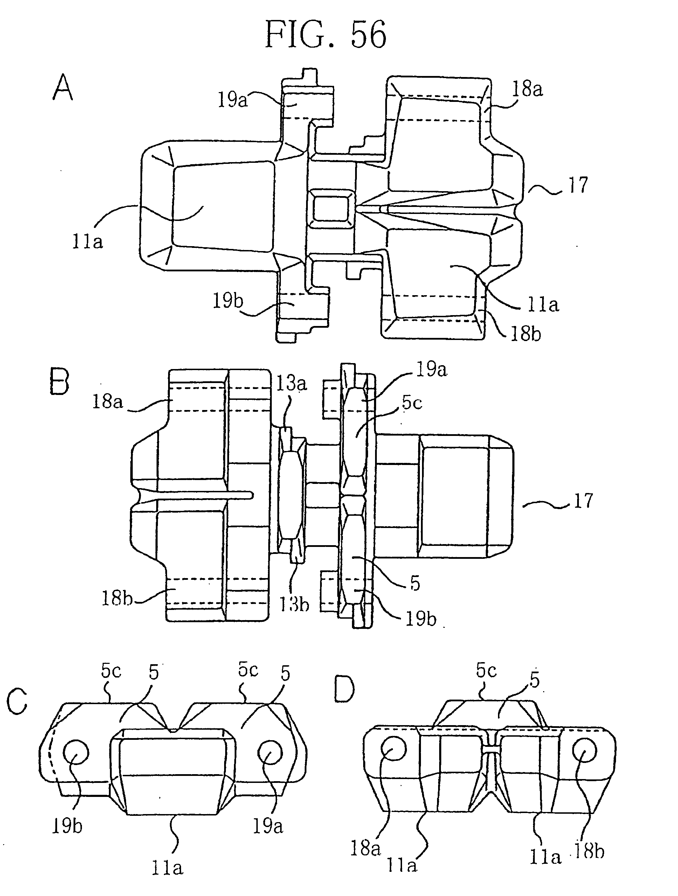

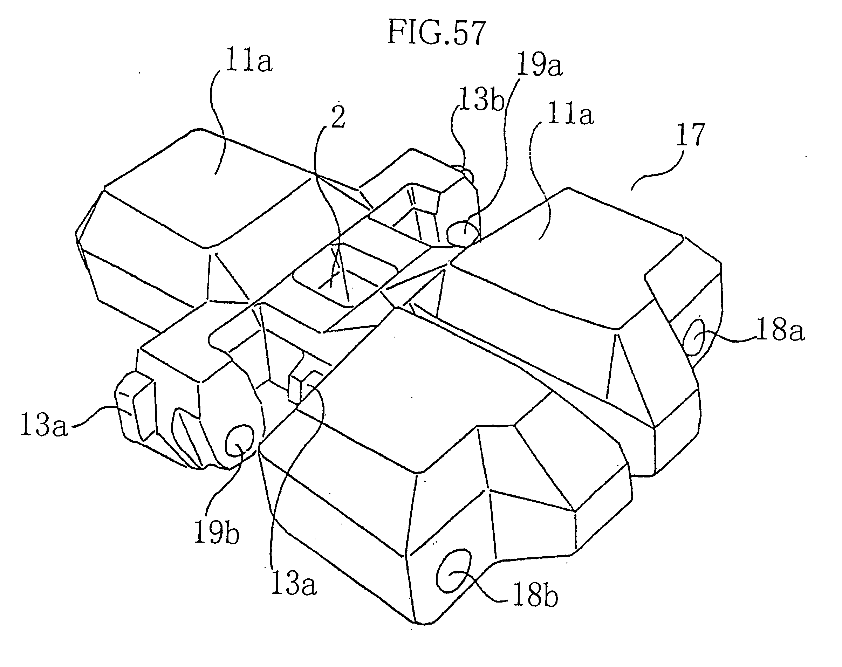

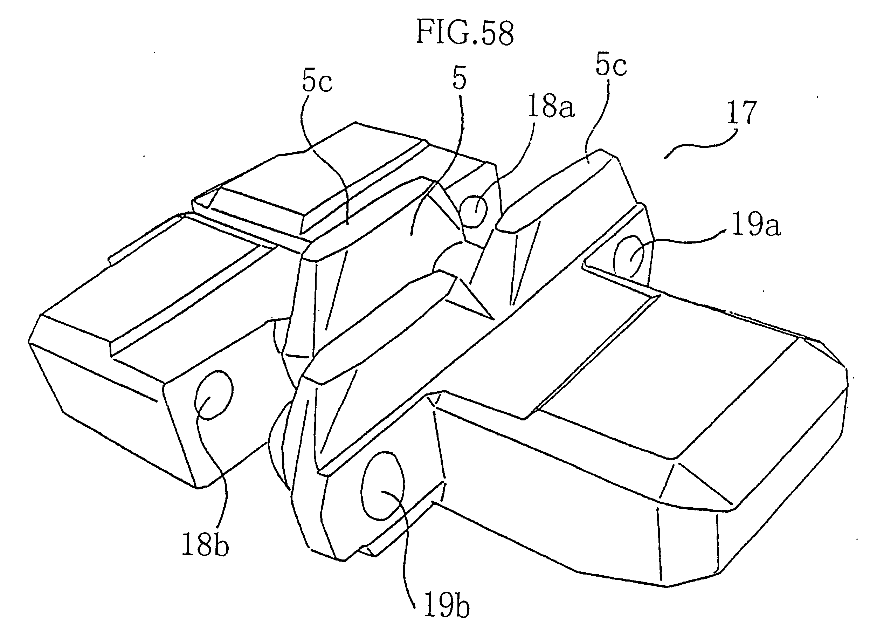

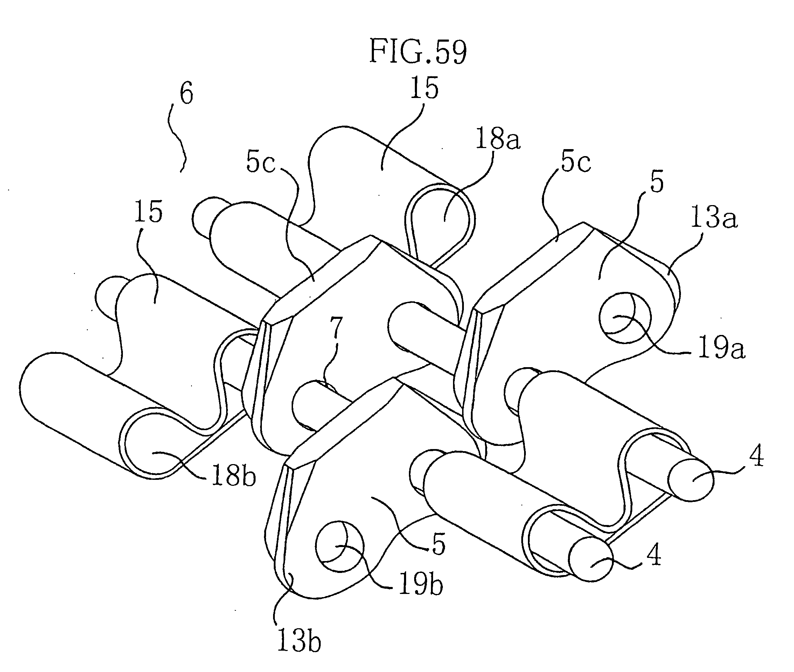

Next, a twelfth embodiment of the present invention will be explained with use of FIGS. **56A** to **D**, FIG. **57** to FIG. **60**. FIGS. **56A** to **D**, FIG. **57** to FIG. **59** are the drawings showing a rubber crawler unit **17** of the twelfth embodiment of the present invention, FIG. **56A** is a plan view showing the outer circumference side (ground contact surface side), **B** is a plan view showing the inner circumference side (non-ground contact surface side), **C** is a left side view, **D** is a right side view, FIG. **57** is a perspective view of the rubber crawler unit **17** seen from the outer circumference side, FIG. **58** is a perspective view of the rubber crawler unit **17** seen from the inner circumference side, and FIG. **59** is a drawing of assembly showing a combination state of the rod bodies **4**, the rectangular parallelepiped blocks **5** and the connecting rings **15** of the crawler skeleton part **6** embedded in the rubber crawler unit main body.

The rubber crawler unit **17** of this embodiment is constructed by three of the rectangular parallelepiped blocks **5**, two of the rod bodies **4**, and three of the connecting rings **15** as shown in FIG. **59**, and is embedded in a rubber crawler unit main body.

The rubber crawler unit **17** of the twelfth embodiment includes a connecting part at an end portion in the vertical direction (end portions in the crawler circumference direction) in FIG. **56A**, and connect to the adjacent rubber crawler unit **17** at the connecting part in succession to make an endless rubber crawler.

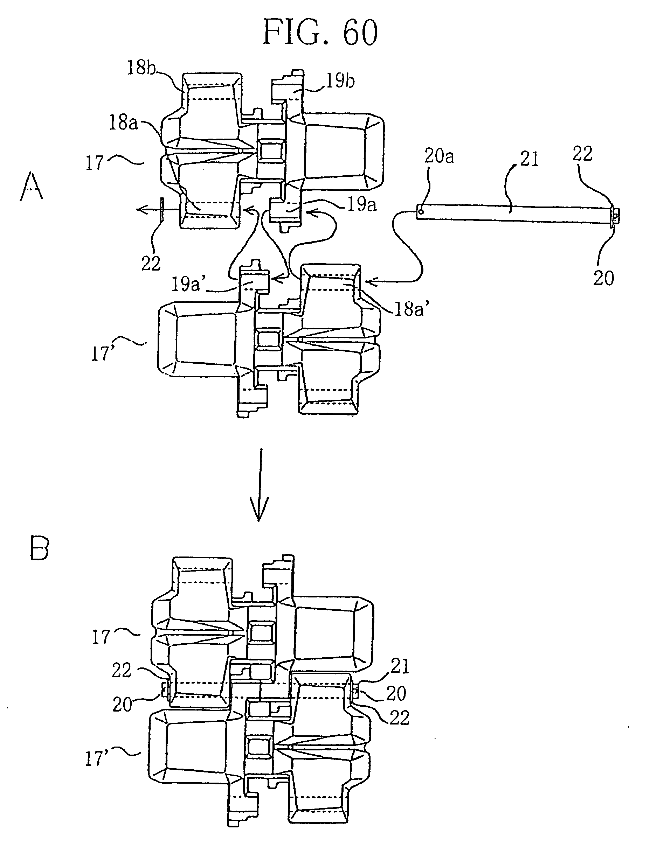

Namely, at the upper end portion in FIG. **56A**, a connecting rod body insertion hole **18a** is included at the right side, and a connecting rectangular block through-hole **19a** is included at the left side, while at the lower end portion, a connecting rod body insertion hole **18b** is included at the right side, and a connecting rectangular parallelepiped block through-hole **19b** is included at the left side, and as shown in FIG. **60**, the rubber crawler unit **17**, and a rubber crawler unit **17'** which is made by rotating the rubber crawler unit **17** at 180 degrees in the inverse direction are made adjacent to each other, then by using the connecting rod body insertion hole **18a** and the connecting rectangular parallelepiped block through-hole **19a** of the rubber crawler unit **17** and a connecting rod body insertion hole **18a'** and a connecting rectangular parallelepiped block through-hole **19a'** of the rubber crawler unit **17'**, a connecting rod body **21** including pin holes **20a** for inserting pins **20** through them at both end portions is inserted through the connecting rod body insertion hole **18a'** to the connecting rectangular parallelepiped block through-hole **19a** to the connecting rectangular parallelepiped block through-hole **19a'** to the connecting rod body insertion hole **18a** in this order, washers **22** are fitted onto both end portions of the connecting rod body **21**, the pins **20** are tapped into the pin holes **20a** to fix the connecting rod body **21** so as not to be detached, whereby the adjacent rubber crawler unit **17** and the rubber crawler unit **17'** are connected, and connection with the next rubber crawler unit is performed by connecting the connecting rod body **21** to the adjacent rubber crawler unit with use of the connecting rod body insertion hole **18b** and the connecting rectangular parallelepiped block through-hole **19b**.

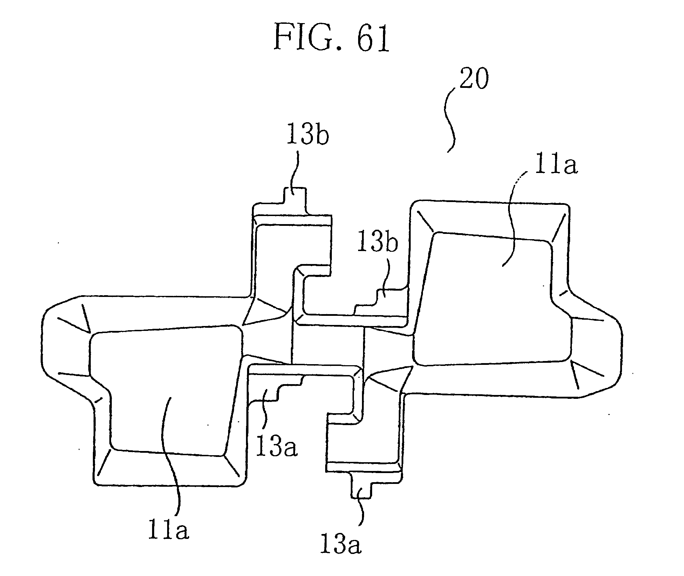

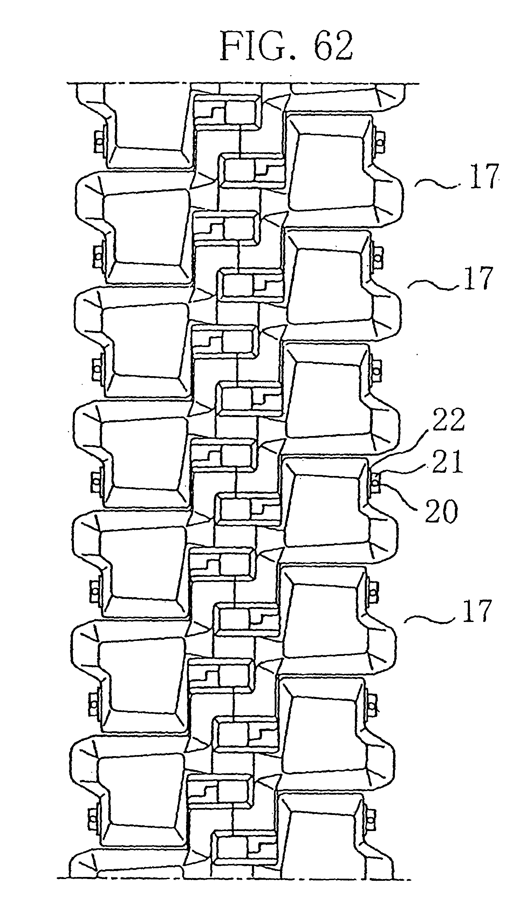

A thirteenth embodiment of the present invention will be explained with use of FIG. **61** and FIG. **62**. FIG. **61** is a plan view of the ground contact side of the rubber crawler unit **17**, and FIG. **62** is a plan view of a partial ground contact side of a rubber crawler which is formed by connecting the rubber crawler units **17** to be endless.

The thirteenth embodiment of the present invention is a rubber crawler unit of the minimum unit, which is constructed by two of the rectangular parallelepiped blocks **5**, one of the rod body **4**, and two of the connecting rings **15**, and is embedded in the rubber crawler unit main body. The adjacent rubber crawler units **17** are connected to be an endless rubber crawler as shown in FIG. **62**.

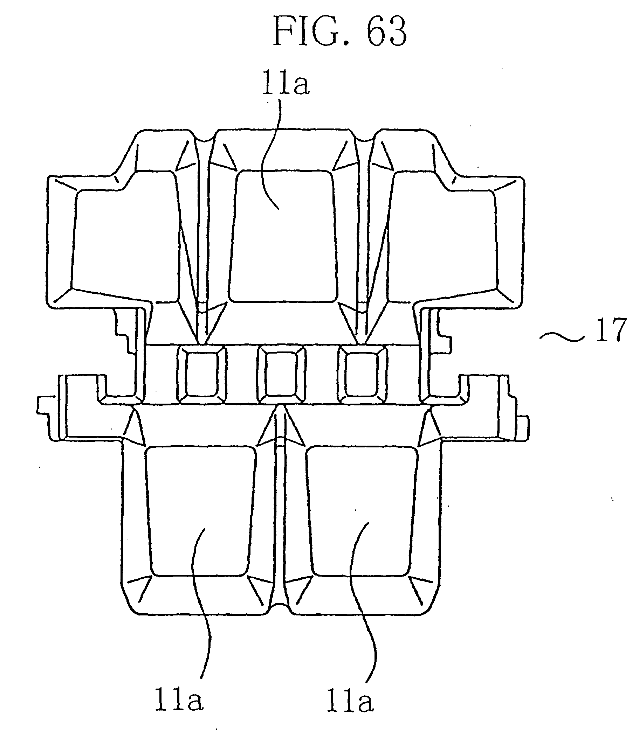

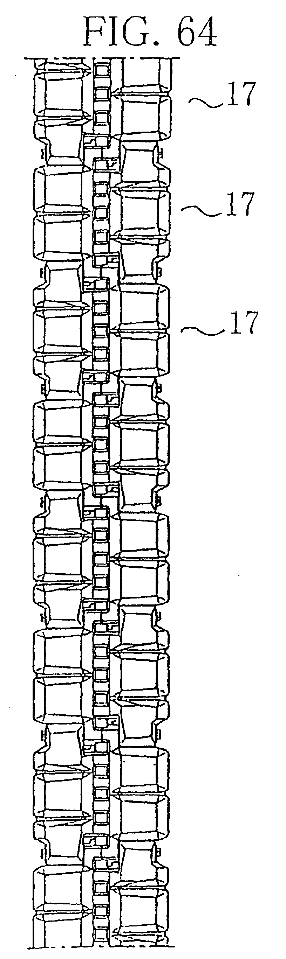

A fourteenth embodiment of the present invention will be explained with use of FIG. **63** and FIG. **64**. FIG. **63** is a plan view of a ground contact side of the rubber crawler unit **17**, and FIG. **64** is a plan view of a ground contact side of a rubber crawler formed by connecting the rubber crawler units **17** to be in an endless form.

The fourteenth embodiment of the present invention is another embodiment of the rubber crawler unit, which is constructed by five of the rectangular parallelepiped blocks **5**, four of the rod bodies **4**, and five of the connecting rings **15**, and is embedded in the rubber crawler unit main body. The adjacent rubber crawler units **17** are connected to be a rubber crawler in an endless form shown in FIG. **64**.

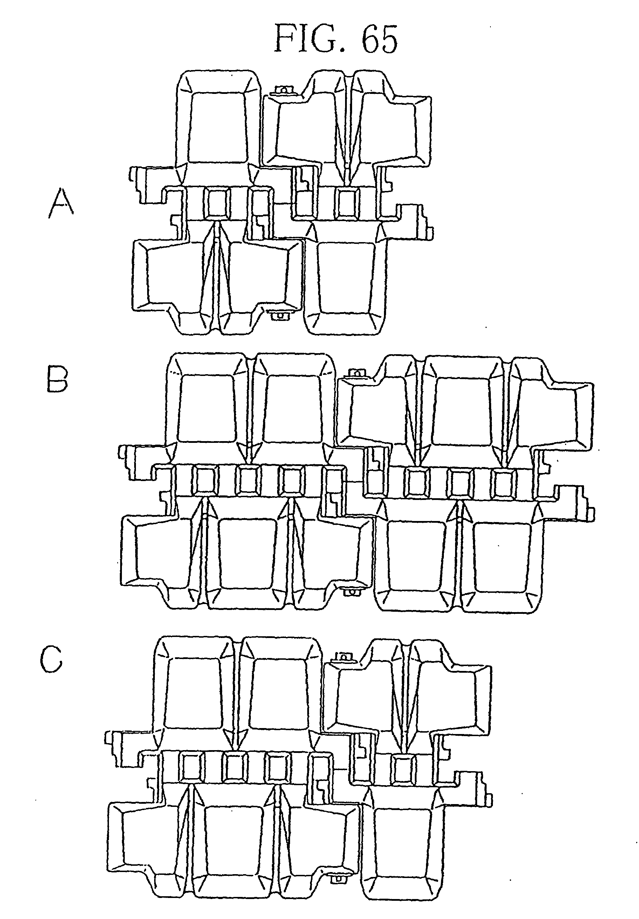

As for connection of the rubber crawler units, only the same kind of rubber crawler units shown in FIGS. **65A** and **B** may be connected to be a rubber crawler in an endless form, or rubber crawler units of different lengths shown in FIG. **65C** may be connected to form a rubber crawler in an endless form, and the rubber crawler units may be appropriately selected according to the length of the circumference of the required rubber crawler to perform connection to form a rubber crawler in an endless form.

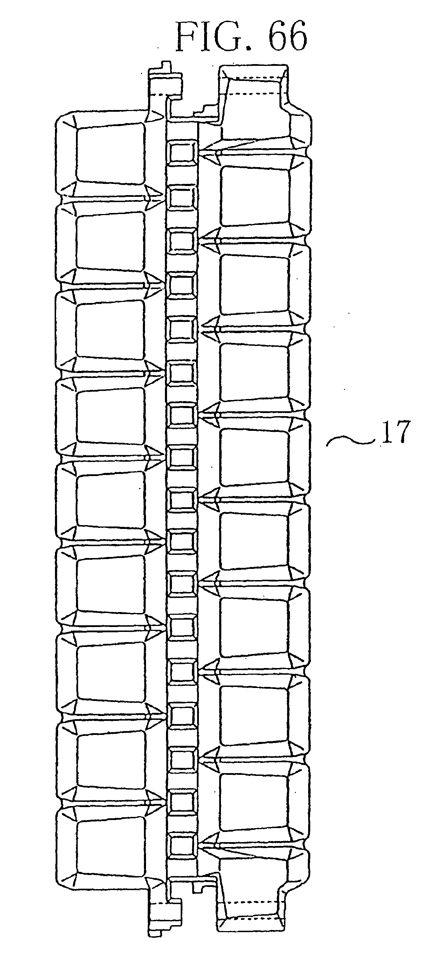

As shown in FIG. **66**, a long rubber crawler unit **17** may be formed, and two to four of them may be connected to make a rubber crawler in an endless form, or both end portions of one of the rubber crawler unit may be connected to be in an endless form.

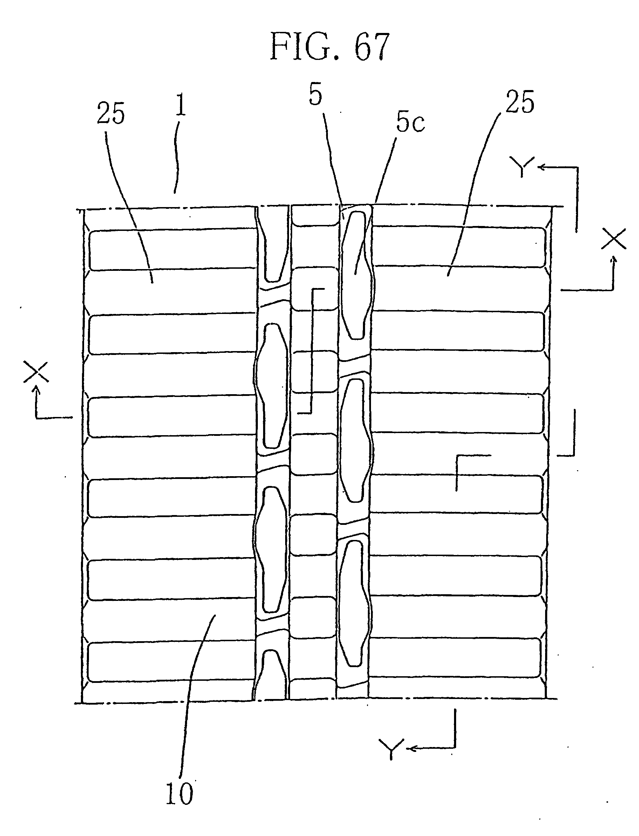

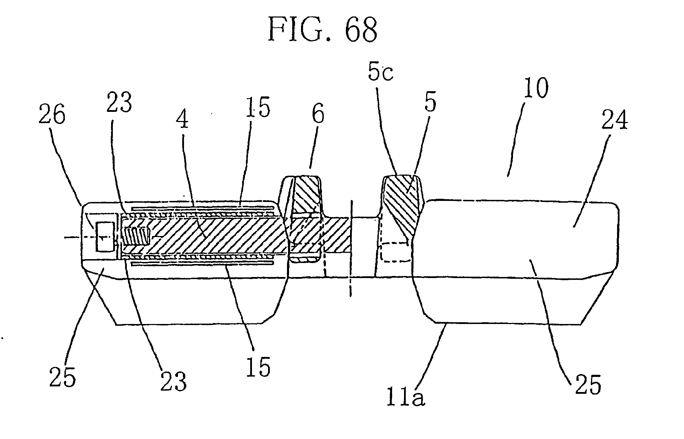

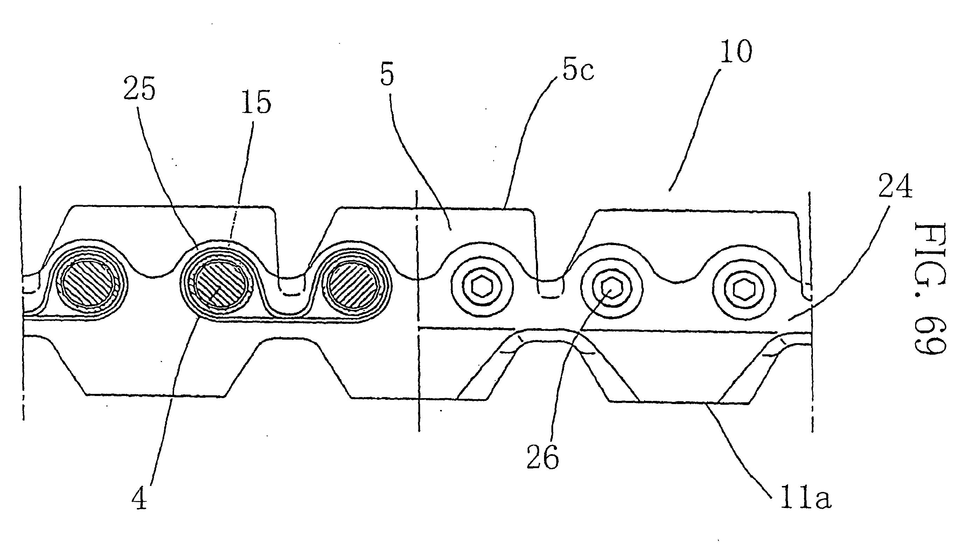

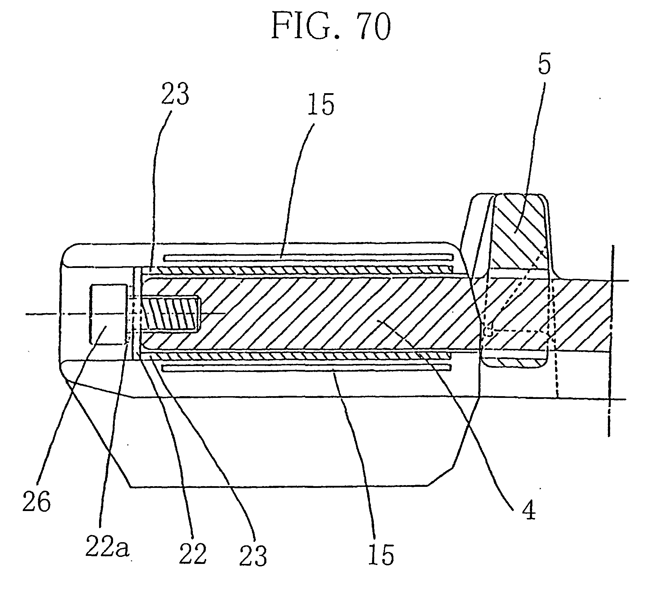

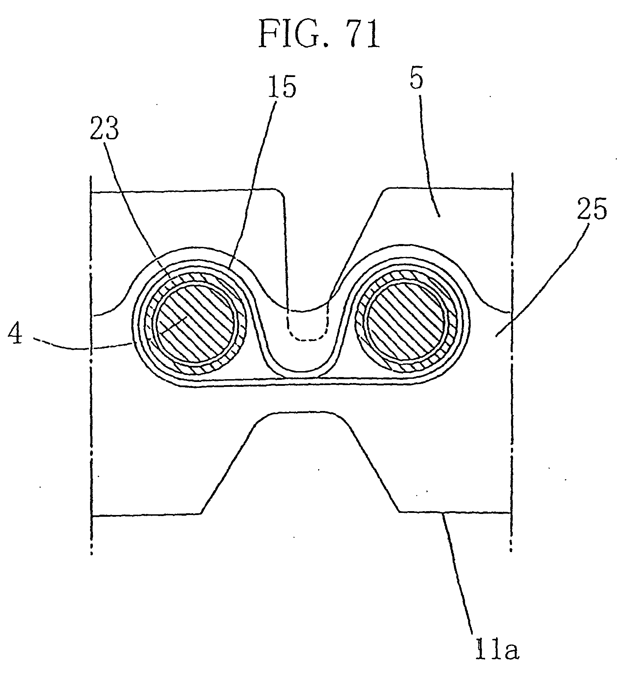

Next, a fifteenth embodiment of the present invention will be explained with use of FIG. **67** to FIG. **71**. FIG. **67** is a plan view of an inner circumference side of a rubber crawler of this embodiment, FIG. **68** is a sectional view taken along the X-X line in FIG. **67**, FIG. **69** is a section taken along the Y-Y line in FIG. **67**, FIG. **70** is a partial enlarged view of FIG. **68**, and FIG. **71** is a partial enlarged view of FIG. **69**.

The fifteenth embodiment is constructed by the skeleton part **6** constructed by the rod body **4** and the rectangular parallelepiped block 5, a belt bodies **25** in which pipes **23** and the connecting rings **15** are embedded in rubber portions **24**.

In this embodiment, the pipe **23** embedded in the rubber portion **24** of the belt body **25** is fitted onto the rod body **4** which is projectingly provided at the outer side end portion in the width direction of the rubber crawler of the rectangular parallelepiped block **5** constructing the rubber crawler skeleton part **6**, whereby the belt body **25** is made easily attachable and detachable to and from the rubber crawler skeleton part **6**.

A female screw for fitting a bolt is provided in an end portion of the rod body **4**, and the belt body **25** attached and detached to and from the outer side portion of the rectangular parallelepiped block **5** in the rubber crawler width direction is constructed to be attached to the rod body **4** with a hexagon socket head cap screw **26** via the washer **22**. In FIG. **70**, reference numeral **22a** denotes a spring washer.

According to the above-described construction, the belt body **2**5 formed at the outer side portion of the rectangular parallelepiped block **5** in the rubber crawler width direction is easily attachable and detachable.

A method of attaching this belt body **25** to the rod body **4** is not limited to this embodiment.

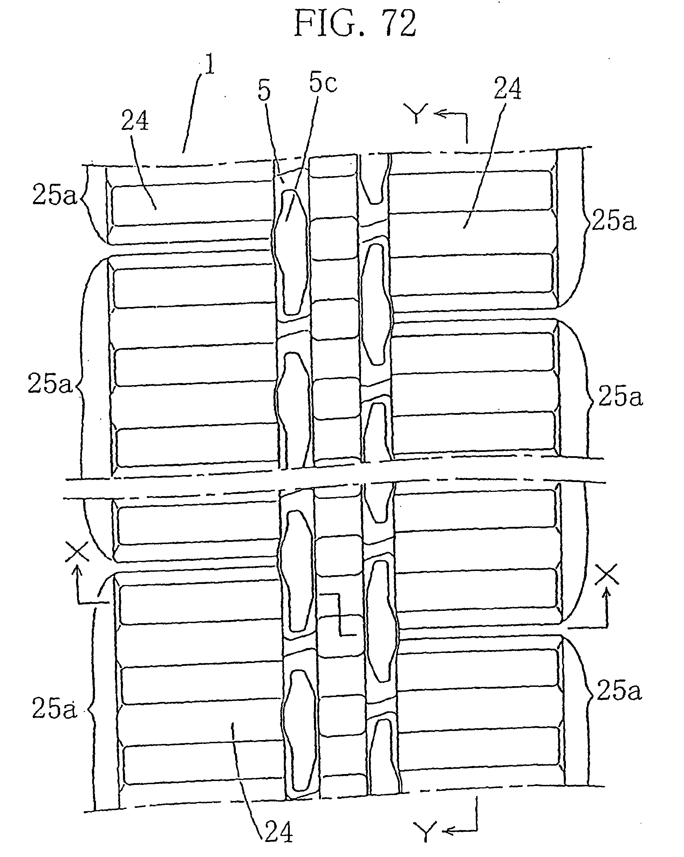

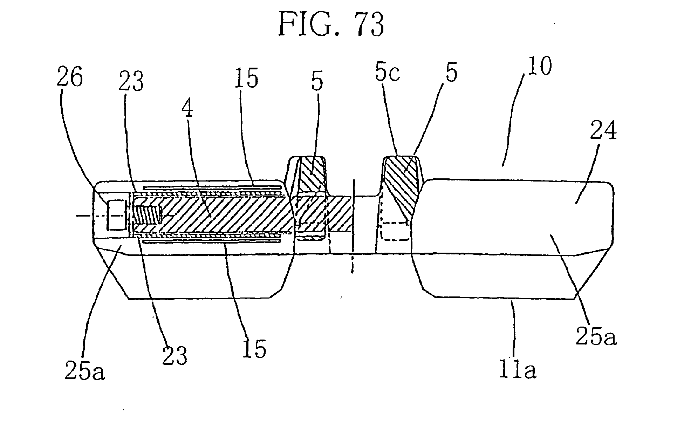

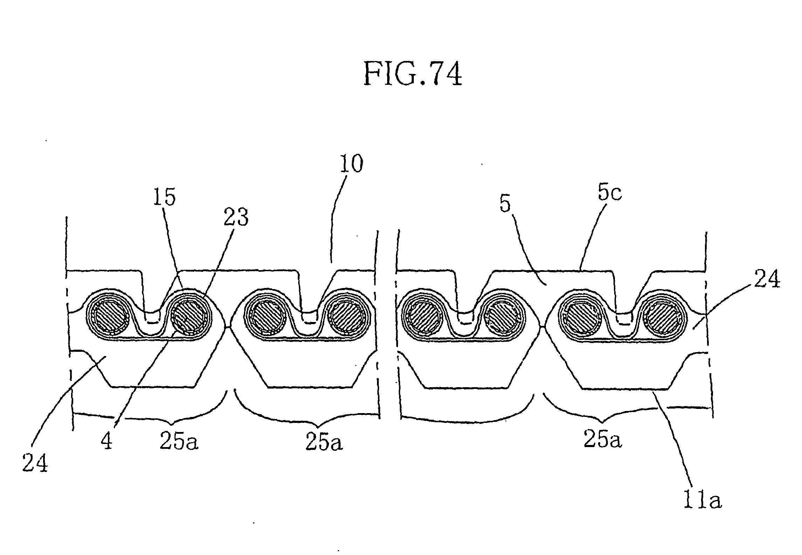

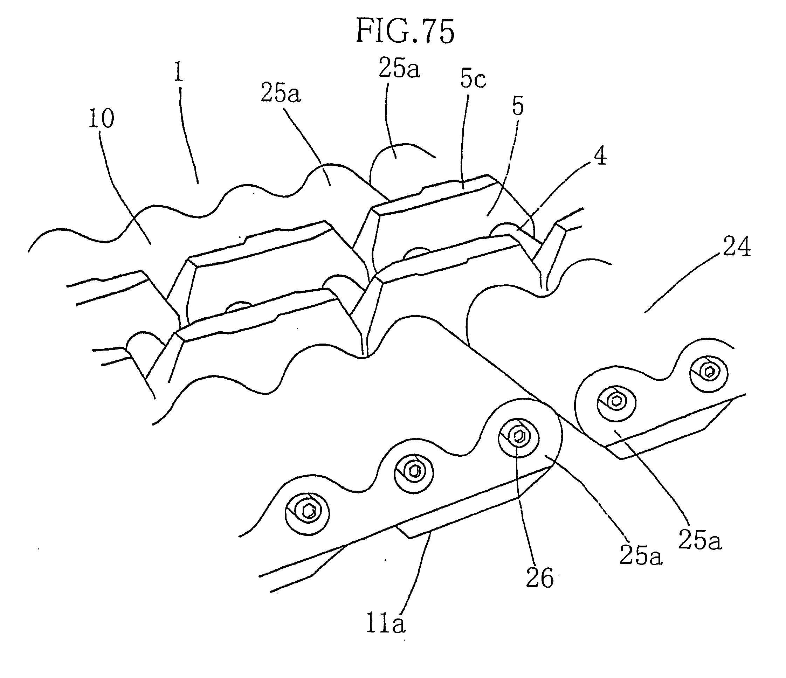

FIG. **72** to FIG. **75** show a sixteenth embodiment of the present invention. FIG. **72** is a plan view showing the inner circumference side **10** (non-ground contact surface side) of a rubber crawler of this embodiment, FIG. **73** is a sectional view taken along the X-X line in FIG. **72**, FIG. **74** is a sectional view taken along the Y-Y line in FIG. **72**, and FIG. **75** is a perspective view of the rubber crawler.

The sixteenth embodiment has the construction in which the belt body **25** formed at the outer side portion of the rectangular parallelepiped block **5** in the crawler width direction of the rubber crawler skeleton part **6** is divided into two belt bodies **25a** with ends.

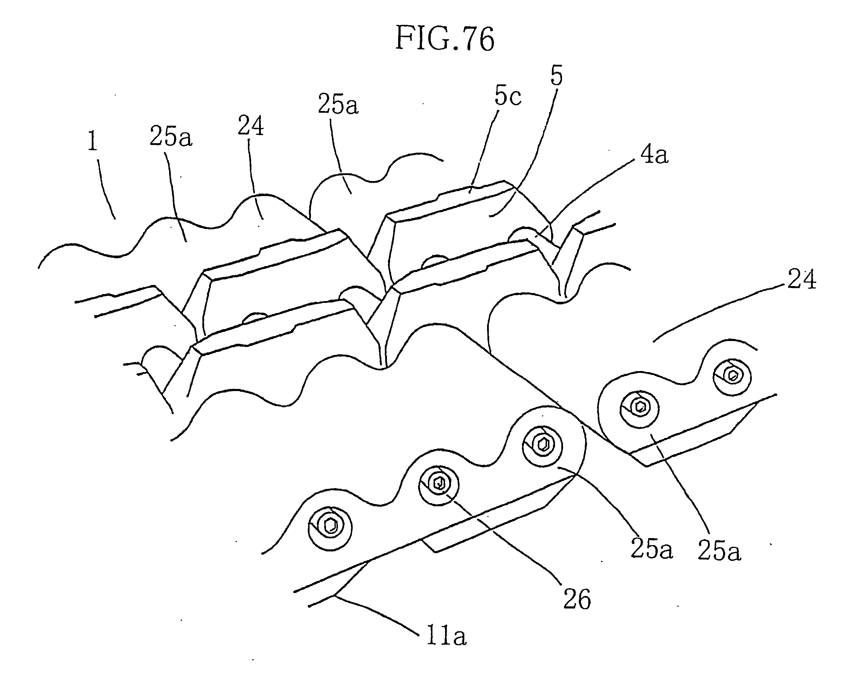

The position at which the belt body **25** is divided is not limited to this embodiment, but it is optional, and another embodiment of the division is shown in FIG. **76**.

The belt body **25** is not limited to the construction in which it is divided into two, but the construction in which the belt body **25** is divided into three or more belt bodies with ends, which include three or more rod bodies **4**, may be suitable.

According to the above-described construction, the rubber crawler of this embodiment is replaceable by a division unit when the belt body **25a** with an end at the outer side portion of the rectangular parallelepiped block **5** is damaged.

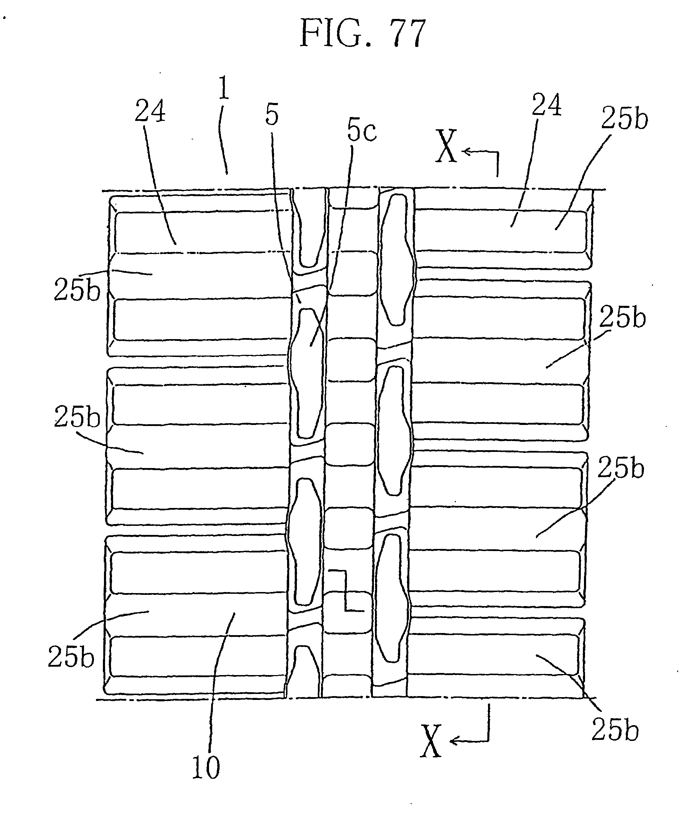

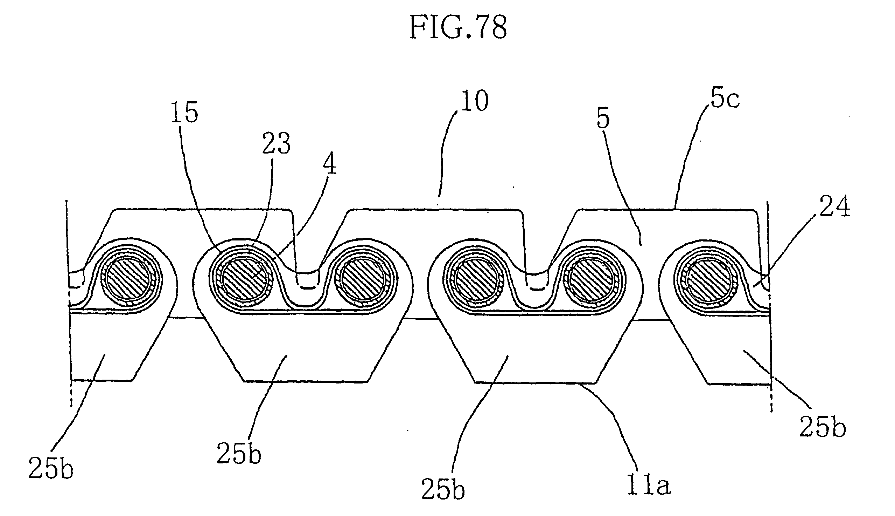

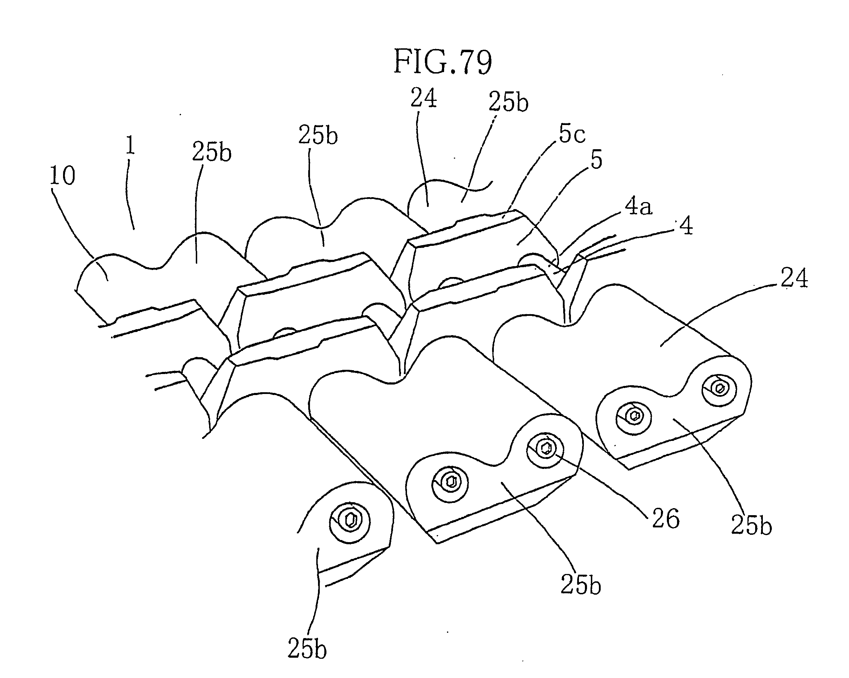

FIG. **77** to FIG. **79** show a seventeenth embodiment of the present invention. FIG. **77** is a plan view showing an inner circumference side of this embodiment, FIG. **78** is a sectional view taken along the X-X line in FIG. **77**, and FIG. **79** is a perspective view of a rubberf crawler.

In this embodiment, the belt body **25** formed at the outer side portion of the rectangular parallelepiped block **5** is divided into a belt unit **25b** of the length including two of the rod bodies **4**.

The belt unit **25b** may be arranged at the same position as the rectangular parallelepiped block **5** in the crawler circumference direction, or it may be arranged by being displaced by a half pitch (one pitch with respect to the rod body), but it is preferable to arrange it by displacing it by a half pitch.

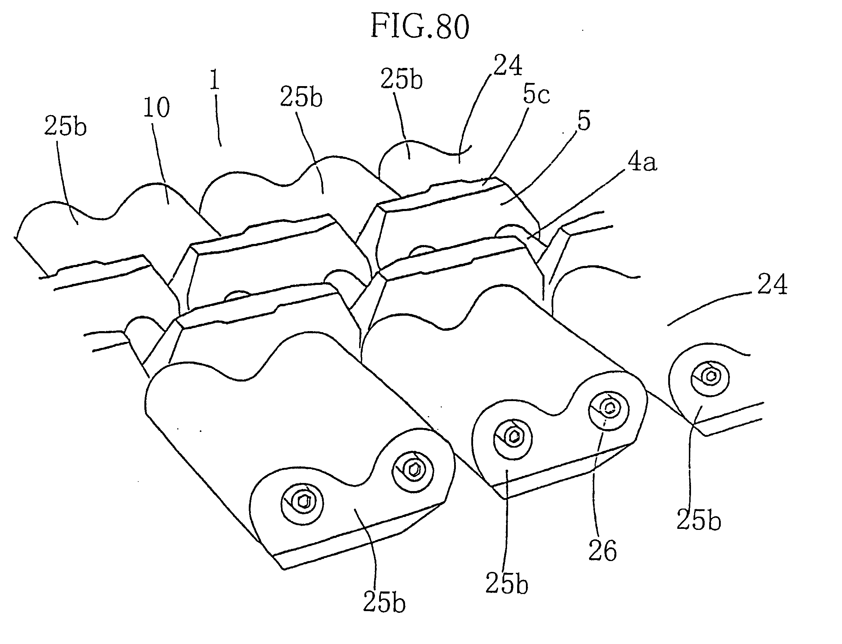

Another example of this embodiment is shown in FIG. **80**.

Partial repair is further facilitated for the belt unit **25b** in this embodiment as compared with the belt body **25a** with an end, and in addition, when it is wound around the driving wheel and the idler wheel, winding resistance can be reduced.

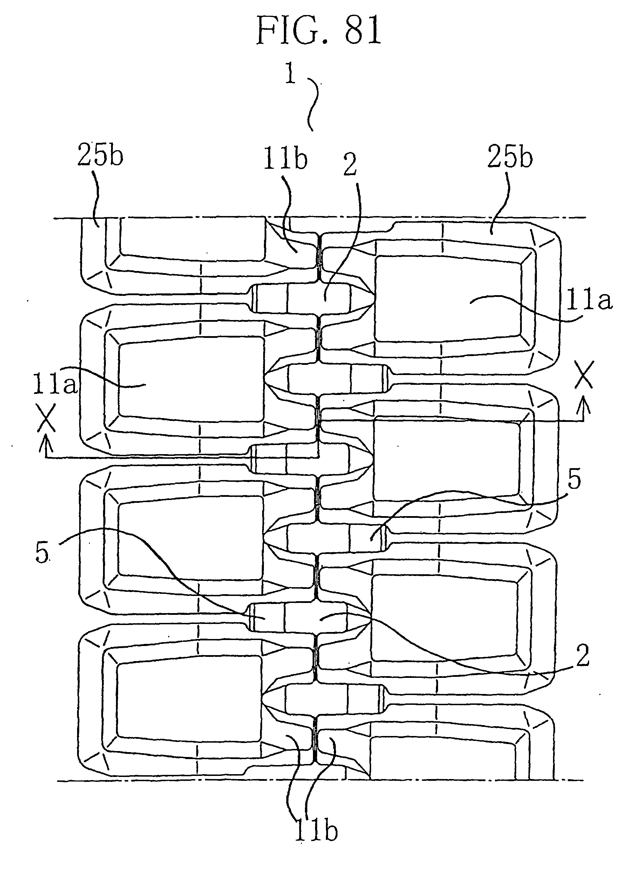

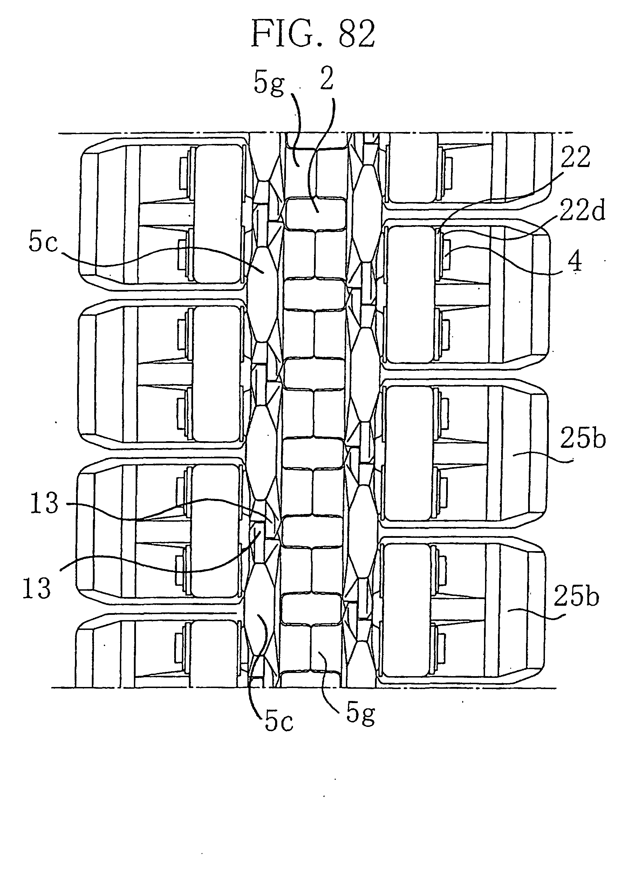

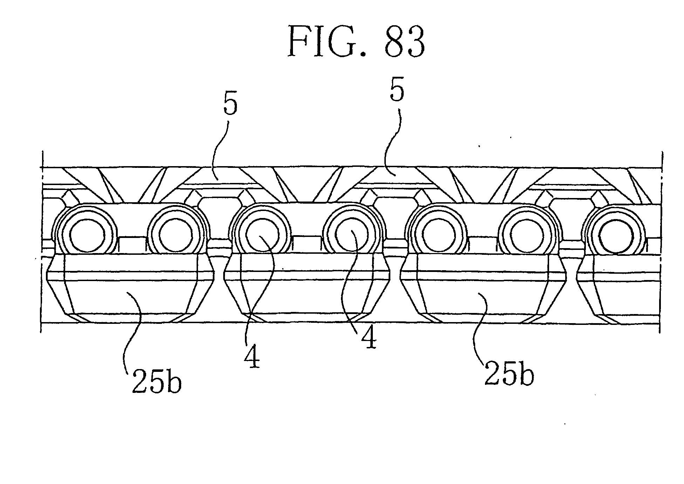

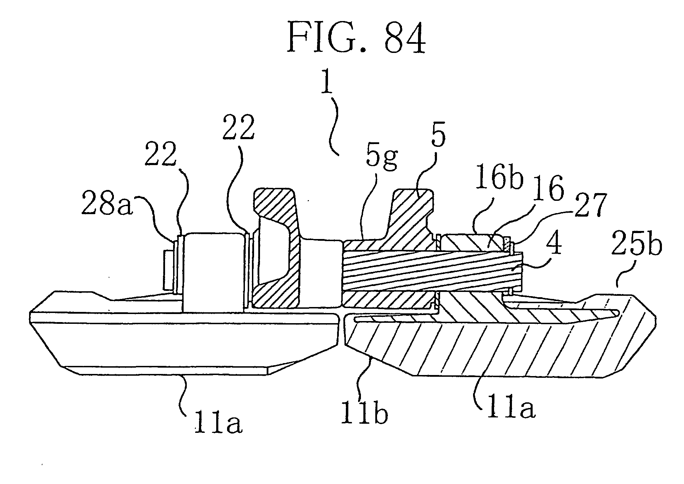

FIG. **81** to FIG. **89** show an eighteenth embodiment of the present invention. FIG. **81** is a plan view showing an outer circumference side of the rubber crawler **1**, FIG. **82** is a plan view showing an inner circumference side, FIG. **83** is a side view, and FIG. **84** is a sectional view taken along the X-X line in FIG. **81**.

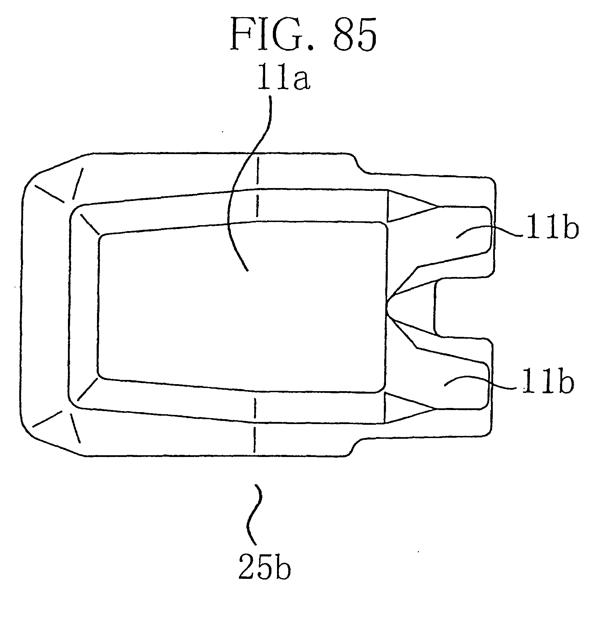

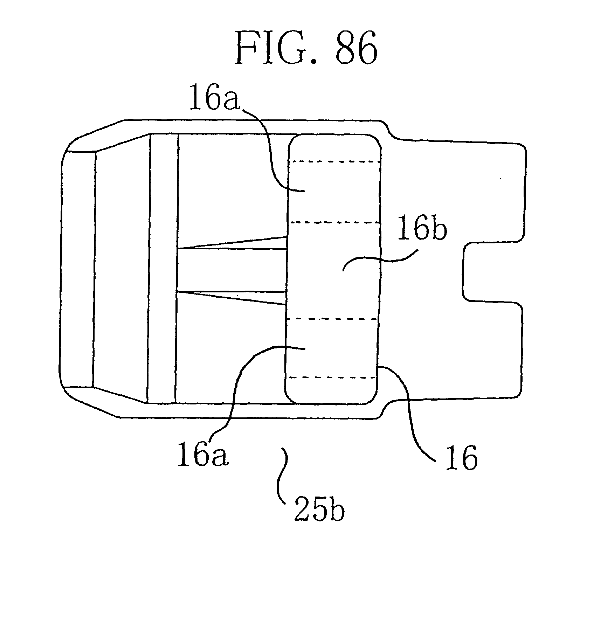

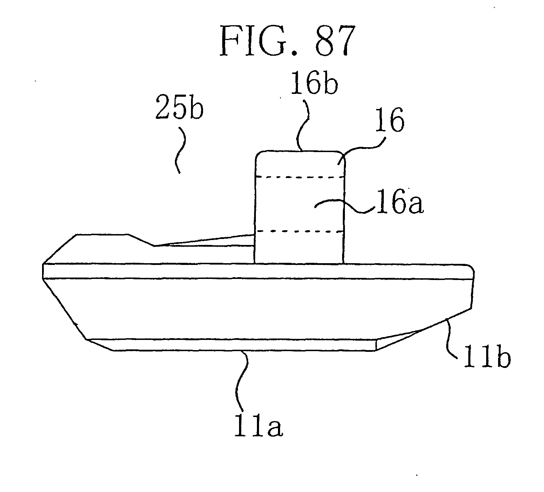

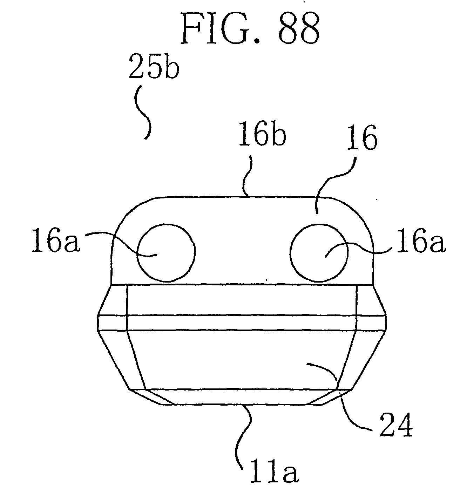

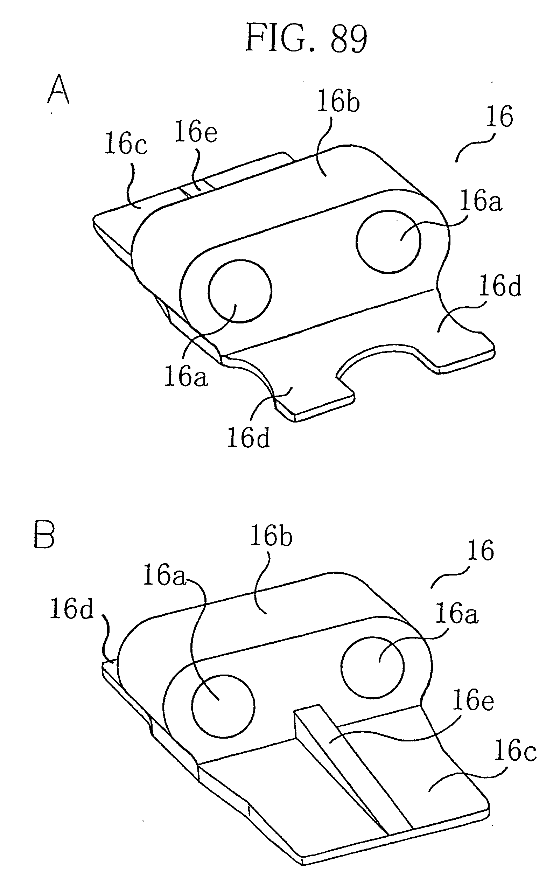

FIG. **85** is a plan view showing an outer circumference side of the belt unit **25b** constructing the rubber crawler in the eighteenth embodiment, FIG. **86** is a plan view of an inner circumference side, FIG. **87** is a side view, FIG. **88** is a front view, FIGS. **89A** and **B** are perspective views of the connecting block **16** embedded in the belt unit **25b**.

The rubber crawler of this embodiment has a bush **5g** integrally formed at the inner side in the width direction of the rectangular parallelepiped block **5**, and the bushes **5g** are joined together to set the space between the rectangular parallelepiped blocks **5**. The rubber crawler of this embodiment is formed so that the belt unit **25b** is made attachable and detachable to and from the rubber crawler skeleton part **6** constituted by the rod bodies **4** and the rectangular parallelepiped blocks **5**.

The connecting block **16** shown in FIGS. **89A** and **B** is embedded in the belt unit **25b** of the rubber crawler **1** of this embodiment, and is integrally formed by bonding the rubber elastic body **24** to this connection block **16** by vulcanization.

A ground contact lug **11a** and a middle lug **11b** are integrally formed at a belt unit **25b**. Further, a wing portion **16c** is projectingly provided at one side of both end portions of the connecting block **16** main body, and a central wing portion **16d** is projectingly provided at the other end portion, and a reinforcement rib **16e** is included in a center portion of the wing portion **16c** to reinforce the wing portion **16c**. A rolling contact portion **16b** for the track rollers is provided at the inner circumference side of the main body of the connecting block **16** so that the outer roller type of rollers and the like can roll thereon.

A method for attaching the belt unit **25b** of the eighteenth embodiment to the rod body **4** of the rubber crawler skeleton part **6** will be explained with use of FIG. **84**. The belt unit **25b** is attached by inserting the rod body **4** of the skeleton part **6** into the through-hole **16a** of the connecting block **16** which is embedded in the belt unit **25b**, placing the washer **22** between the rectangular parallelepiped block **5** of the skeleton part **6** and the belt unit **25b**, grooves **27** are provided at both end portions of the rod body **4** of the skeleton part **6**, the washer **22** is fitted into the inner side of the groove **27** in the crawler width direction, a C-shaped retaining ring **28a** is attached to the groove **27** with an exclusive tool to fix the belt unit **25b** so as not to be detached from the rod body **4**, so that the belt unit **25b** becomes attachable and detachable to and from the skeleton part **6** of the belt unit **25b**. A method for fixing the belt unit **25b** to the skeleton part **6** is not limited to the C-shaped retaining ring **28a**, and any method may be suitable if it is favorably fixed to the rod body **4** of the skeleton part **6**.

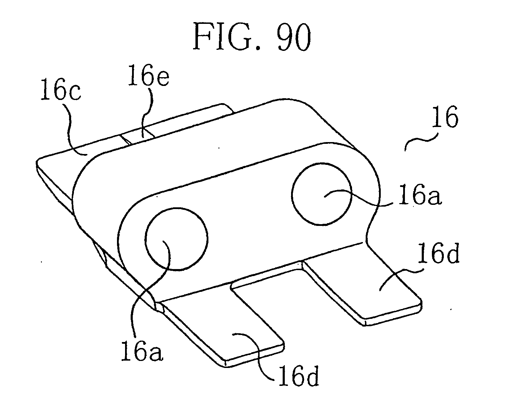

Another example of the connecting block **16** is shown in FIG. **90**, the central wing portion **16d** is formed only at the portion corresponding to the engaging part and is divided into two.

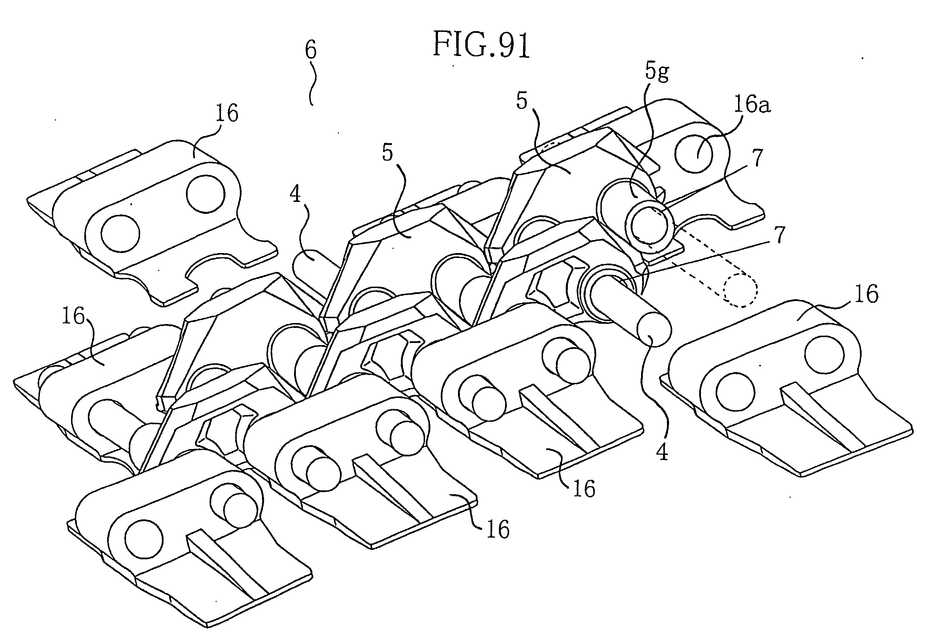

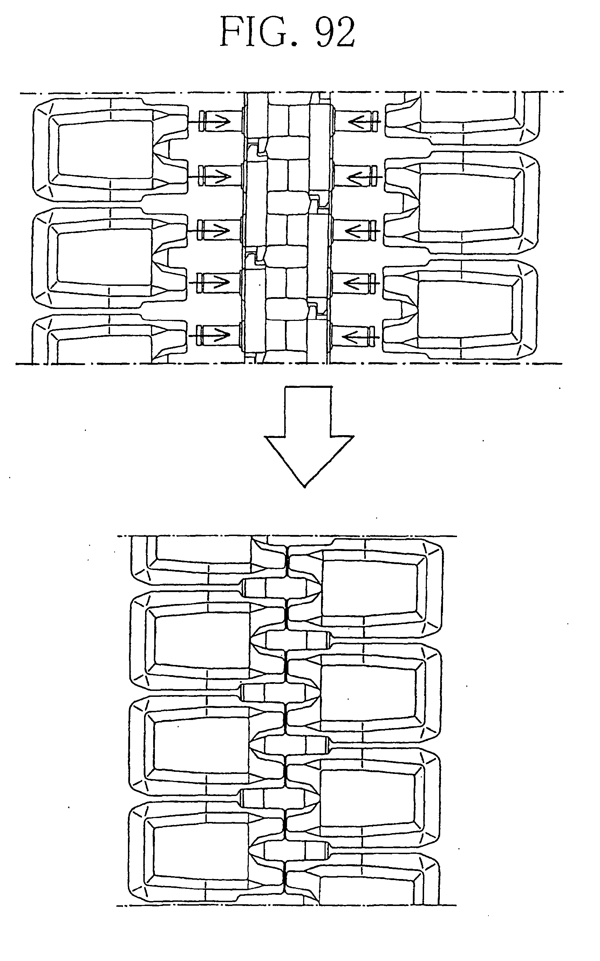

FIG. **91** is a perspective view explaining the state of combination of the skeleton part **6** (the rod bodies **4**, the rectangular parallelepiped blocks **5**, and the connecting blocks **16**) of the rubber crawler **1** of the eighteenth embodiment. FIG. **92** is a plan view of the ground contact side explaining attaching and detaching of the belt unit **25b**, in which the belt unit **25b** can be attached to the rubber crawler skeleton part **6** so as to be attachable and detachable, and when the ground contact lug **11a** and the middle lug **11b** are damaged, if the rod body **4** and the rectangular parallelepiped block **5** are usable, a rubber lug portion is replaced by replacing only the belt unit **25b**, thus making it advantageous not only in cost but also in the problem of disposal, and in the transportation cost.

Further, the connecting block **16** embedded in the used belt unit **25b** after replacement is reclaimed, and it is easy to bond the rubber elastic body **24** to it by vulcanization once again, thus making it possible to provide a rubber crawler that is also friendly to the environment in terms of recycling.

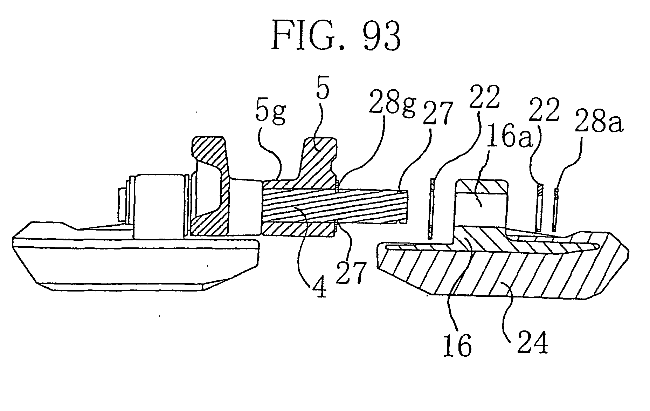

FIG. **93** is another example showing a method for fixing the belt unit **25b** to the rod body **4** of the rubber crawler skeleton part **6**, in the rod body **4**, the grooves **27** are formed at a position corresponding to the outer end portion of the rectangular parallelepiped block **5** in the crawler width direction, and at a position corresponding to the outer end portion of the belt unit **25b** in the crawler width direction, the C-shaped retaining ring **28a** is attached to the groove **27** with an exclusive tool to fix the belt unit **25b** so as not to be detached from the rod body **4**, and in addition to this, the C-shaped retaining ring **28a** is also attached to the groove **27** corresponding to the outer end portion of the rectangular parallelepiped block **5** in the crawler width direction, thus making it possible to prevent the rectangular parallelepiped block **5** of the rubber crawler skeleton part **6** from being detached from the rod body **4**, and causing no trouble in the replacing operation, when the rubber lug portion of the belt unit **25b** is damaged and replaced.

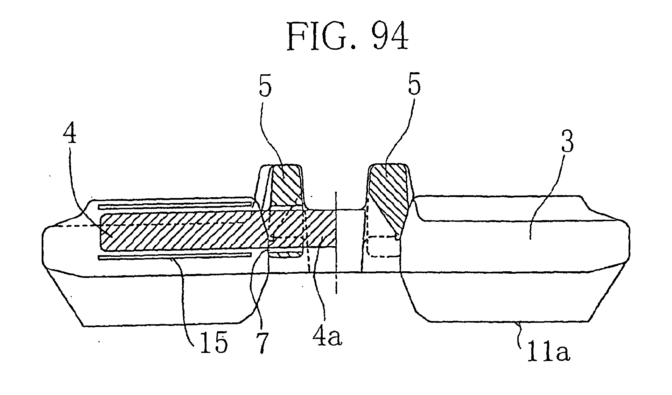

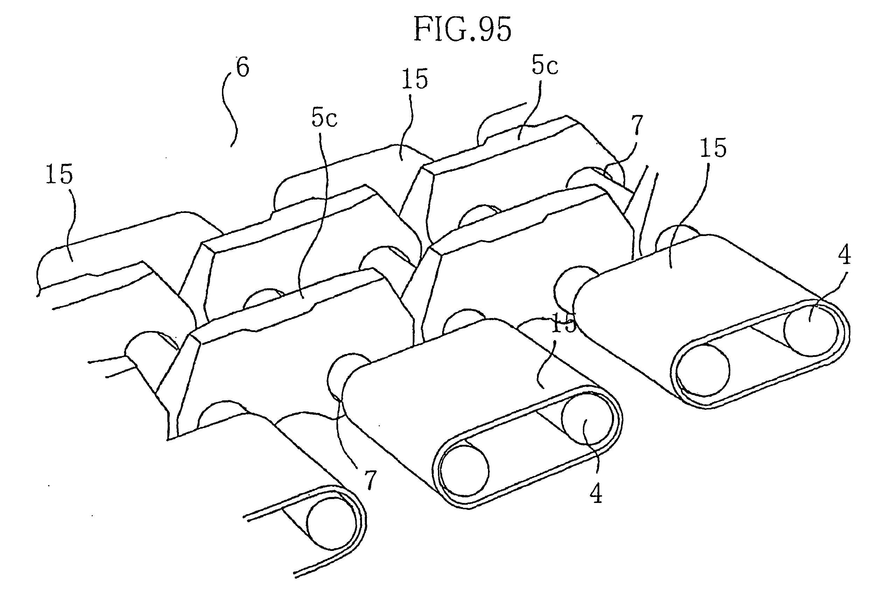

Next, a nineteenth embodiment of the present invention will be explained with use of FIG. **94** and FIG. **95**. FIG. **94** is a sectional view of the rubber crawler **1** of the nineteenth embodiment in the crawler width direction, and FIG. **95** is a view of combination of the rubber crawler skeleton part **6** (the rod bodies **4**, the rectangular parallelepiped blocks **5**, and the connecting rings **15**) which are embedded in the rubber crawler main body **3**.

In the rod body 4 of this embodiment, both end portions in the crawler width direction are located at a center side from the outer end portion of the connecting ring **15** in the rubber crawler width direction. As a result, tearing of an edge can be prevented without using a rod body inclined surface **4d** on the ground contact surface side, which is provided at the rod body **4** to prevent the breakage (edge tearing) of the both end portions in the rubber crawler width direction that is caused by the rubber crawler riding on the curbstones or the like on the road surface, and the production cost of the rod body **4** is reduced, thus making it possible to produce the rubber crawler at low cost.

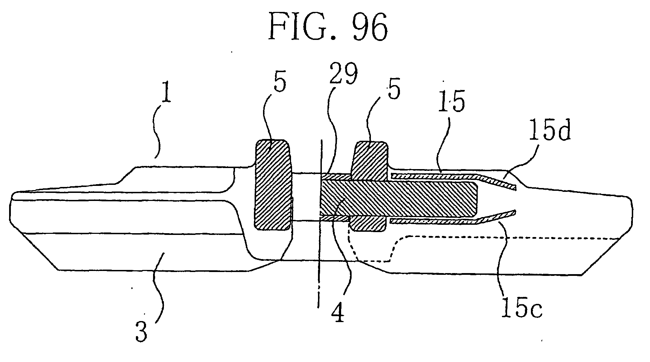

Another example of the nineteenth embodiment of the present invention is shown in FIG. **96**. This embodiment is characterized in that as for the outer end portion of the connecting ring **15** in the rubber crawler width direction, an end portion at the outer circumference side is folded toward the inner circumference side to provide an inclined surface **15c** at the outer circumference side, and an end portion at the inner circumference side is folded toward the outer circumference side, whereby an inclined surface **15d** is provided at the inner circumference side.

As a result, the inclined surface area increases as compared with the one provided with the inclined surface **4d** at the rod body **4**, and breakage (edge tearing) of both end portions in the rubber crawler width direction, which is caused by the rubber crawler riding on a curbstone and the like on the road surface is prevented further effectively, thus improving durability of the both end portions in the rubber crawler width direction.

In the nineteenth embodiment, the inclined surface **15d** is provided, but only the inclined surface **15c** at the outer circumference side may be used without providing the inclined surface **15d** at the inner circumference side.

Reference numeral **29** in the drawing is a bush fitted onto the machine body **4**. In this embodiment, instead of providing an integral bush **5g** at the rectangular parallelepiped block **5**, the discrete bush **29** is fitted.

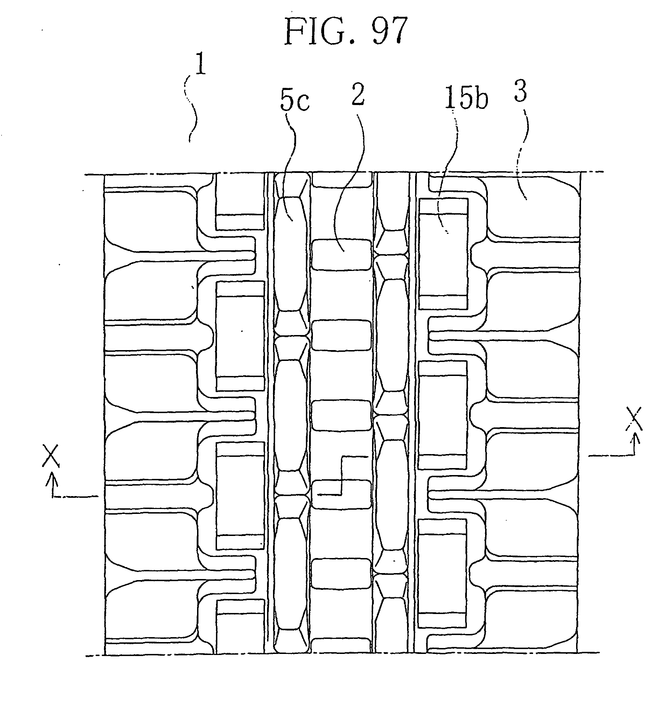

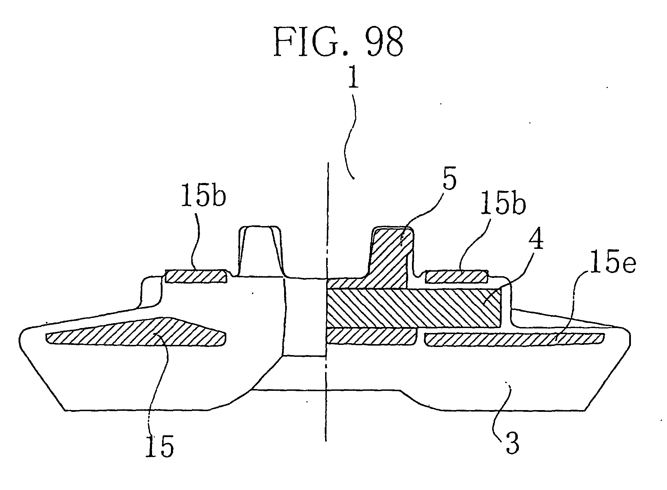

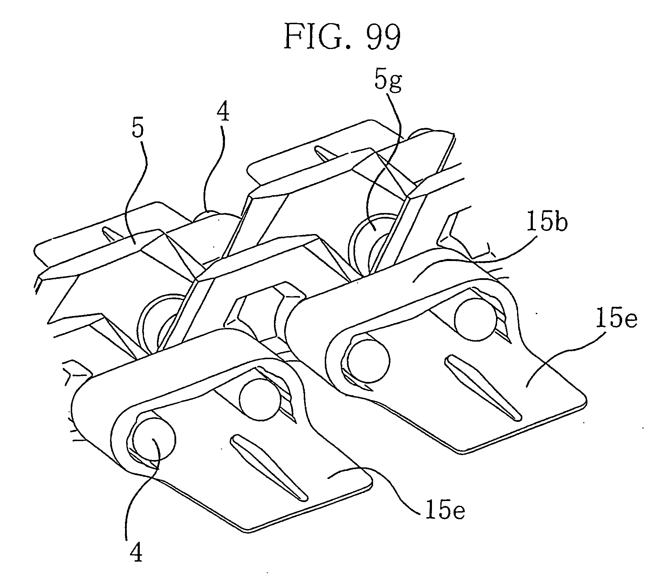

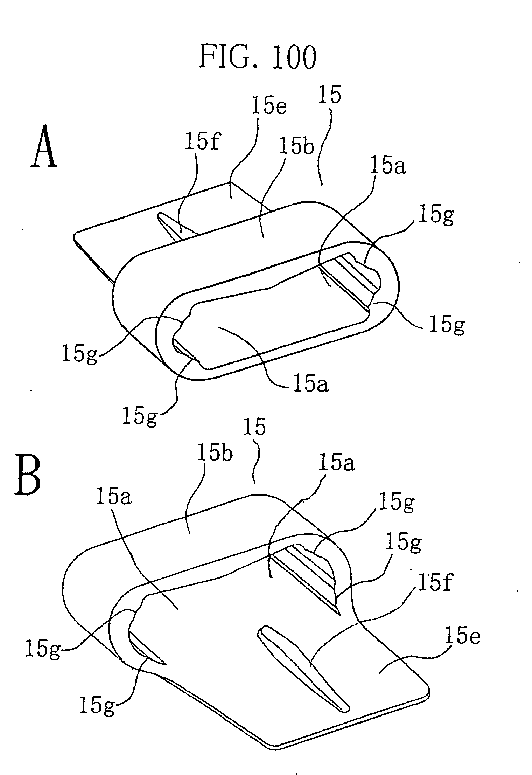

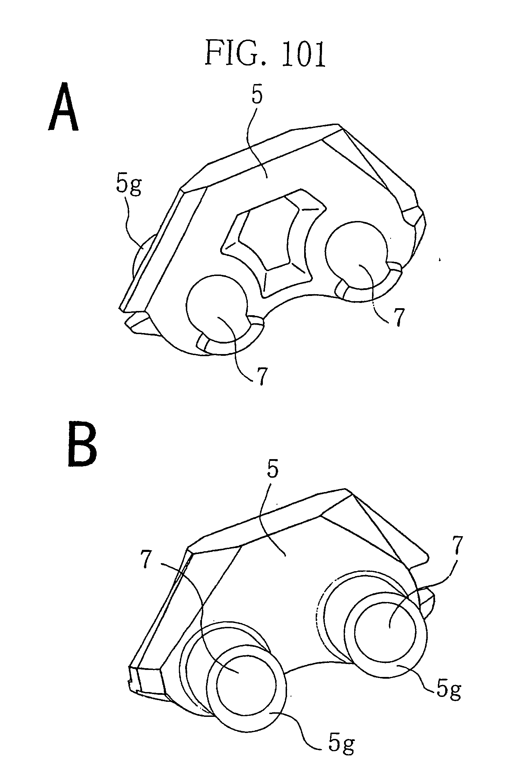

FIG. **97** to FIG. **101** are the drawings showing the rubber crawler **1** of the twentieth embodiment of the present invention, FIG. **97** is a plan view showing the inner circumference of the rubber crawler **1** of the twentieth embodiment, FIG. **98** is a sectional view taken along the X-X line in FIG. **97**, FIG. **99** is a perspective view of combination of a core metal (the rod bodies **4**, the rectangular parallelepiped blocks **5** and the connecting rings **15**) being the crawler skeleton part **6** which is provided in the rubber crawler main body **3**, FIGS. **100A** and **B** are perspective views of the connecting ring **15**, and FIGS. **101A** and **B** are perspective views of the rectangular parallelepiped block **5**.

The connecting ring **15** of this embodiment is formed so that the width of the connecting ring **15** in the crawler width direction is made small, the wing portion **15e** is provided only at the outer circumference side to make the outer circumference side of the connecting ring **15** wider and the inner circumference side narrower. This is to increase resistance to deformation by increasing the area of the ground contact side to which a load is always applied. The inner circumference side to which a load is not applied is made narrower, so that the weight is reduced and assembly operation is facilitated. By reducing the amount of the materials, the production cost is reduced. Further, the rod body **4** is also made shorter, the weight is reduced and the material cost is further reduced.

In this embodiment, on the inner circumference side of the rubber crawler in which the width of the connecting ring **15** being reduced, the rubber part is similarly reduced in width at both end portions in the width direction to reduce weight and the amount of material, thus reducing the cost.

A rib **15f** is provided at the inner circumference side of the wing portion **15e** of the connecting ring **15** to reinforce the wing portion **15e** of the connecting ring **15**. Further, the rolling contact surface **15b** for the rollers is provided on the inner circumference side of the connecting ring **15** so that the outer roller type of rollers and the like can roll thereon, and further, a stabilizer projection **15g** is provided in the insertion portion **15a**, so that the rod body **4** is prevented from swinging more than a fixed amount in the vertical (the ground contact surface to the non-ground contact surface side) direction and in the extending direction in the crawler circumference direction.

Further, the bush **5g** is integrally formed at the rectangular parallelepiped block **5** of this embodiment, and the number of components is reduced, thus facilitating assembly and reducing cost.

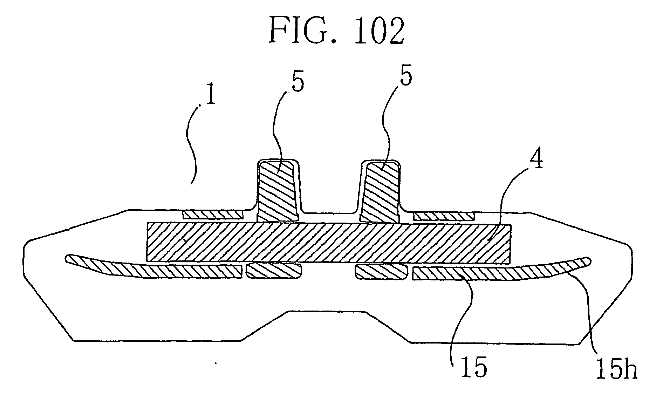

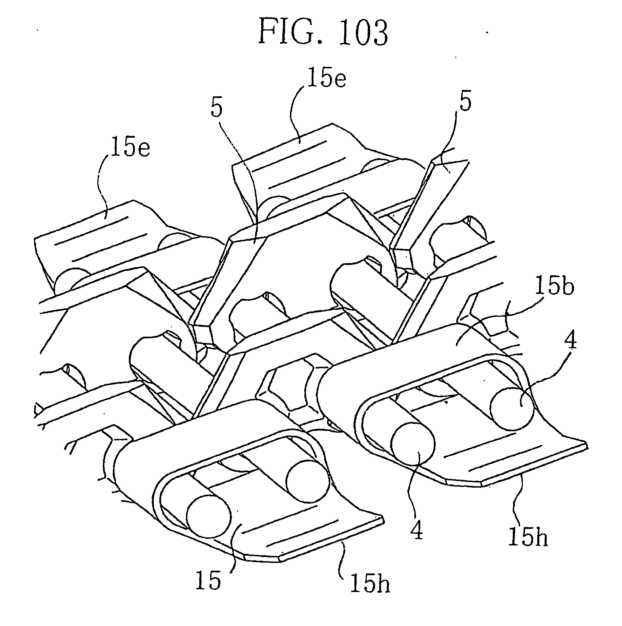

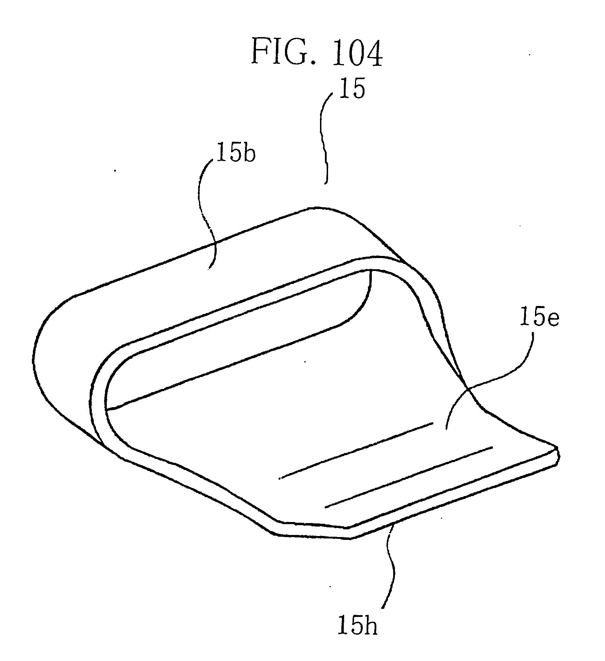

FIG. **102** to FIG. **104** show a twenty-first embodiment of the present invention. FIG. **102** is a sectional view in the crawler width direction of a rubber crawler, FIG. **103** is a perspective view of combination of the rubber crawler skeleton part **6** (the rod bodies **4** and the rectangular parallelepiped blocks **5**, and the connecting rings **15**) which is provided in the rubber crawler main body **3**, and FIG. **104** is a perspective view of the connecting ring **15** which is embedded in the rubber crawler main body **3**.

In the twenty-first embodiment, an end portion of the wing portion **15e** of the connecting ring **15** in the width direction of the rubber crawler is folded to the inner circumference side to provide an inclined surface **15h** at the outer circumference side, so that breakage (edge tearing) of both the end portions in the width direction of the rubber crawler, which is caused by the rubber crawler riding on a curbstone and the like of the road surface, is prevented.

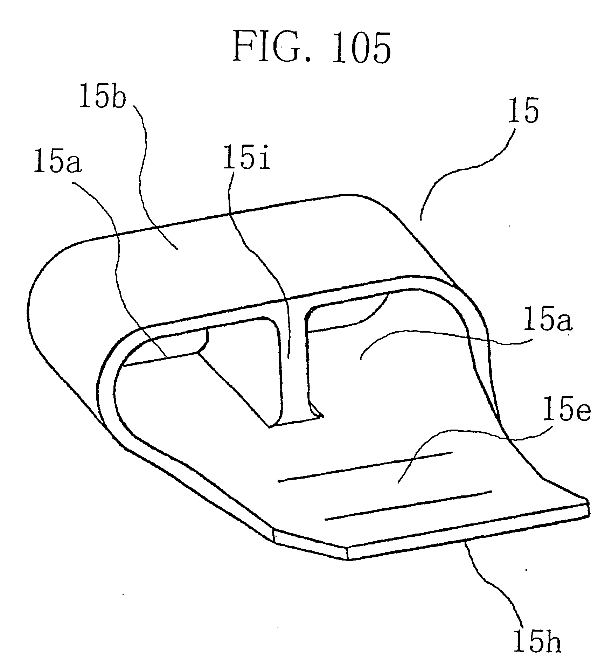

FIG. **105** is a view showing another example of the twenty-first embodiment of the present invention, which is a perspective view of the connecting ring **15** embedded in the rubber crawler main body **3**.

In the connecting ring **15** of this embodiment, a center rib **15i**, which connects the outer circumference (ground contact surface) side and the inner circumference (non-ground contact surface) side, is formed in a center part of the connecting ring **15**, whereby the connecting ring **15** is reinforced, and the strength of the connecting ring is improved, thus making it effective when the connecting ring **15** is used for the outer roller type of crawler device. By providing the center rib **15i**, the connecting ring **15** can be reinforced. In addition, it is possible to decrease the wall thickness of the connecting ring **15**, whereby the production cost is reduced and the connecting ring at low price with high strength can be produced.

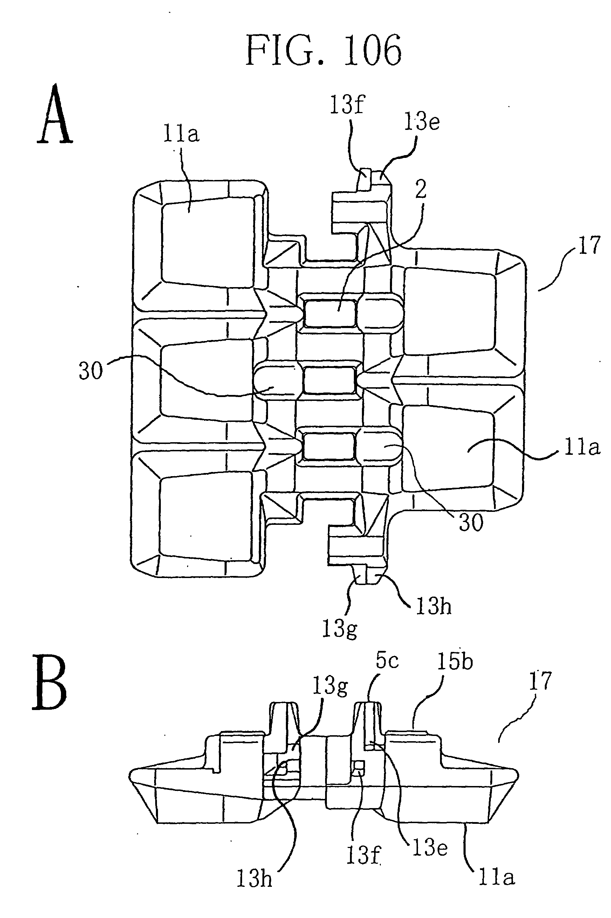

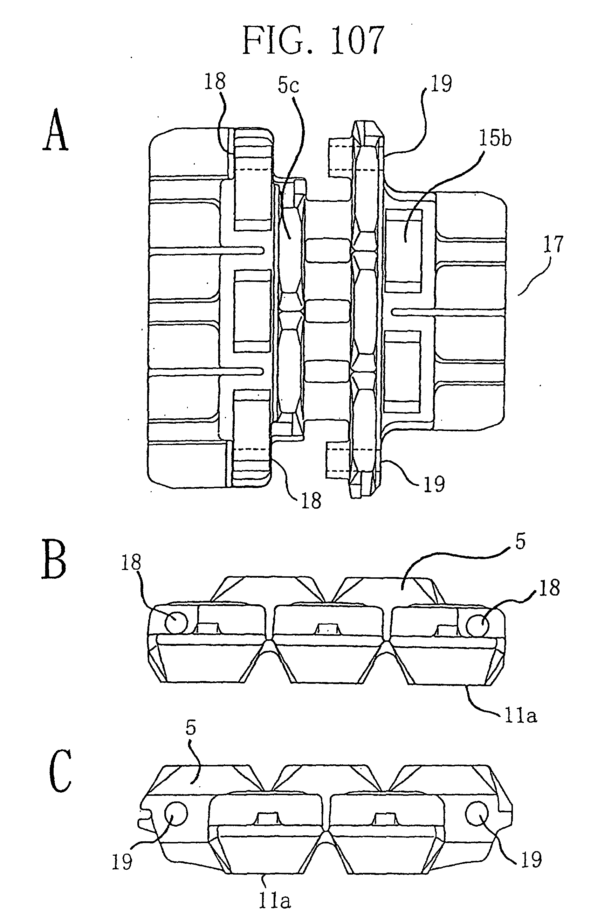

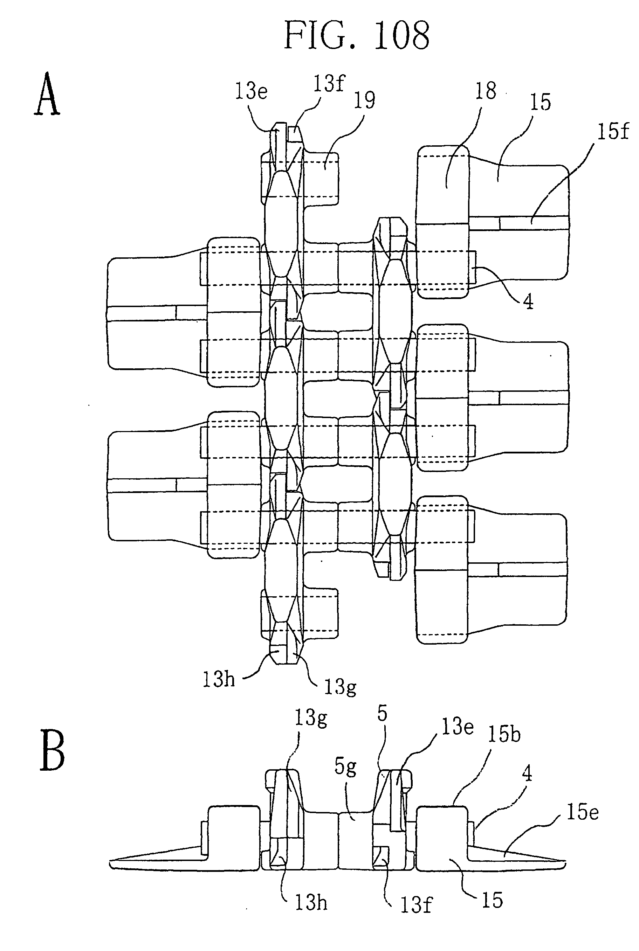

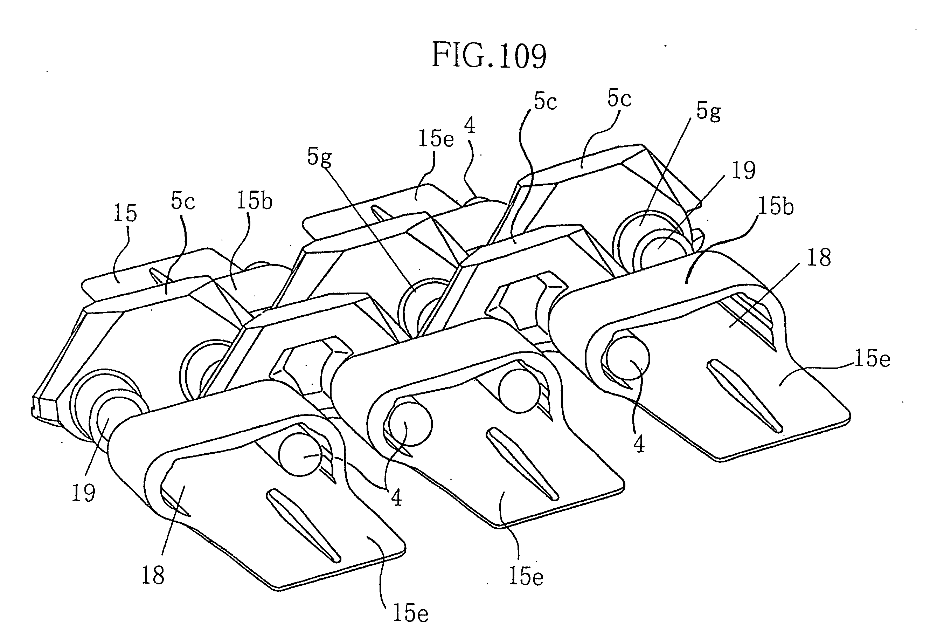

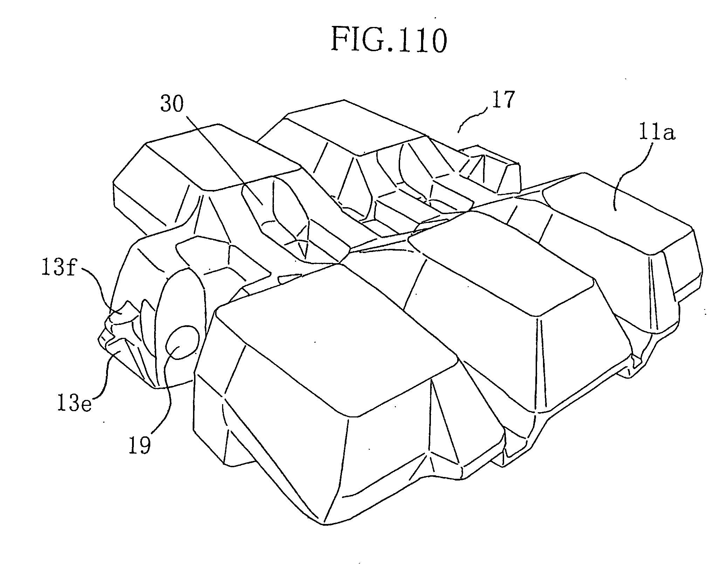

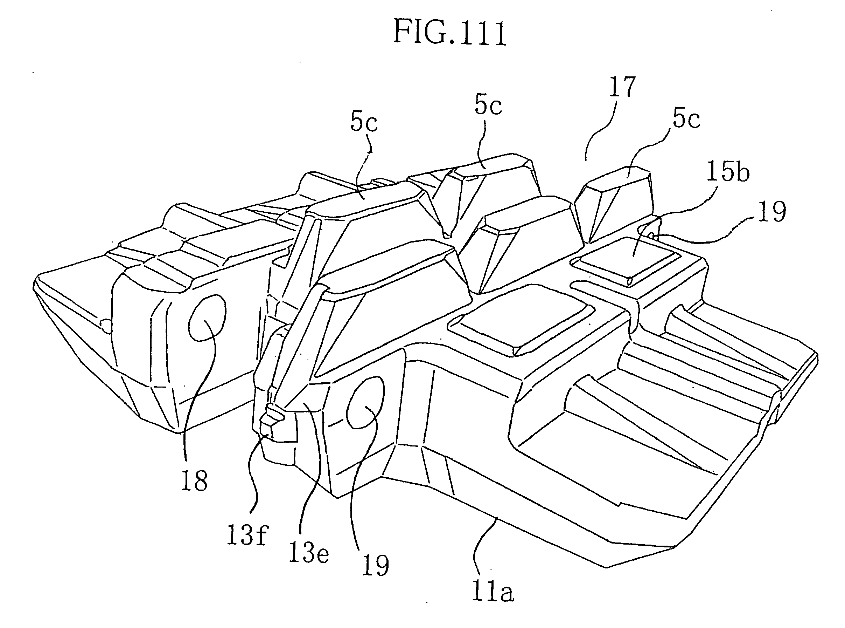

Next, a twenty-second embodiment of the present invention will be explained with use of FIG. **106** to FIG. **111**. FIGS. **106A** and **B**, and FIGS. **107A** to **C** are views each showing a rubber crawler unit **17** of the twenty-second embodiment of the present invention, FIG. **106A** is a plan view showing an outer circumference side, **B** is a front view, FIG. **107A** is a plan view showing an inner circumference side, and **B** and **C** are side views. FIGS. **108A** and **B**, and FIG. **109** are views showing a core metal (the rod bodies **4**, the rectangular parallelepiped blocks **5**, and the connecting rings **15**) which is the crawler skeleton part **6** that is embedded in the rubber crawler unit **17**, FIG. **108A** is a plan view, **B** is a front view, and FIG. **109** is a perspective view. Further, FIG. **110** and FIG. **111** are perspective views of the rubber crawler unit **17**, FIG. **110** is a perspective view of the outer circumference side, and FIG. **111** is a perspective view of the inner circumference side.

In the rubber crawler unit **17** of this embodiment, the length of the rod body **4** is about half the length of the length of the crawler width, and the end portion of the rod body **4** is not located at the end portion in the width direction of the crawler, whereby the end portion of the rod body can be prevented from being damaged by curbstones, the obstacles or the like on the traveling road surface, thus making it possible to prevent the fixtures at the connecting parts at both end portions in the circumference direction of the rubber crawler unit **17** from being damaged, and prevent the connecting part of the rubber crawler unit **17** from being detached by damage of the connecting part.

Reference numeral **30** in the drawing denotes a concave groove provided in a rug ground contact surface.

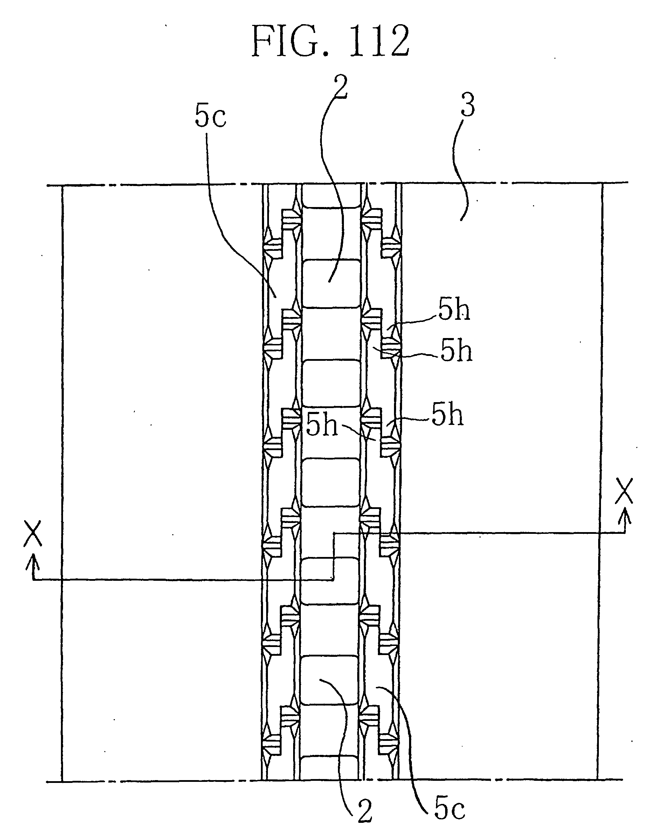

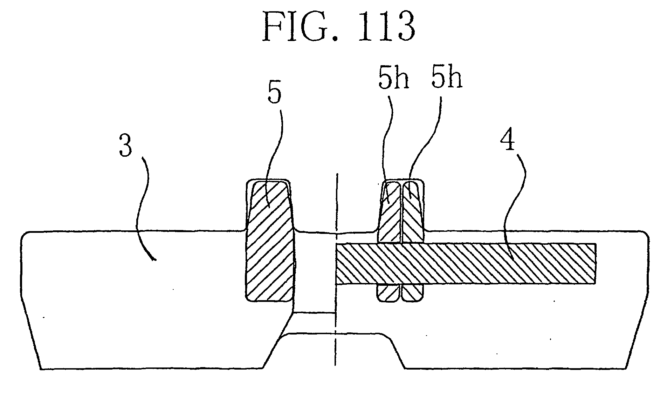

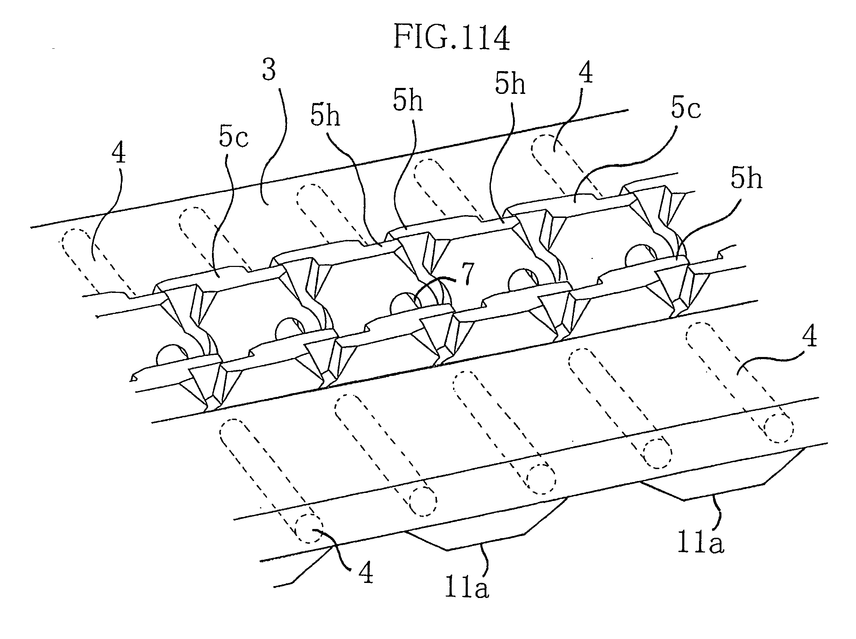

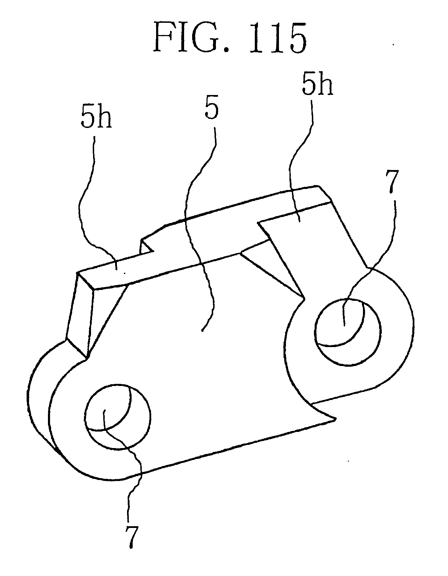

Next, a twenty-third embodiment of the present invention will be explained with use of FIG. **112** to FIG. **115**. FIG. **112** is a plan view of the inner circumference side of a rubber crawler, FIG. **113** is a sectional view taken along the X-X line in FIG. **112**, FIG. **114** is a perspective view of the inner circumference side of the rubber crawler, and FIG. **115** is a perspective view of the rectangular parallelepiped block **5** of this embodiment.

The rectangular parallelepiped block **5** of this embodiment is formed so that the wall thickness of the through-hole region is thinner than the center part of the rectangular parallelepiped block **5** by providing a step portion **5h** at the through-hole **7** region as shown in FIG. **115**. The step portions **5h** are formed to be in the opposite directions to each other at the front and the rear in the longitudinal direction of the rectangular parallelepiped block, and as shown in FIG. **112**, the rectangular parallelepiped blocks **5** are placed to face each other with the sprocket engaging holes **2** between them, the step portions **5h** of the adjacent rectangular parallelepiped block **5** are overlaid on each other, the rod bodies **4** are inserted through the thorough-holes **7** of the overlaid step portions **5h**, the rod bodies **4** are connected with the rectangular parallelepiped block **5** to construct the rubber crawler skeleton part **6** in an endless form, which is provided in the rubber crawler main body **3**.

This embodiment does not have to include connecting rings or reinforcement layers, since the rod body is connected with two of the rectangular parallelepiped blocks and the rod body is firmly connected.

Naturally, in this embodiment, it is also possible to include reinforcement layers and the connecting rings, and the rigidity of the rubber crawler can be further enhanced in this manner.

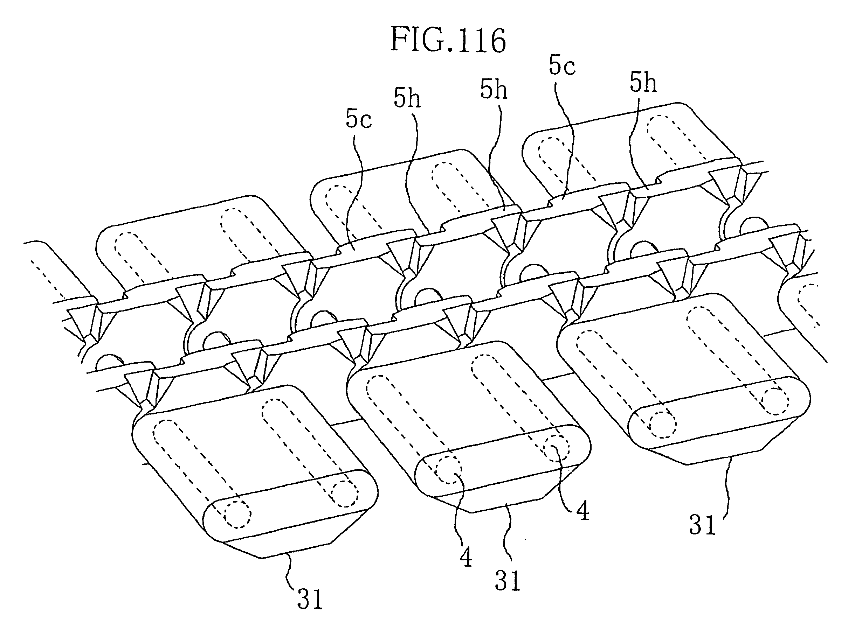

FIG. **116** shows a twenty-fourth embodiment of the present embodiment, which is the drawing showing another example of the twenty-third embodiment, and is a perspective view of the inner circumference side of a rubber crawler.

In the rubber crawler of the twenty-fourth embodiment, the rubber crawler main body part in the twenty-third embodiment does not continue, but it is divided into ground contact lug parts **31** including two of the adjacent rod bodies **4**, and they are arranged in a zigzag fashion displaced by one pitch at the left and the right in the width direction of the rubber crawler.

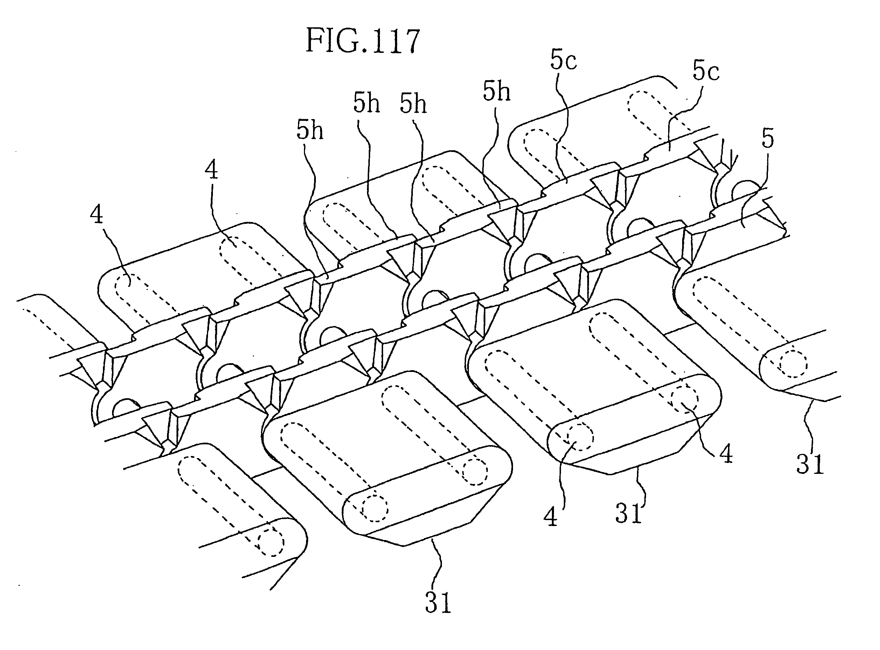

FIG. **117** is the drawing showing another example of the twenty-fourth embodiment, and is a perspective view of the inner circumference side of the rubber crawler.

In this embodiment, the ground contact lug parts **31** of the rubber crawler are arranged at the same position on the left and right in the width direction of the crawler.

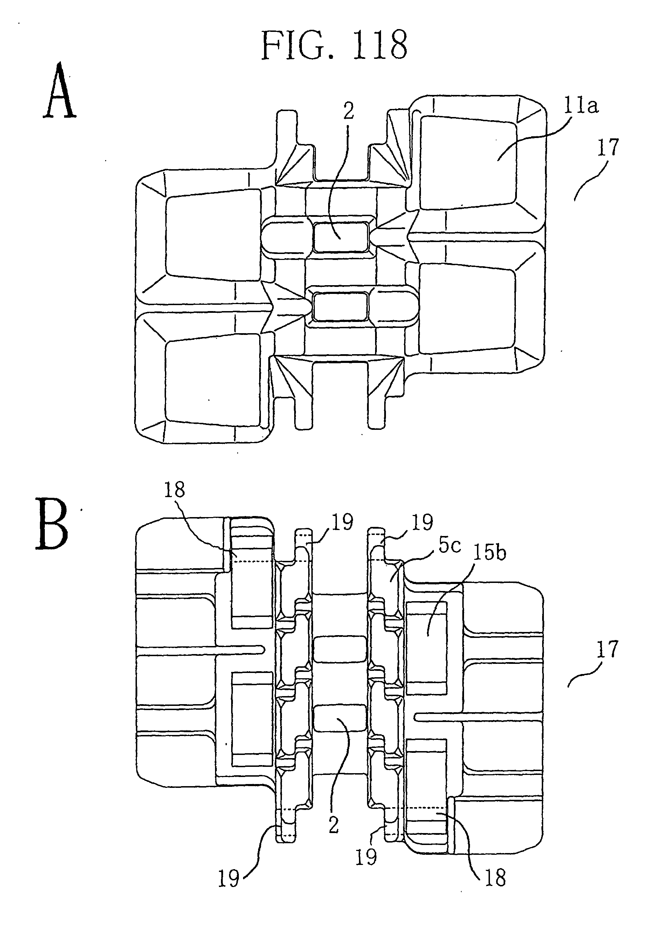

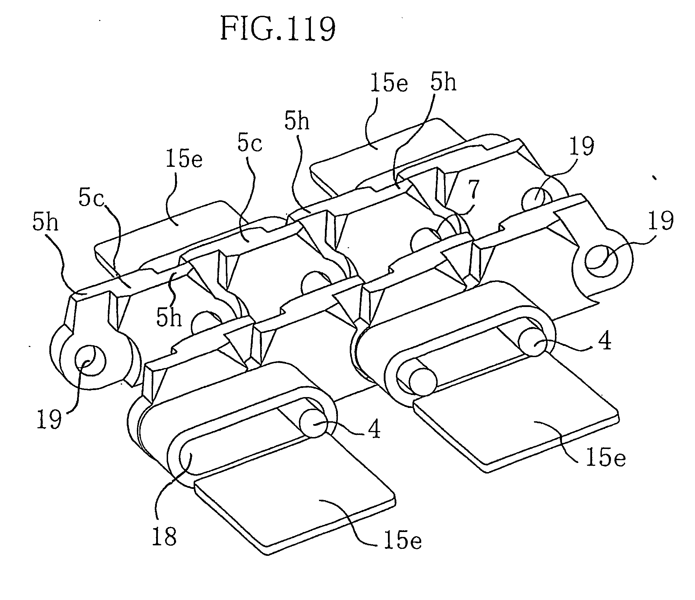

A twenty-fifth embodiment of the present invention will be explained with use of FIG. **118** and FIG. **119**. FIG. **118A** is a plan view showing the outer circumference (ground contact surface) side of the rubber crawler unit **17** of the twenty-fifth embodiment, **B** is a plan view showing the inner circumference (non-ground contact surface) side, and FIG. **119** is a perspective view of combination of the skeleton part **6** (the rod bodies **4**, the rectangular parallelepiped blocks **5**, and the connecting rings **15**) which is embedded in the rubber crawler unit **17**.

The twenty-fifth embodiment is the rubber crawler unit **17** having the construction in which the step portions **5h** are provided at the region of the through-holes **6** of the rectangular parallelepiped blocks **5**, so that the wall thickness of the through-hole regions is formed to be thinner than the center parts of the rectangular parallelepiped blocks **5**, by using the rectangular parallelepiped blocks **5** which is formed so that the step portions **5h** are in the opposite direction at the front and the rear in the longitudinal direction of the rectangular parallelepiped block **5**, the rectangular parallelepiped blocks **5** are placed to face each other with the sprocket engaging holes **2** between them, the step portions **5h** of the adjacent rectangular parallelepiped blocks **5** are overlaid on each other, the rod bodies **4** are inserted through the through-holes **7** of the overlaid step portions **5h**, and the rod bodies **4** are connected with the rectangular parallelepiped blocks **5**, whereby the rubber crawler skeleton part is formed.

In the rubber crawler unit **17** of this embodiment, connecting rectangular parallelepiped block through-holes **19** and connecting rod body insertion hole **18** are included at the end portions (the end portions in the circumference direction of the crawler), and the end portions of the rubber crawler units are successively connected by inserting connecting rod bodies **21** (not shown) through the connecting rectangular parallelepiped block through-holes **19** and the connecting rod body insertion holes **18** to form the rubber crawler in the endless form.

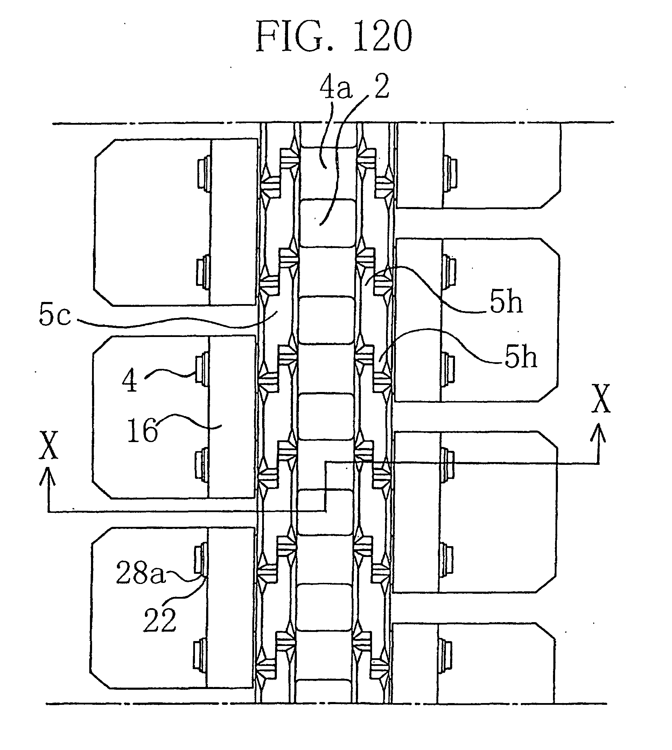

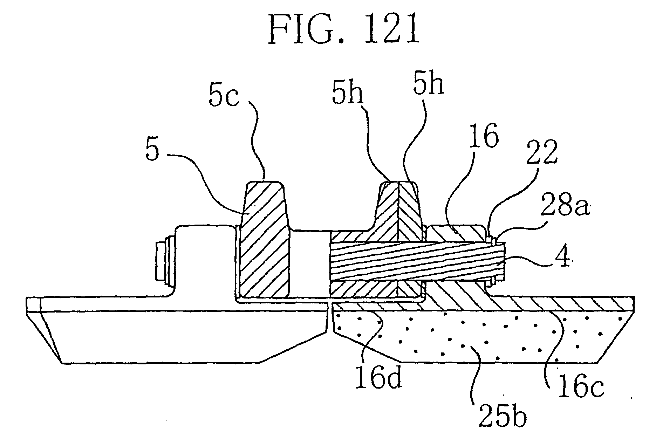

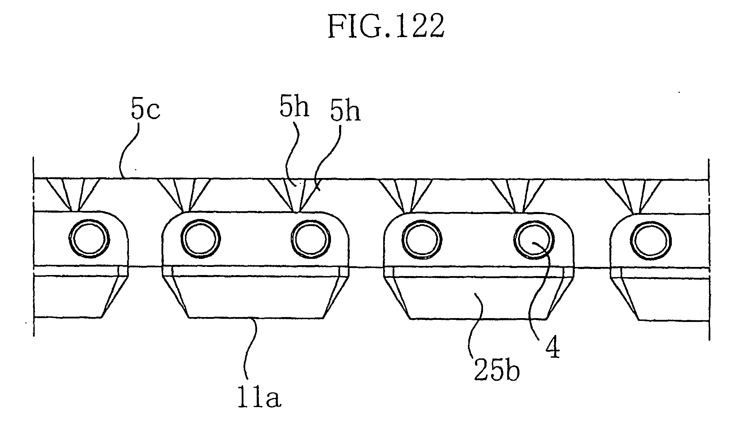

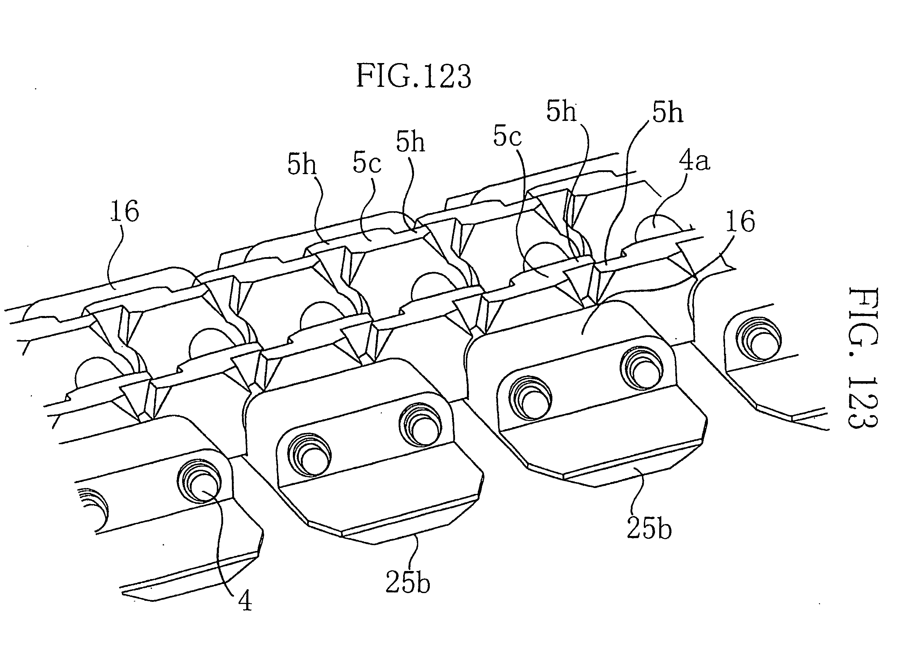

A twenty-sixth embodiment will be explained with use of FIG. **120** to FIG. **123**. FIG. **120** is a plan view showing an inner circumference side of the twenty-sixth embodiment, FIG. **121** is a sectional view taken along the X-X line in FIG. **120**, FIG. **122** is a side view and FIG. **123** is a perspective view of an inner circumference side of the twenty-sixth embodiment.

In the twenty-sixth embodiment, the step portions **5h** are provided at the regions of the through-holes **7** of the rectangular parallelepiped blocks **5**, so that the wall thickness of the through-hole regions is formed to be thinner than the center parts of the rectangular parallelepiped blocks **5**, then by using the rectangular parallelepiped blocks **5** which are formed so that the step portions **5h** are in the opposite direction at the front and at the rear in the longitudinal direction of the rectangular parallelepiped block **5**, the rectangular parallelepiped blokes **5** are placed to face each other with the sprocket engaging holes **2** between them, the step portions **5h** of the adjacent rectangular parallelepiped blocks **5** are overlaid on each other, the rod bodies **4** are inserted through the through-holes **7** of the overlaid step portions **5h**, and the rod bodies **4** are connected with the rectangular parallelepiped blocks **5**, whereby the rubber crawler skeleton part **6** is constructed.

The through-hole **16a**, which is provided in the connecting block **16** of the belt unit **44** is fitted onto the rod body **4**, which is projectingly provided at the outer end portion in the width direction of the crawler, of the rectangular parallelepiped block **5** of the skeleton part **6**, to make the belt unit **25b** easily attachable and detachable to and from the rubber crawler skeleton part **6**.

The belt unit **25b** of this embodiment is an example in which rubber is bonded by vulcanization to the surface on the ground contact surface side of the wing portion **16c** and the central wing portion **16d** of the connecting block **16**, and the connecting block **16** is not embedded in the rubber part.

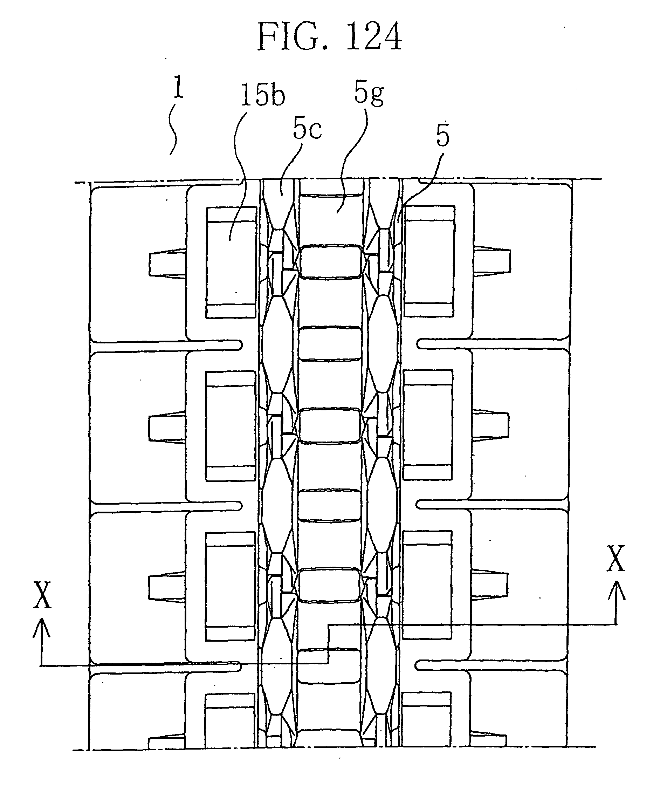

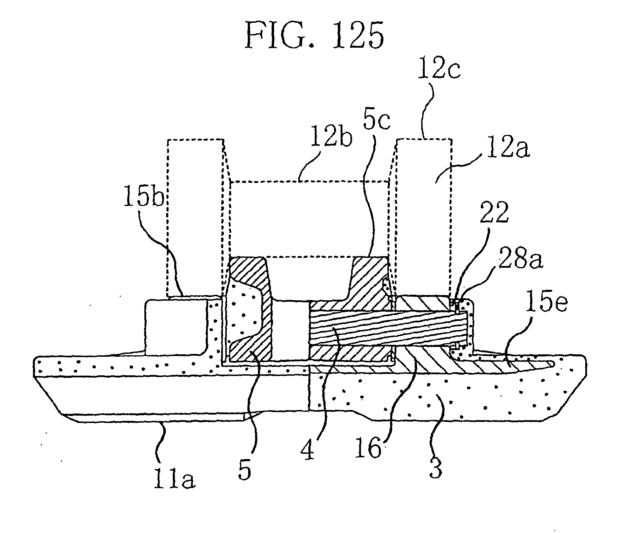

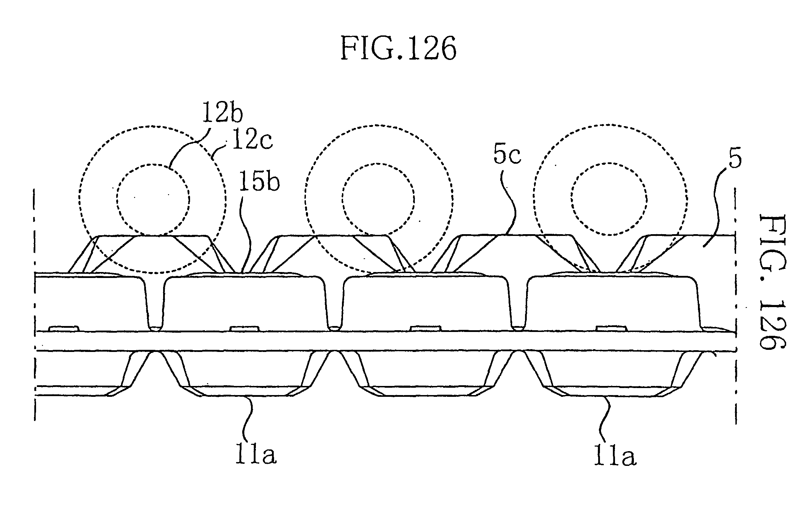

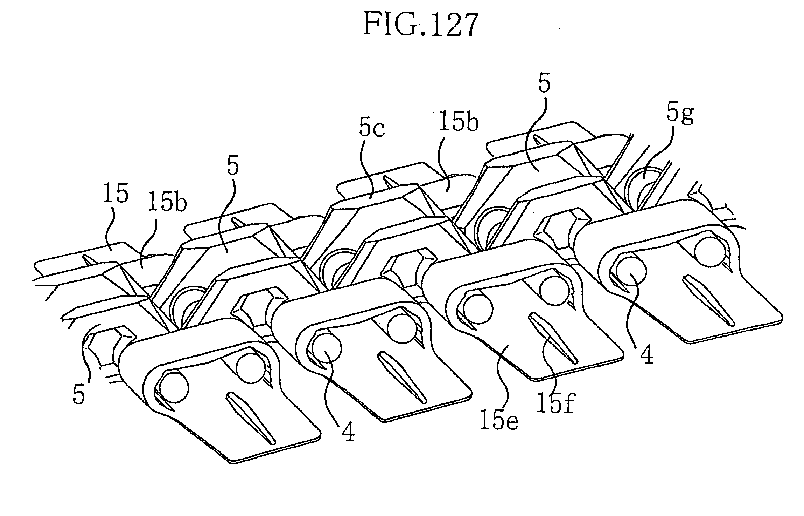

Next, a twenty-seventh embodiment of the present invention will be explained with use of FIG. **124** to FIG. **127**. FIG. **124** is a plan view of the inner circumference side of the twenty-seventh embodiment, FIG. **125** is a sectional view taken along the X-X line in FIG. **124**, FIG. **126** is a side view of the twenty-seventh embodiment, and FIG. **127** is a perspective view of combination of a core metal (the rod bodies **4**, the rectangular parallelepiped blocks **5**, and the connecting rings **15**) being the skeleton part **6**, which is embedded in the rubber crawler main body **3** of the twenty-seventh embodiment.

In this embodiment, the rectangular parallelepiped blocks **5** are placed to face each other at the left and the right with the sprocket engaging holes **2** between them, the rod bodies **4** are inserted into the through-holes **7** opposing each other of the opposing rectangular parallelepiped blocks **5**, the rod bodies, which are inserted into the through-holes of the rectangular parallelepiped blocks adjacent in the crawler circumference direction, are connected by means of the connecting rings **15**, whereby the rod bodies **4** and the rectangular parallelepiped blocks **5** are connected by means of the connecting rings **15** to thereby construct the skeleton part **6** of the rubber crawler.

In the rubber crawler of this embodiment, the core metal being the skeleton part **6** of the endless rubber crawler, which is constructed by the above-described rod bodies **4** and the rectangular parallelepiped blocks **5**, and the connecting rings **15**, is provided in the rubber crawler main body **3**.

In this embodiment, the rectangular parallelepiped blocks **5** are placed face to face at the left and the right with the sprocket engaging holes **2** between them, and therefore the roller rolling contact surfaces **5c** of the left and right rectangular parallelepiped blocks **5** are not continuous in the crawler circumference direction. The connecting rings **15** are provided to be displaced in the crawler circumference direction with respect to the rectangular parallelepiped blocks **5**, but the connecting rings **15** at the left and the right are not continuous in the crawler circumference direction. As a result, when the rollers roll, if the rollers travel on the regions at which the rolling contact surface is discontinued between the rectangular parallelepiped block and the rectangular parallelepiped block, and the connecting ring and the connecting ring, the rollers fall in between them, and the crawler has vigorous vibrations, but by using an outer flange type roller **12a**, a central track roller **12b** of the outer flange type roller **12a** is rolled on the roller rolling contact surface **5c** of the rectangular parallelepiped block **5**, and an outer flange roller **12c** of the outer flange type roller is rolled on a rolling contact surface **15b** of the roller of the connecting ring **15**, whereby the rollers roll to travel on the continuous rolling contact surface by the roller rolling contact surface **5c** of the rectangular parallelepiped block **5** and the rolling contact surface **15b** of the roller of the connecting ring **15**, and the rollers do not fall in, thus making it possible to prevent vibration of the crawler.

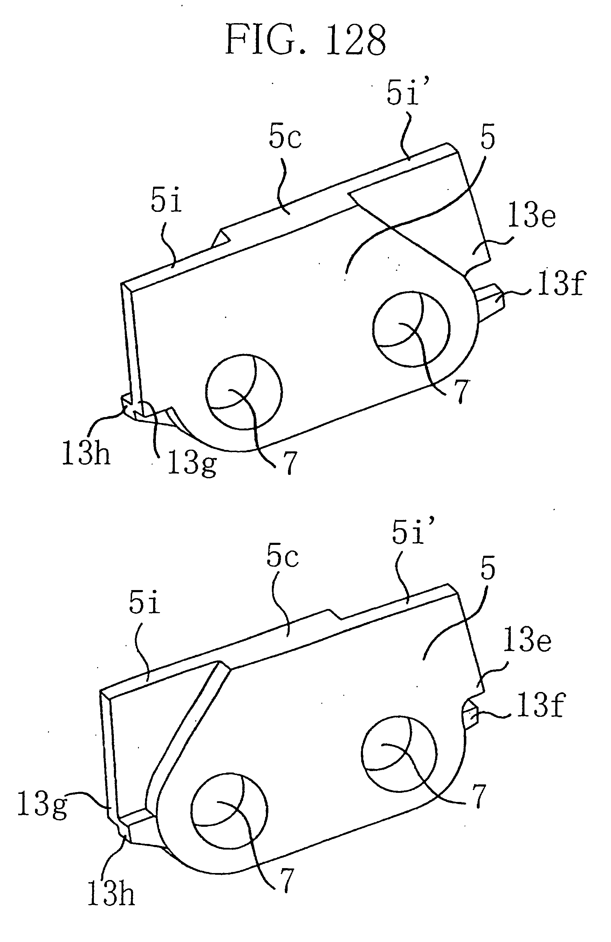

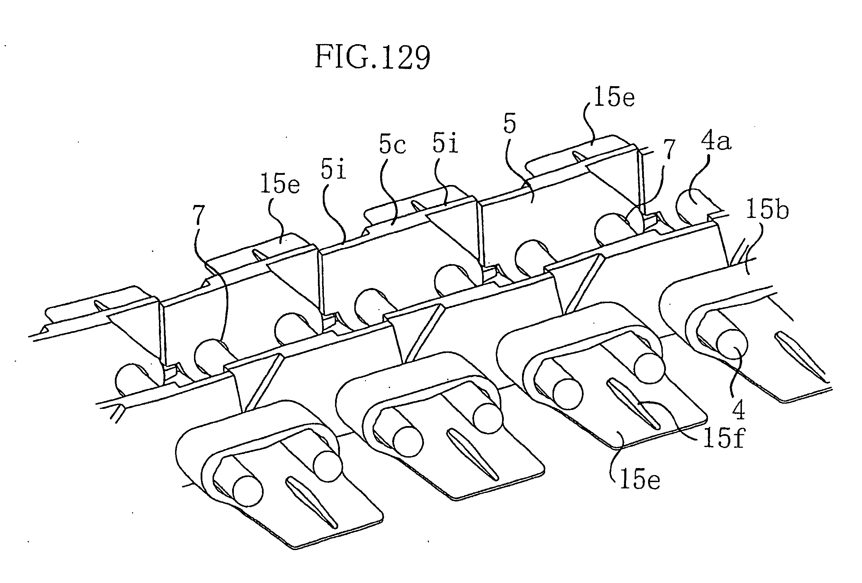

Another example of vibration prevention of the twenty-seventh embodiment is shown in FIG. **128** and FIG. **129**. FIGS. **128A** and **B** are perspective views of the rectangular parallelepiped block **5** of another example, and FIG. **129** is a perspective view of combination of the core metal (the rod bodies **4** and the rectangular parallelepiped blocks **5**, and the connecting rings **15**) being the skeleton part **6** which is provided in the rubber crawler main body **3** of another example. In this embodiment, for the rectangular parallelepiped block **5**, the roller rolling contact surface **5c** at the top portion of the projected portion of the rectangular parallelepiped block **5** is extended longitudinally in the crawler circumference direction to be extended rolling contact surfaces **5i** and **5i',** the roller rolling contact surface **5c** is extended to arrange the extended roller contact surfaces **5i** and **5i'** alternately at the left and the right to provide the construction in which the extended rolling contact surfaces are alternately arranged. The rectangular parallelepiped blocks **5** shown in FIG. **128A** and FIG. **128B** are paired and arranged to face each other as shown in FIG. **129**, so that the extended rolling contact surfaces **5i** of the rectangular parallelepiped block **5** and the extended rolling contact surface **5i'** of the adjacent rectangular parallelepiped block **5** overlap each other in the view in the width direction of the crawler, and the roller rolling contact surfaces **5c** of the rectangular parallelepiped block **5** is made continuous in the crawler circumference direction, whereby the rollers are prevented from falling in and vibration is prevented.

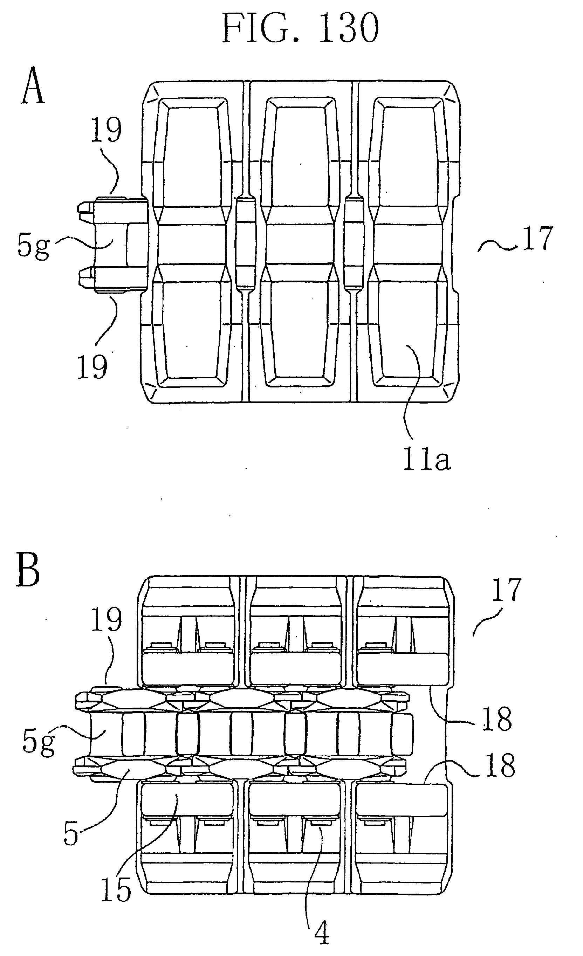

A twenty-eighth embodiment of the present invention will be explained with use of FIGS. **130A** and **B**. FIG. **130A** is a plan view showing an outer circumference side of a rubber crawler unit **17** of the twenty-eighth embodiment, and **B** is a plan view showing an inner circumference side.

The twenty-eighth embodiment is the rubber crawler unit **17** with the construction in which the rectangular parallelepiped blocks **5** are placed at the left and the right to face each other with the sprocket engaging holes **2** between them, the rod bodies **4** are inserted into the opposing through-holes **7** of the opposing rectangular parallelepiped blocks **5**; and the rod bodies inserted into the through-holes of the adjacent rectangular parallelepiped blocks in the crawler circumference direction are connected by means of the connecting rings **15**, and the rod bodies **4** and the rectangular parallelepiped blocks **5** are connected by means of the connecting rings **15**, whereby the skeleton part **6** of the rubber crawler is formed.

The rubber crawler unit **17** of this embodiment includes the connecting rectangular parallelepiped block through-holes **19** and the connecting rod body insertion holes **18** at the end portions (the end portions in the crawler circumference direction), and the end portions of the rubber crawler unit are connected in succession by inserting the connecting rod bodies **21** (not shown) through the connecting parallelepiped block through-holes **19** and the connecting rod body insertion holes **18** to form the rubber crawler in the endless form.

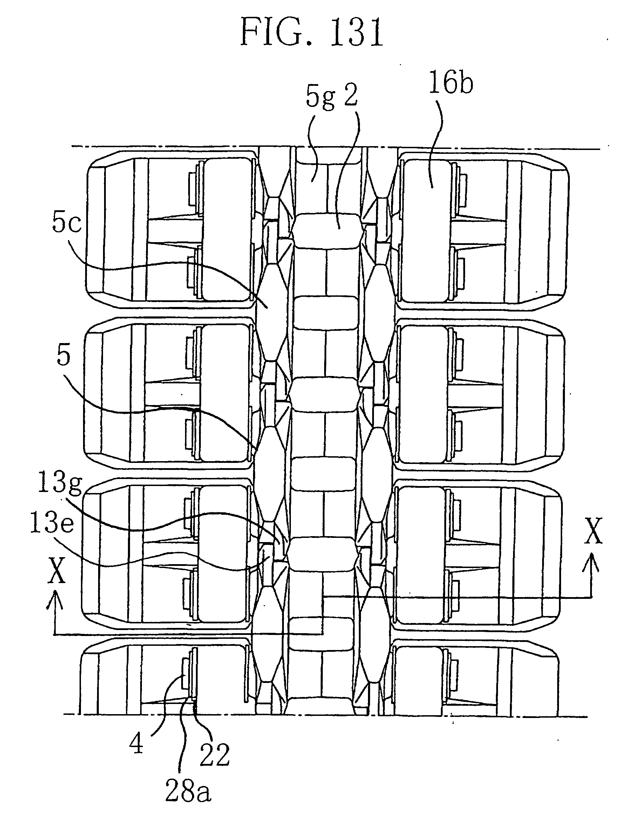

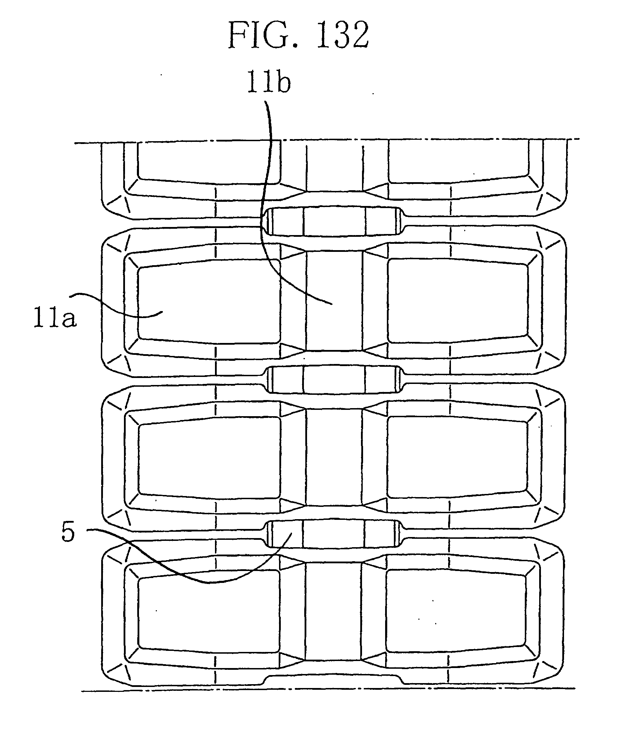

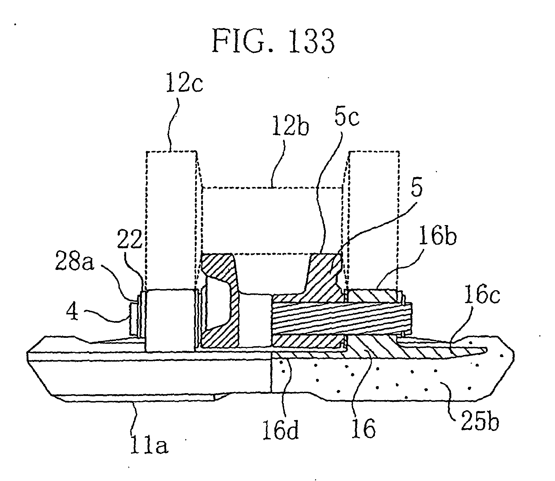

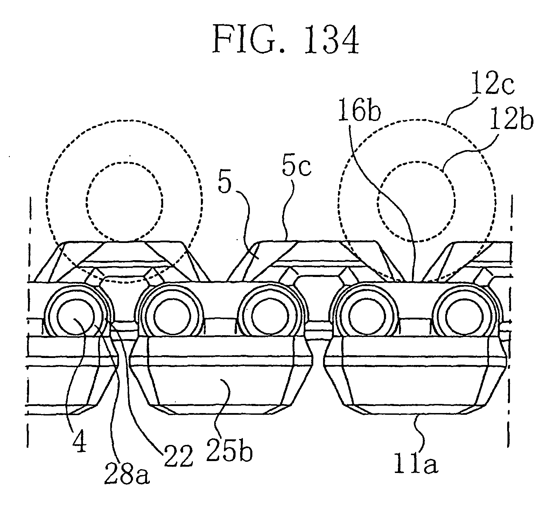

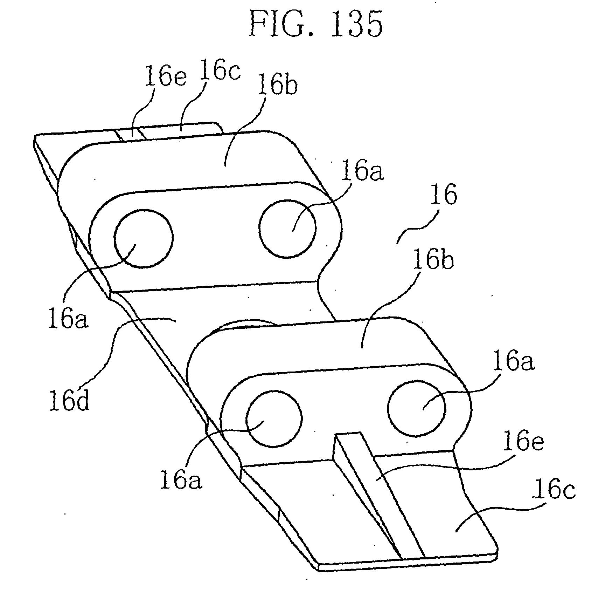

A twenty-ninth embodiment of the present invention will be explained with use of FIG. **131** to FIG. **135**. FIG. **131** is a plan view showing an inner circumference side of the twenty-ninth embodiment, FIG. **132** is a plan view showing an outer circumference side, FIG. **133** is a sectional view taken along the line X-X in FIG. **131**, FIG. **134** is a side view, FIG. **135** is a perspective view of the inner circumference side of a connecting block **16** used in the twenty-ninth embodiment.

In the twenty-ninth embodiment, the rectangular parallelepiped blocks **5** are placed at the left and the right to face each other with the sprocket hole **2** between them, the rod bodies **4** are inserted into the opposing through-holes **7** of the opposing rectangular parallelepiped block **5**; and the rod bodies inserted into the through-holes of the adjacent rectangular parallelepiped blocks in the crawler circumference direction are connected by means of the connecting blocks **16**, and the rod bodies **4** are connected by means of the rectangular parallelepiped blocks **5** and the connecting blocks **16**, whereby the skeleton part **6** of the rubber crawler is formed. The assembling method is the same as in the eighteenth embodiment, and therefore the explanation will be omitted.

Since the through-holes **16a** provided in the connecting block **16** of the belt unit **25b** are fitted onto the rod bodies **4** projectingly provided at the outer end portion of the rectangular parallelepiped block **5** in the crawler width direction, of the skeleton part **6** to perform assembly, the belt unit **25b** can be easily attached and detached to and from the rubber crawler skeleton part **6**.

As for the left and right connecting blocks **16** in this embodiment, the left and right connecting blocks are integrally formed with the central wing portions **16d** of them being connected, so that the wing portion is formed all over the width direction of the crawler. As a result, the rubber part of the belt unit **25b** can be integrally formed over the width of the crawler, thus improving durability of the rubber part.

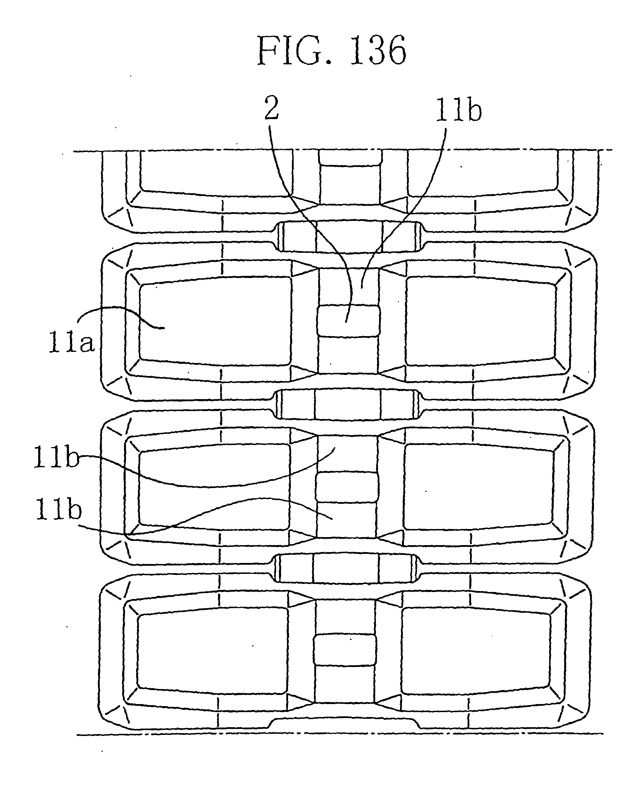

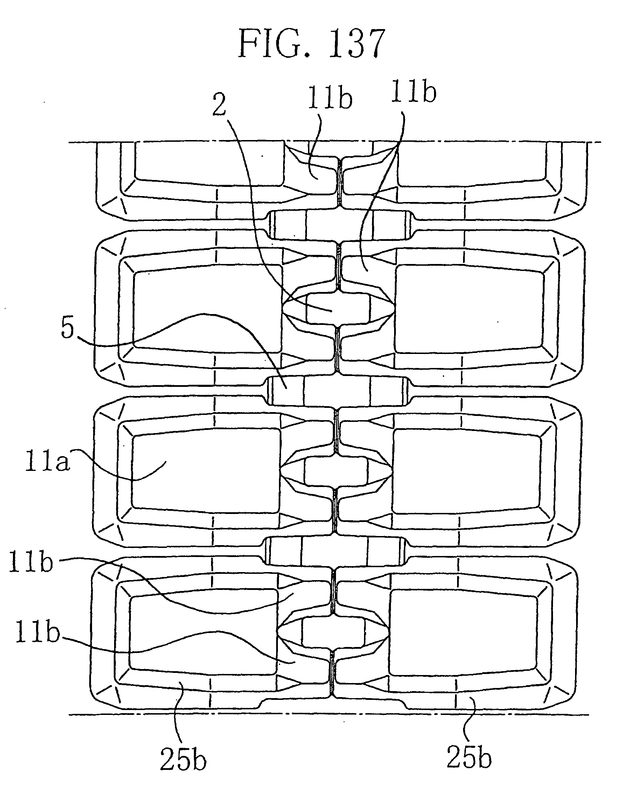

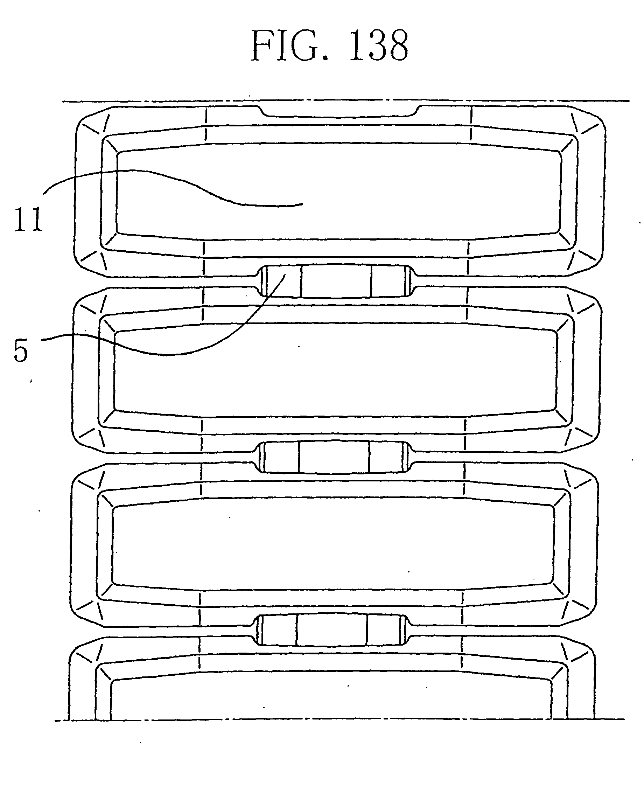

FIG. **136** to FIG. **138** are plan views showing another example of this embodiment. FIG. **136** shows the one provided with the engaging holes **2** in the middle lugs **11b** of the twenty-ninth embodiment, FIG. **137** shows the one in which the belt units **25b** in the twenty-ninth embodiment are divided into the left and the right in the width direction of the crawler, and FIG. **138** shows the one in which the middle lugs **11b** of the twenty-ninth embodiment is formed to have the same height as the ground contact lubs **11a** to form the large ground contact lugs **11**.

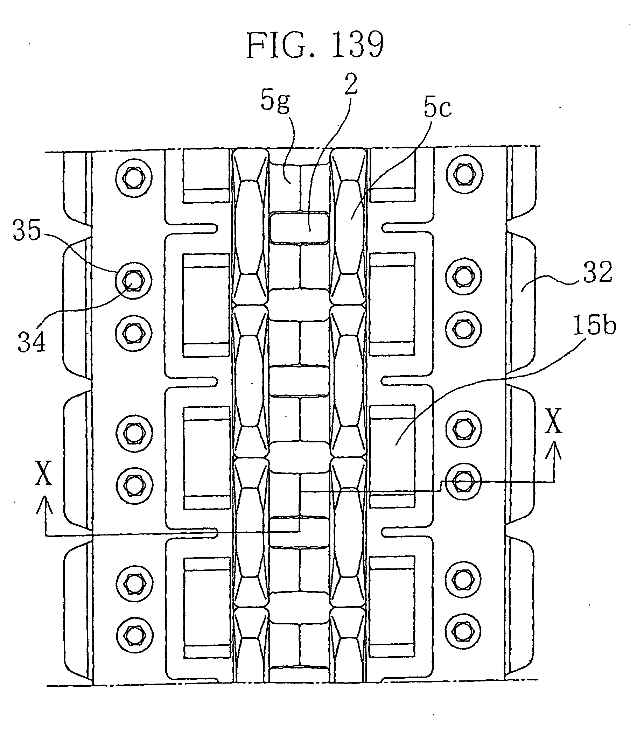

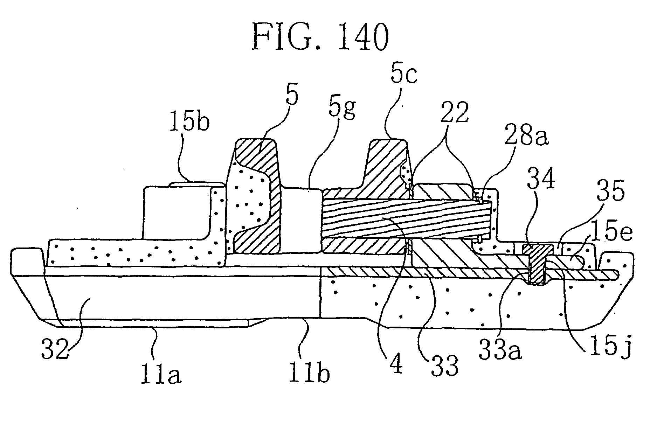

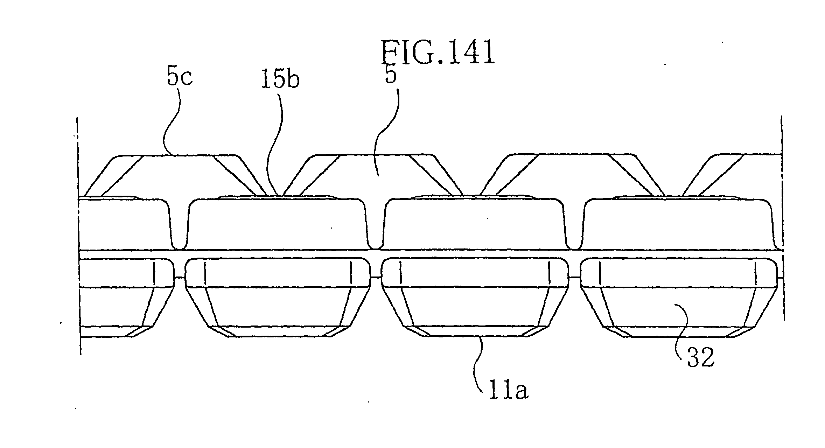

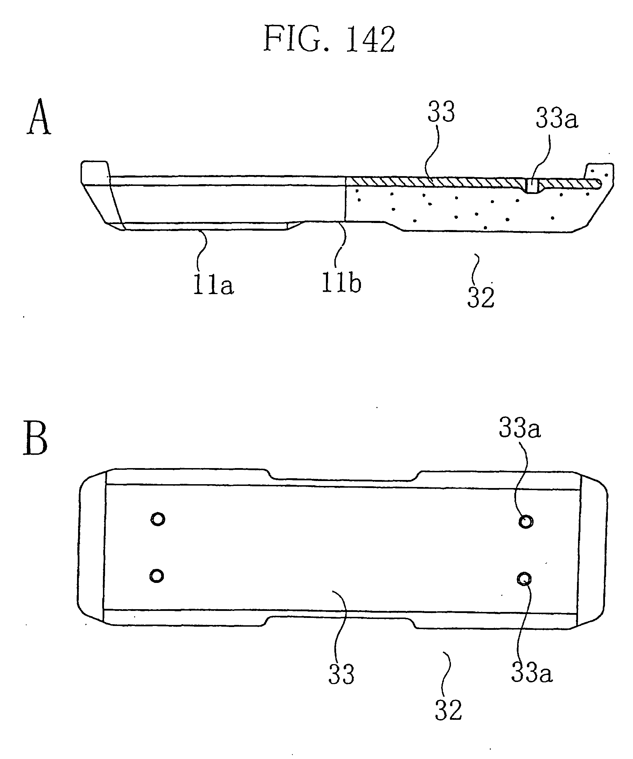

FIG. **139** to FIG. **142** show a thirtieth embodiment of the present invention. FIG. **139** is a plan view of an inner circumference side, FIG. **140** is a sectional view taken along the X-X line in FIG. **139**, FIG. **141** is a side view, FIG. **142A** is a sectional view of a rubber pad and FIG. **142B** is a plan view of an inner circumference side of the rubber pad.

In the thirtieth embodiment, a rubber crawler base part which is made by deleting the ground contact lug rubber part from the rubber crawler main body **3** is formed, and mounting holes **15j** penetrating in the crawler thickness direction (vertical direction) are provided in the wing portions **15e** of the connecting rings **15** of the skeleton part embedded in the rubber crawler base part, in the rubber crawler in which the rectangular parallelepiped blocks **5** are placed at the left and the right to face each other with the sprocket holes **2** between them, the rod bodies **4** are inserted into the opposing through-holes **7** of the opposing rectangular parallelepiped blocks **5**; and the rod bodies inserted into the through-holes of the adjacent rectangular parallelepiped blocks in the crawler circumference direction are connected by means of the connecting rings **15**, and the rod bodies **4** are connected by means of the rectangular parallelepiped blocks **5** and the connecting rings **15**, whereby the skeleton part **6** of the rubber crawler is constructed.

Further, a rubber pad **32** of the thirtieth embodiment is shown in FIGS. **142A** and **B**, the rubber pad **32** is integrally formed at a shoe plate **33** by bonding rubber by vulcanization to at least a ground contact surface side and a side surface of the metal shoe plate **33**, and the shoe plate **33** includes screw holes **33a**.

With use of the mounting holes **15j** of the connecting ring wing portions **15e** embedded in the rubber crawler base part, and the screw holes **33a** provided in the shoe plate **33** of the rubber pad **32**, the rubber pad **32** is mounted to the rubber crawler belt part with bolts **34**, whereby the ground contact lug rubber part of the rubber crawler is formed by the rubber pad.

A tool hole **35** having the sufficient dimension for a socket wrench, with which the bolt is fastened, to be inserted in is included in the inner circumference side of the rubber crawler base part corresponding to the mounting hole **15j** of the connecting ring wing portion **15e**.

In this embodiment, the ground contact rubber lug part is constructed by the rubber pad **32** that is attachable and detachable, and therefore when the lug rubber is damaged, the ground contact rubber lug part can be easily replaced by replacing the rubber pad **32**, thus reducing the cost.

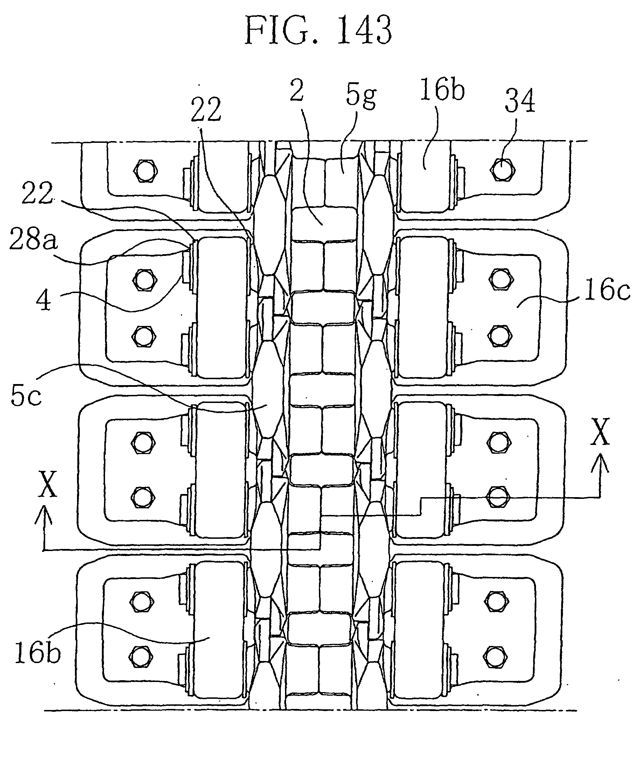

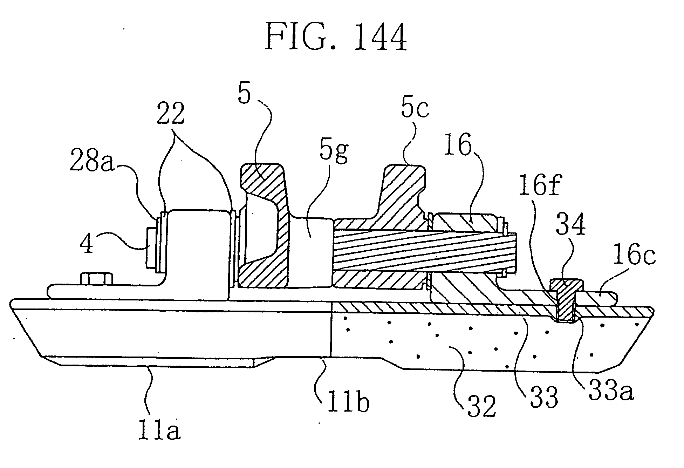

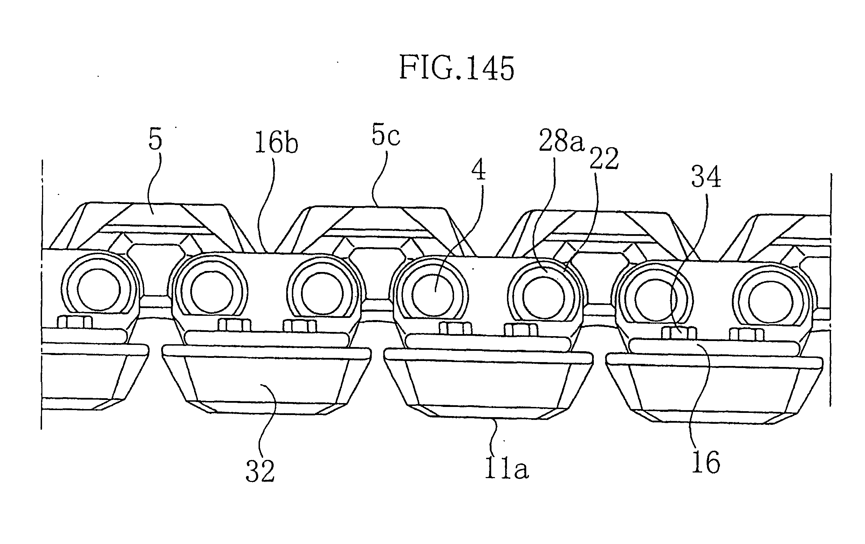

FIG. **143** to FIG. **145** show a thirty-first embodiment of the present invention. FIG. **143** is a plan view of an inner circumference side, FIG. **144** is a sectional view taken along the X-X line in FIG. **143**, and FIG. **145** is a side view.

In the thirty-first embodiment, the connecting ring **15** of the rubber crawler skeleton part in the thirtieth embodiment is made the connecting block **16**, and further the skeleton part is not embedded in the rubber crawler base rubber part. Reference numeral **16f** is a mounting hole provided in the wing portion **16c** of the connecting block **16**. The other parts are the same as in the thirtieth embodiment, and therefore the explanation thereof will be omitted.

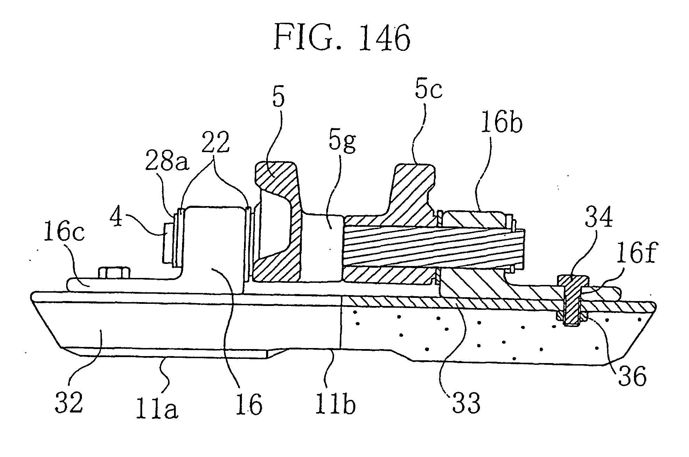

FIG. **146** is the drawing showing another example of the thirty-first embodiment, and is a sectional view of the rubber crawler.

In this embodiment, the screw hole **33a** provided in the shoe plate **33** of the rubber pad **32** is made a nut **36**, and the nut is welded onto the shoe plate **33**.

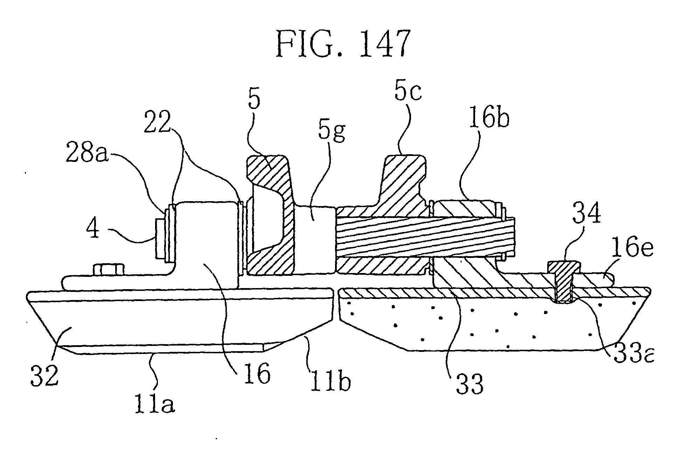

FIG. **147** is the drawing showing still another example of the thirty-first embodiment, and is a sectional view of the rubber crawler.

In this embodiment, the rubber pad **32** is divided into the left and right parts in the crawler width direction, accordingly, when the ground contact lug rubber is damaged, the rubber pad **32** is replaced, whereby the ground contact lug rubber part can be replaced, and since the rubber pad **32** is divided into the left and right parts in the width direction of the crawler in this embodiment, only the part that is more damaged is replaced, whereby the cost is further reduced.

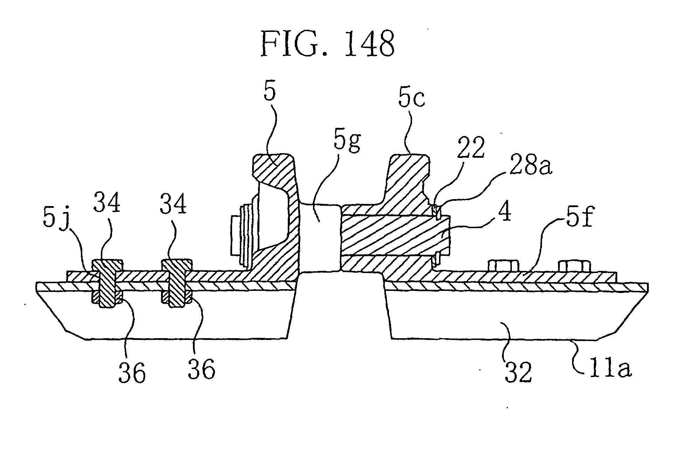

FIG. **148** is a sectional view showing a thirty-second embodiment of the present invention.

The thirty-second embodiment is the embodiment in which the connecting block **16** of the rubber crawler skeleton part in the thirty-first embodiment is not used, but a wing portion **5f** is provided at the rectangular parallelepiped block **5**, a mounting hole **5j** is provided in this wing portion **5f**, and the rubber pad **32** is mounted to the wing portion **5f** of the rectangular parallelepiped block. Since the connecting block **16** is not used, there is nothing to connect the rectangular parallelepiped blocks with in the crawler circumference direction, but the shoe plates **33** are connected across the wing portions **5f** of the rectangular parallelepiped blocks **5** at the front and the rear in the crawler circumference direction, which can be used in place of the connecting block **16**. The rectangular parallelepiped blocks **5** may be arranged to face each other, or in a zigzag fashion.

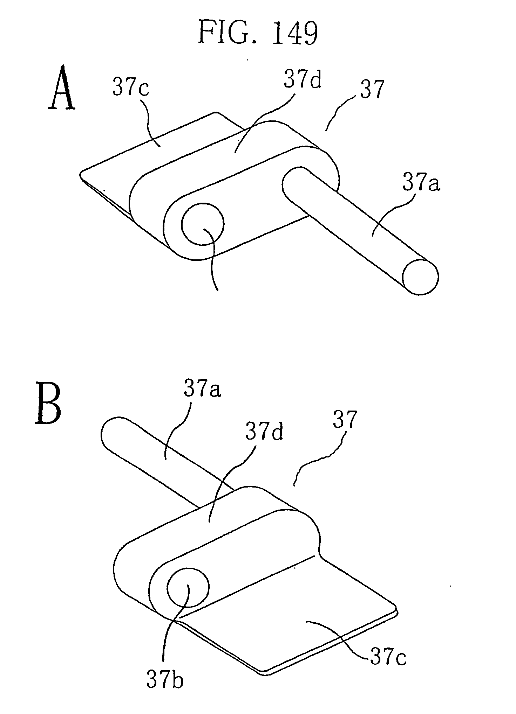

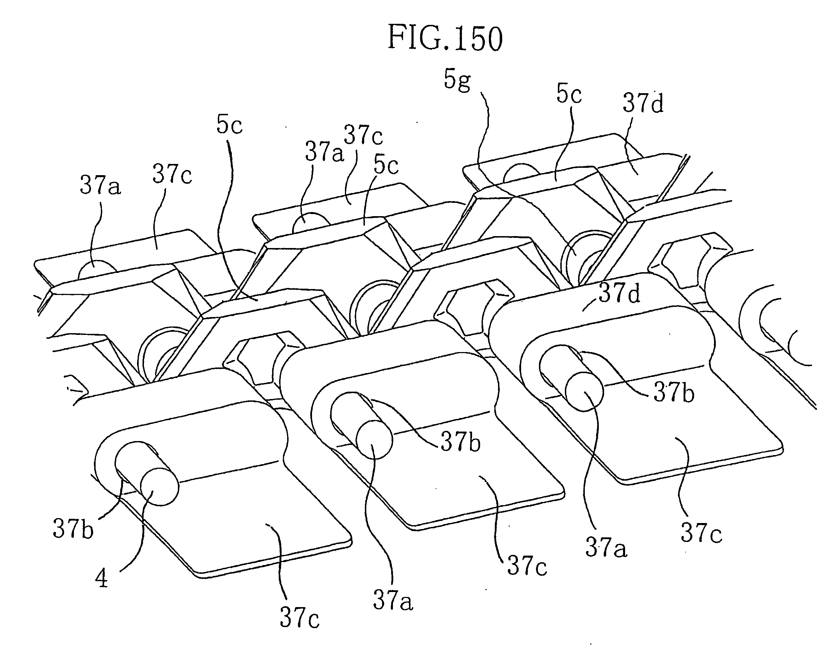

Next, FIG. **149** and FIG. **150** show a thirty-third embodiment of the present invention. FIG. **149** is a perspective view of a connecting block **37** of this embodiment, FIG. **150** is a perspective view explaining combination of the core metal being the rubber crawler skeleton part **6**.

The thirty-third embodiment is the one in which the rod body and the connecting block are integrally formed, a rod body **37a** is projectingly formed at a position corresponding to one of the through-holes provided at the front and the rear in the rubber crawler circumference direction of the connecting block, and at the other position, a through-hole **37b** is provided, and further, a wing portion **37c** is formed at the opposite side of the rod body **37a**. The rod body **37a** projectingly provided and integrally formed is inserted through the through-hole **7** of the rectangular parallelepiped block **5** and the through-hole **37b** of the connecting block **37** to connect the rod body **37a** with the rectangular parallelepiped block **5** and the connecting block **37**, as shown in FIG. **150**, whereby the rubber crawler skeleton part is constructed.

Reference numeral **37d** in the drawing denotes a roller rolling contact surface.

As a result that the rod body is integrally formed at the connecting block and the number of components is reduced, the assembly operation is reduced at the time of production, and the cost can be reduced.

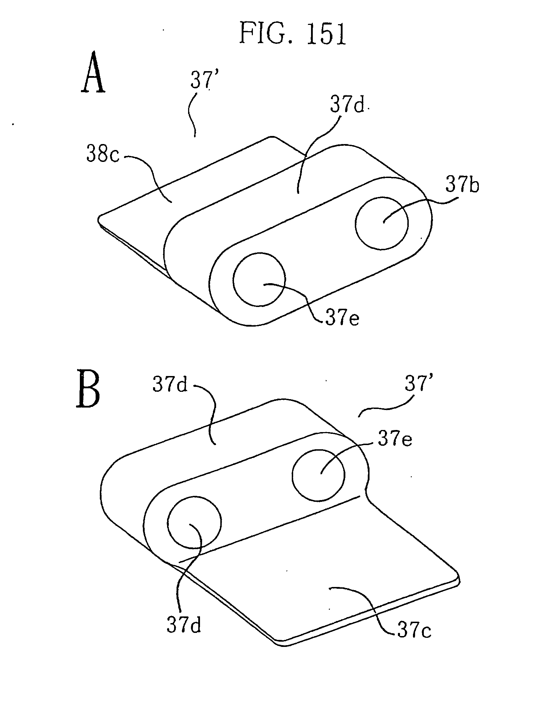

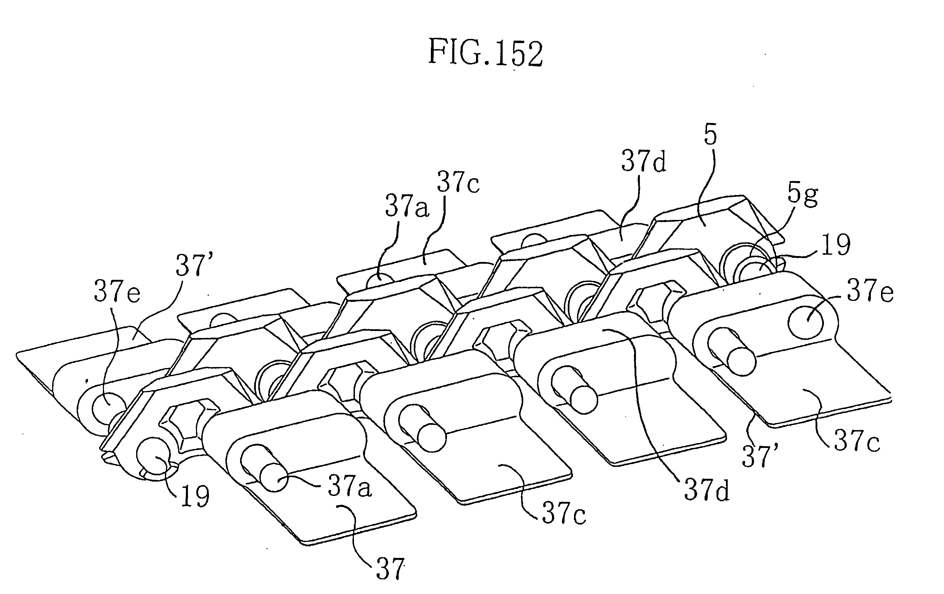

FIG. **151** and FIG. **152** show a thirty-fourth embodiment of the present invention, which show a rubber crawler unit in an example of the core metal in which the rod body and the connecting block are integrally formed, as shown in the thirty-third embodiment, FIGS. **151A** and **B** are perspective views of a connecting block used for connecting end portions of the rubber crawler unit, and FIG. **152** is a perspective view of combination of a skeleton part embedded in the rubber crawler unit main body of this embodiment.

The thirty-forth embodiment is the one in which the rubber crawler unit is constructed by using the core metal in which the rod body and the connecting block are integrally formed, at both end portions in the rubber crawler circumference direction of the rubber crawler unit, connecting blocks **37'** for connection including the through-hole **37b** and a connecting through-hole **37e** shown in FIG. **151** are arranged at both end portions of the crawler of the rubber crawler unit in order to connect the rubber crawler unit by inserting the connecting rod bodies therethrough, and the rubber crawler units are connected in succession by inserting the connecting rod bodies into the connecting though-holes **19** of the rectangular parallelepiped blocks **5** and the connecting through-holes **37e** of the connecting block **37'** for connection, whereby the rubber crawler in the endless form is made.

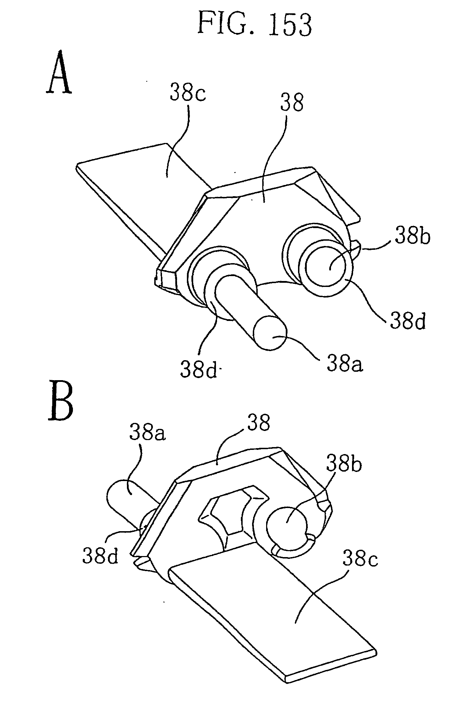

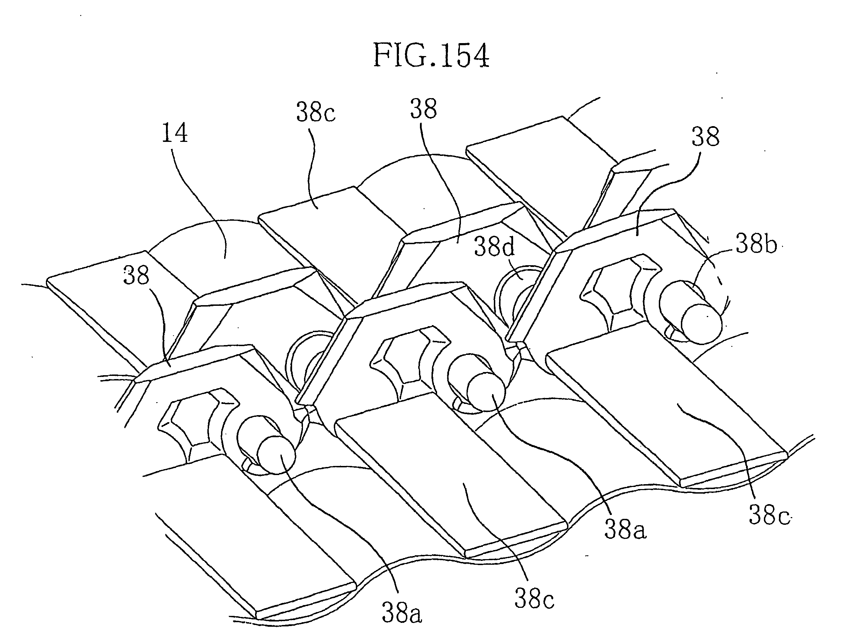

FIG. **153** and FIG. **154** show a thirty-fifth embodiment of the present invention. FIG. **153** is a perspective view of a rectangular parallelepiped block **38** (the rectangular parallelepiped block in which a wing portion is formed at the rectangular parallelepiped block and the rod body is integrally formed) of this embodiment, and FIG. **154** is a perspective view explaining combination of the core metal being the skeleton part provided in the rubber crawler and a reinforcement layer **14**.

The thirty-fifth embodiment is the one in which the rod body and the rectangular parallelepiped block are integrally formed, a rod body **38a** is projectingly formed at a position corresponding to one of the through-holes provided at the front and the rear of the rectangular parallelepiped block in the rubber crawler circumference direction, and at the other position, a through-hole **38b** is provided, and further, a wing portion **38c** is formed at the opposite side of the rod body **38a**. The rod body **38a** projectingly provided and integrally formed is inserted through the through-hole **38a** of the rectangular parallelepiped block **38** to connect the rod body **38a** with the rectangular parallelepiped block **38**, as shown in FIG. **154**, whereby the rubber crawler skeleton part **6** is constructed.

Accordingly, the number of components of the core metal is decreased, and cost reduction is realized.

Further, a bush **38d** is integrally formed at the rectangular parallelepiped block **38**, and the number of components is further decreased to contribute to reduction in production cost.

In this situation, it is desirable to embed the reinforcement layer **14** in the outer circumference (ground contact surface) side of the wing portion **38c** as shown in FIG. **154**, and the reinforcement layer **14** may be embedded in the inner circumference side of the wing portion **38c**, or it may be embedded in both the outer circumference side and the inner circumference side. If only the longitudinally adjacent rectangular parallelepiped blocks can be connected, the reinforcement layers other than the above-described one may be used.

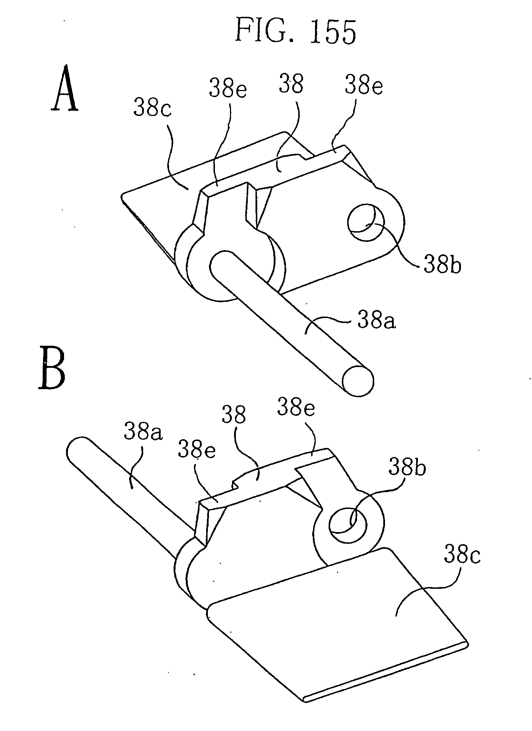

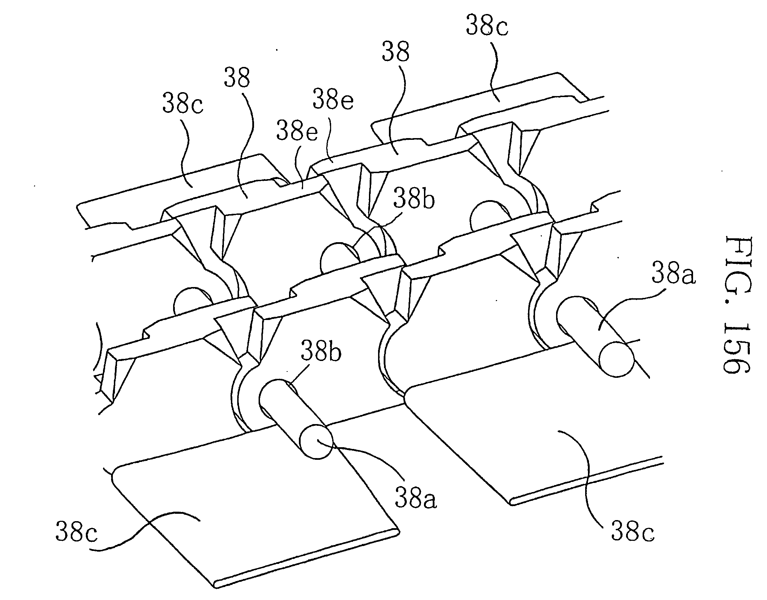

FIG. **155** and FIG. **156** show a thirty-sixth embodiment of the present invention. FIG. **155** is a perspective view of a rectangular parallelepiped block **38** (the rectangular parallelepiped block in which a wing portion is formed at the rectangular parallelepiped block and the rod body is integrally formed) of this embodiment, and FIG. **156** is a perspective view explaining combination of the core metal being the rubber crawler skeleton part.

In the thirty-sixth embodiment, a step portion **38e** is provided at the thorough-hole region of the rectangular parallelepiped block of the thirty-fifth embodiment so that the wall thickness at the through-hole region is formed to be thinner than at the center part of the rectangular parallelepiped block, and the step portions are formed in the opposite direction in the longitudinally adjacent rectangular parallelepiped blocks, whereby the rectangular parallelepiped block part is made a rectangular parallelepiped block **38**, and as shown in FIG. **156**, the rubber crawler skeleton part **6** is constructed by inserting the rod bodies **38a** integrally formed at the rectangular parallelepiped blocks **38** into the through-holes **38b** of the rectangular parallelepiped blocks **38**.

Since the rod body is connected using two of the rectangular parallelepiped blocks in this embodiment, the problem does not arise though the reinforcement layer is not included as in the thirty-fifth embodiment.

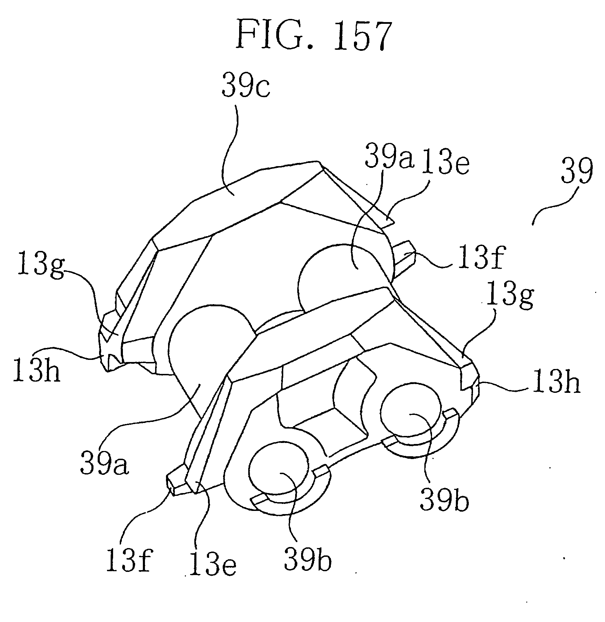

FIG. **157** shows a thirty-seventh embodiment of the present invention. FIG. **157** is a perspective view of a rectangular parallelepiped block **39** (rectangular parallelepiped block made by integrally forming a pair of rectangular parallelepiped blocks via a bush) of this embodiment.

The rectangular parallelepiped block **39** of the thirty-seventh embodiment is used in the rubber crawler skeleton structure with the construction in which a pair of rectangular parallelepiped blocks are arranged to face each other, and two rectangular parallelepiped blocks are integrally formed via bushes **39a** engaging with the driving wheel (sprocket) of the endless crawler traveling equipment.

Accordingly, the number of components of the core metal is reduced, and the cost is reduced.

Reference numeral **39b** in the drawing denotes a through-hole, and reference numeral **39c** denotes a rolling contact surface. In this embodiment, the rod bodies are connected with use of the rectangular parallelepiped block, the connecting member (connecting block, connecting ring) or the like as described in the embodiments so far (not shown).

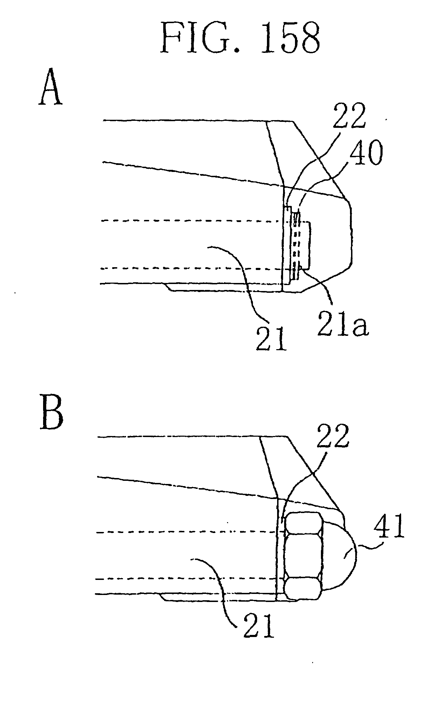

Next, another example of fixing of the connecting part of the rubber crawler unit, and a fixing method of a belt body (endless belt body, belt body with an end, belt unit) will be explained with use of FIG. **158** to FIG. **162**.

In the aforementioned embodiment, as a method for fixing the connecting part of the rubber crawler unit and fixing a belt body (endless belt body, belt body with an end, belt unit), pins, hexagon socket head cap screws, and C-shaped retaining rings are used, and as the method other than the above-described ones, it may be suitable to provide pin holes **21a** in both end portions of the connecting rod body **21**, fit washers **22** in both end portions of the connecting rod body **21**, and tap roll pins **40** into the pin holes **21a** to fix the connecting rod body **21** so that it is not detached, as shown in FIG. **158A**.

It may be suitable to cut screw threads in both end portions of the connecting rod body **21**, and attach and fix the connecting rod body **21** by fastening a cap nut **41** to this screw portion, as shown in FIG. **158B**.

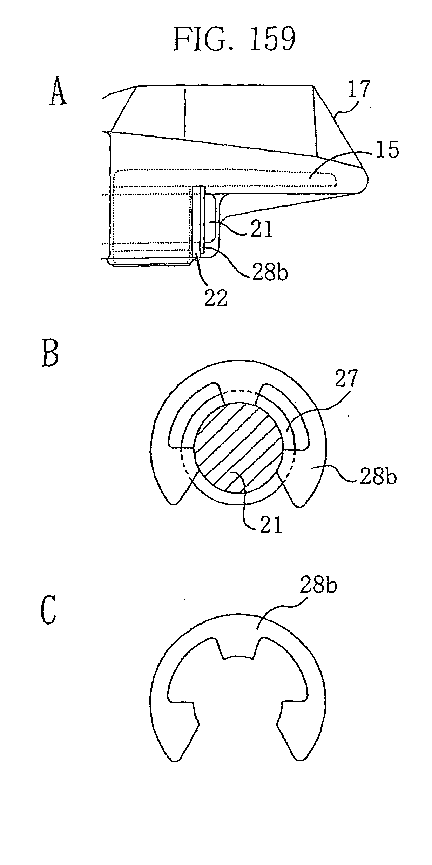

Further, it may be suitable to adopt the construction in which grooves **27** are provided in both end portions of the connecting rod body **21**, and the washer **22** is fitted into the center side of the groove **27** in the crawler width direction, attach an E-shaped retaining ring **28b** into the groove **27** with an exclusive tool to fix the connecting rod body **21** so that it is not detached, as shown in FIGS. **159A** to **C**.

In the present invention, the fixtures and fixing methods other than the above may be used, the present invention is not limited to the above fixtures and fixing methods, and it is suitable if only the rubber crawler unit connecting part, and the belt bodies (endless belt body, belt body with an end, belt unit) are favorably fixed.

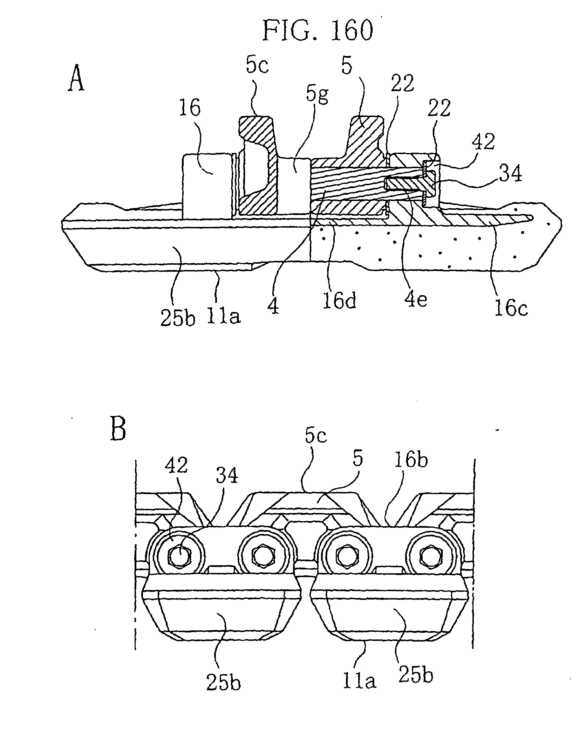

Next, a thirty-eighth embodiment of the present invention will be explained with use of FIGS. **160A** and **B**. FIG. **160A** is a sectional view of the thirty-eighth embodiment, and FIG. **160B** is a side view.

The thirty-eighth embodiment is the one in which the fixtures used for fixing the rubber crawler unit connecting part and fixing the belt bodies (endless belt body, belt body with an end, belt unit) are buried into a fixture burying hole **42** provided inside the connecting ring **15** or the connecting block **16**. This prevents the fixtures from being damaged, and prevents the trouble of division and removal being impossible due to the fixtures being damaged at the time of connecting and dividing the rubber crawler unit connecting part, and attaching and detaching the belt bodies.

In this embodiment, the fixture burying hole **42** is provided in the main body part of the connecting block **16** that is embedded in the belt unit **25b**, a bolt hole **4e i**s threaded in the rod body **4** of the rubber crawler skeleton part **6**, the rod body **4** is buried into the connecting block through-hole **16a** of the belt unit **25b**, the belt unit **25b** is attached to the rubber crawler skeleton part **6**, and a bolt **34** is fastened to a screw hole **4e** of the rod body **4** via the washer **22** to fix it.

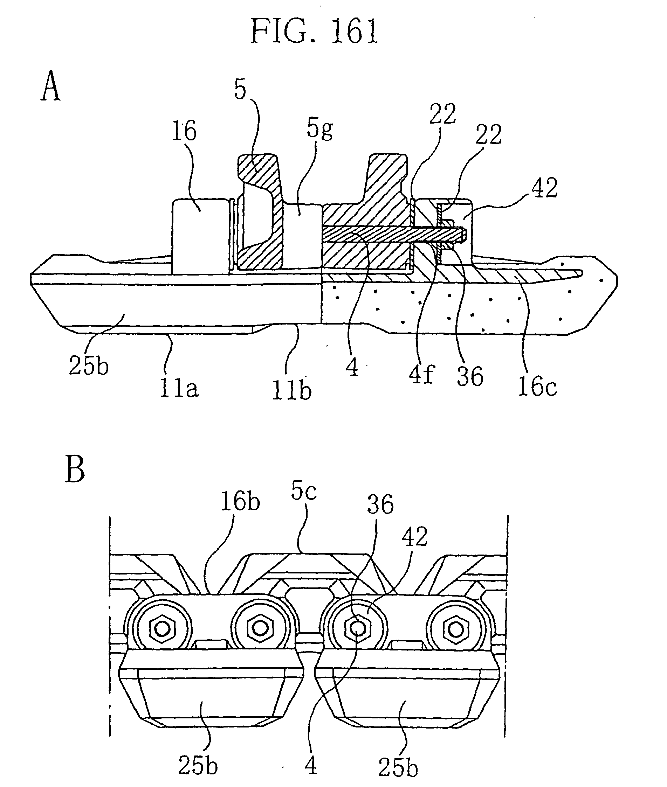

FIG. **161** shows another example of the thirty-eighth embodiment, FIG. **161A** is a sectional view, and FIG. **161B** is a side view.

This example has the construction in which screws are threaded in both end portions of the rod body **4** to form screw portions **4f**, to which the nuts are fastened to fix them.

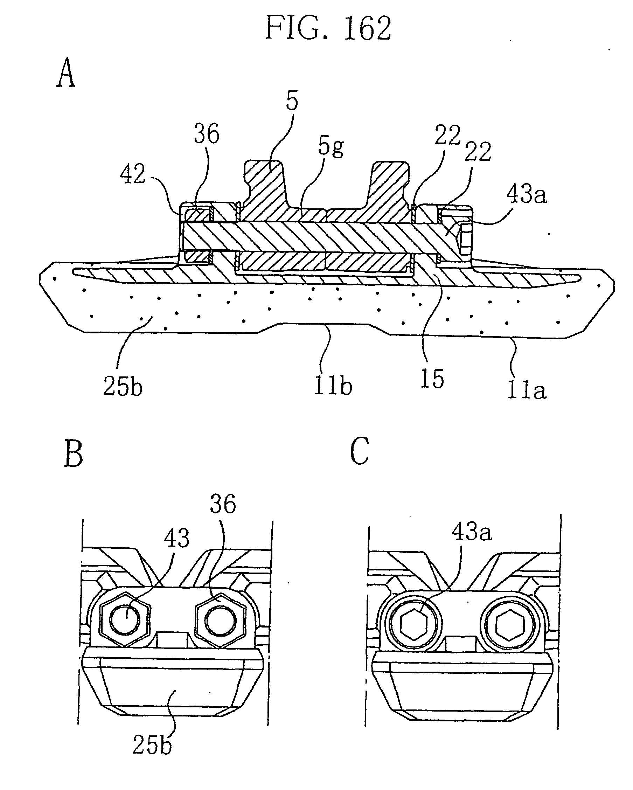

FIG. **162** shows still another example, FIG. **162A** is a sectional view, FIG. **162B** is a left side view, and FIG. **162C** is a right side view.

In this example, the rod body itself is made a bolt, an end portion at one side of a bolt rod body **43** is made a hexagon socket head screw head portion **43a**, and the other end portion is constructed to be a thread portion **43b** in which a screw is threaded, the screw head portion **43a** is buried inside the fixture burying hole **42** at one side provided at the connecting ring **15** of the belt unit **25b**, a nut is buried into the fixture burying hole **42** at the other side to have the structure in which fastening and fixing are performed with use of the bolt rod body **67** and the nut **36**.

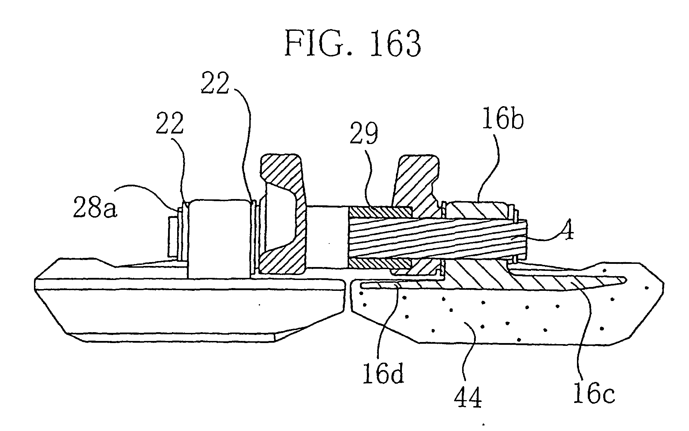

Next, a thirty-ninth embodiment of the present invention will be explained with use of FIG. **163**. FIG. **163** is a sectional view of the thirty-ninth embodiment.

The thirty-ninth embodiment has the construction in which a bush **29** is fitted into a bush fitting hole of the rectangular parallelepiped block **5**, whereby a load exerted on the engaging part with the driving wheel at the center part of the rod body is supported by the bush **29** and the rectangular parallelepiped block **5** to improve durability of the rod body **4**.

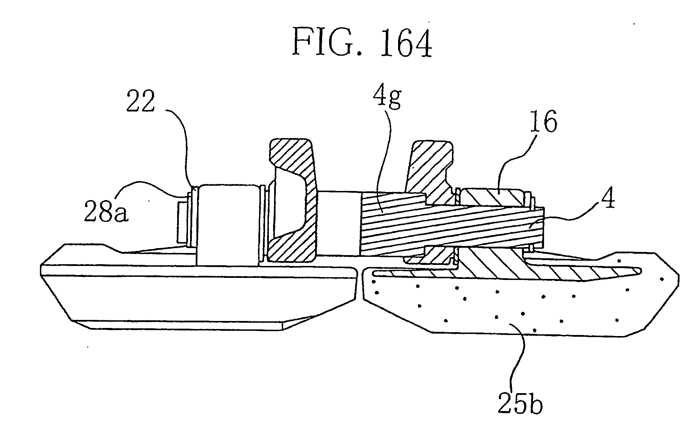

FIG. **164** shows another example of the thirty-ninth embodiment, FIG. **164** is a sectional view, in which the center part of the rod body **4** is made a thick-walled center thick-walled portion **4g** in place of the bush **29** of the thirty-ninth embodiment, and has the same effects as the thirty-ninth embodiment.

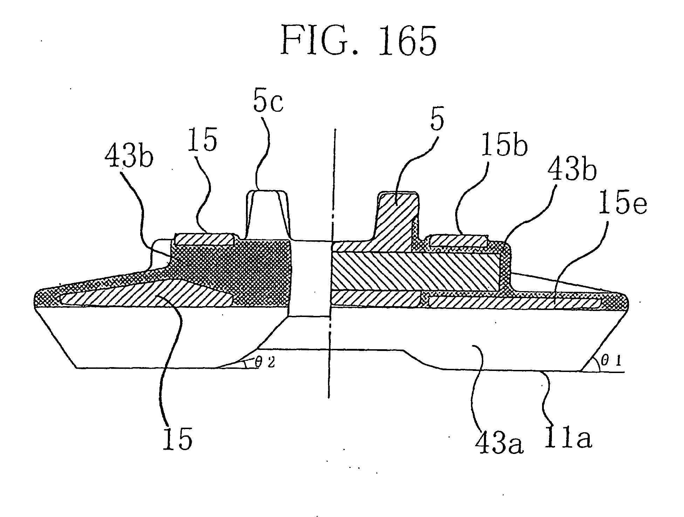

Next, a fortieth embodiment of the present invention will be explained with use of FIG. **165**. FIG. **165** is a sectional view of the fortieth embodiment of the present invention.

The fortieth embodiment is provided with a low hardness rubber part **43b** which is made by lowering the rubber hardness of the inside of through-holes and insertion holes, in which the rod bodies and rectangular parallelepiped blocks and connecting rings are fitted, and the rubber hardness of the surrounding area, as compared with the hardness of the rubber of the lug rubber portion **43a** on the ground contact surface side, and it is desirable that the rubber hardness of the low hardness rubber part is usually 40 degrees to 70 degrees of JIS (A) hardness, but on the other hand, it is normally preferable that the JIS (A) hardness of the lug part is in the range of 50 degrees to 95 degrees.

The skeleton part of the crawler of the present invention is mainly explained in the above-described embodiments, and as the crawler, it is preferable to further include the following requirements.

### ·The thickness of the rubber lug part

It is desirable that the wall thickness of the rubber lug part of the present invention (the rubber thickness from the outer circumference (ground contact surface) side surface of the rod bodies, connecting rings, connecting blocks, and the wing portions of the connecting ring and the connecting block to the ground contact surface) is in the range of 10 mm to 40 mm in the construction equipment or the like which is equipped with the rubber crawler and the rubber crawler unit of the present invention of the class of the equipment body weight of less than one ton, 15 cm to 50 mm in the class of 1 to 3 tons, 20 mm to 60 mm in the class of 3 to 6 tons, 25 mm to 70 mm in the class of 6 to 8 tons, and 30 to 120 mm in the class of 10 tons or more, from the relationship between the durability of the rubber lug part and the production cost. (If the wall thickness is made smaller, the production cost becomes low while the durability of the lug rubber part is reduced, and on the other hand, if the wall thickness is made larger, the durability is improved while the production cost is high.) Since the durability of the rubber lug part is influenced by the performance of the rubber according to the shape of the rubber lug part, rubber material and rubber compounding ingredients of the rubber which is used, and compounding design of the rubber, and the wall thickness is determined by the use conditions and the like required of the rubber crawler, it is not always necessary to set the wall thickness in this range, but it is normally preferable to set it in the above-described range.

### ·Angle of inclination of the rubber lug part side surface and the ground contact surface

It is preferable that the angle of inclination **θ1** (see FIG. **165**) of the rubber lug part side surface and the ground contact surface is normally in the range of 30 degrees to 90 degrees from the relationship between friction between the rubber lug part and the ground contact surface, which is caused by shearing force working between the ground contact surface and the rubber lug part, a catch on irregularities on the ground contact surface and an obstacle, and durability of the rubber lug portion (if the angle of inclination is made an obtuse angle, the friction with the ground contact surface and a catch on the ground contact surface are reduced, but the area of the ground contact surface becomes smaller and the durability of the rubber lug part is reduced), but they are influenced by the shape of the rubber lug part, the rubber material and the rubber compounding ingredient of the rubber to be used and the like, the performance of the rubber by the compounding design of the rubber, use conditions required of the rubber crawler and the like, and it is not always necessary to make the wall thickness in this range, but normally it is preferable to make the wall thickness in the above-described range.

In this situation, the inclined surface is made a double inclined surface, the angle of inclination **θ1** of a first inclined surface on the inner circumference side is made an acute angle (50 degrees to 90 degrees), and an angle of inclination **θ2** of a second inclined surface on the outer circumference side is made an acute angle (10 degrees to 45 degrees), the above-described problem can be solved more effectively.

The present invention is not limited to each of the embodiments described above, but it goes without saying that the combination of each of the embodiments and the like is possible.

### Industrial Applicability

The present invention adopts the construction in which the skeleton of the rubber crawler is formed by connecting the rod bodies with the rectangular parallelepiped blocks, and therefore even if a damage, which can be called fatal in the conventional rubber crawler, is caused to the rubber part, breakage by cutting, or breakage by steel cord corrosion does not occur, and if the rectangular parallelepiped block being a part of the core metal is caught by a chassis, the core metal does not stick out as the conventional rubber crawler, thus making the rubber crawler extremely reliable.

As a result of adopting the construction in which the width of the connecting member (the connecting rings and the connecting blocks) being the rubber crawler skeleton part of the present invention is made small, the wing portions are provided only at the outer circumference (the ground contact surface) side, the connecting rings and the outer circumference side of the connecting rings are formed to be wide, and the inner circumference (the non-ground contact surface) side is formed to be narrow, the area of the outer circumference side to which a load is always applied is made larger to improve durability, and the inner circumference side to which a load is not applied is made smaller to reduce the amount of the materials, whereby production cost is reduced, and it becomes possible to produce the connecting rings and the connecting blocks at low cost.

Further, in the construction in which the central wing portion is provided at the inner side of the connecting member in the rubber crawler width direction, the lug rubber part can be made large by integrally molding the ground contact lug and the middle lug, namely, the ground contact lug can be raised from the central wing portion, and the width of the ground contact lug can be made large, thus improving durability of the rubber lug part.

In the construction with such length as the end portions of the rod body are not located at the outer side from the outer end portion of the connecting member in the rubber crawler width direction, edge tearing can be prevented without using the inclined surface on the ground contact surface side, which is provided at the rod body in order to prevent the breakage (edge tearing) of both end portions in the rubber crawler width direction caused by the rubber crawler riding on a curbstone or the like on the road surface, and the production cost of the rod bodies can be reduced, thus making it possible to produce the rubber crawler at low cost.

As a result that the outer end portion of the connecting member in the rubber crawler width direction is folded to the inner circumference side (non-ground contact surface side) of the rubber crawler, and the inclined surface is provided at the outer circumference side (the non-ground contact surface side) of the rubber crawler, the inclined area is increased as compared with the one provided with the inclined surface at the rod body, and breakage (edge tearing) of both end portions in the rubber crawler width direction, which is caused by the rubber crawler riding on a curbstone or the like on the road surface, is prevented more effectively, thus improving the durability of the both end portions in the rubber crawler width direction.

Further, in the construction in which as for the slip prevention parts of the rectangular parallelepiped block, the slip prevention projections are each provided at the upper portion of the right side (or the upper portion of the left side) and the lower portion of the left side (or the lower portion of the right side) of the rectangular parallelepiped block on one end side of the rectangular parallelepiped block, and the slip prevention projections are each provided at the upper portion of the left side (or the upper portion of the right side) and the lower portion of the right side (or the lower portion of the left side) on the other end portion side of the rectangular parallelepiped block, so that the respective slip prevention parts (the slip prevention projections) overlap each other in the vertical direction and the lateral direction of the crawler in the view in the crawler circumference direction, and in the lateral direction in the view in the crawler width direction, the rubber crawler can be not only prevented from laterally slipping in the crawler width direction with the slip prevention projections, but also the rubber crawler can be prevented from being twisted, thus making it possible to effectively prevent the rubber crawler from being detached from the traveling equipment.

Since the slip prevention projections are arranged in the opposite positions at the upper portion and the lower portion of the rectangular parallelepiped block, it is possible to prevent rightward slip and leftward slip, that is lateral slip in both direction with only one slip prevention part.

In the construction in which the rod body is integrally formed at the connecting member, or the rod body, the connecting member, the rectangular parallelepiped block, and the bush are all integrally formed, the number of components can be reduced, and assembly operation is reduced at the time of production, thus making it possible to reduce the cost.

In the construction in which as for the arrangement of the rubber crawler skeleton part, the rectangular parallelepiped blocks are arranged in a zigzag fashion at the left and the right with the engaging hole between them, the rod body is connected by the through-holes at the front portion of one of the rectangular parallelepiped blocks and at the rear portion of the other one, and thus even if a heavy load is applied to the rubber crawler, extension to some degree occurs to the rubber crawler, and abnormal tension, though a very little, can be absorbed.

Further, in the construction in which as for the arrangement of the rubber crawler skeleton part, the step portion is provided at the through-hole region of the rectangular parallelepiped block, so that the wall thickness at the through-hole region is formed to be thinner than the center part of the rectangular parallelepiped block, the step portions are formed to be in the opposite direction to each other at the front and the rear in the longitudinal direction of the rectangular parallelepiped block, the rectangular parallelepiped blocks are placed to face each other with the sprocket engaging hole between them, the step portions of the adjacent rectangular parallelepiped blocks are overlaid on each other, and the rod body is inserted through the through-holes of the overlaid step portions to connect the rod body with the rectangular parallelepiped blocks, the rectangular parallelepiped blocks and the rod bodies are firmly connected, thus making it possible to enhance the rigidity of the rubber crawler without including the connecting members and the reinforcement layers.

When the top portion of the projecting portion of the rectangular parallelepiped block is made a flat roller rolling contact surface, the roller rolling contact surface is formed to be continuous in the crawler circumference direction, and the vibration of the rubber crawler due to the roller falling in is prevented.

The mode of the rubber crawler is made the rubber crawler in the endless form with the rubber crawler units being connected, other than the conventional rubber crawler that is integrally molded in an endless form, and thus if the rubber crawler is partially damaged, it is possible to replace only that part, thus making it possible to reduce cost as compared with the case in which all the rubber crawler is replaced, reduce the waste, and since this is compact as compared with the integrally molded rubber crawler, transportation, waste disposal and the like are facilitated.

By combining the rubber crawler units, an optional number of links (the length of the circumference of the crawler) can be set.

Further, in the rubber crawler in which the belt body (the endless belt body, the belt body with an end, the belt unit) is attachable and detachable to and from the rod body at the outer side of the rectangular parallelepiped block in the rubber crawler width direction, when the rubber part is damaged, only the rubber part (belt body) can be replaced, and only the rubber part damaged early is replaced, thus providing the economical rubber crawler.

The belt body can be produced even with a small-sized molding apparatus, and transportation and replacement are facilitated.

Since it is possible to replace the belt body with the rubber crawler being attached to the travelling equipment of the machine body, the operation of attaching and detaching the rubber crawler to and from the traveling device is not needed, further, replacement in the field such as the construction work site is possible, and depending on the case, a plurality of the lug shapes and the rubber performances of the belt body are prepared corresponding to the situation of the operation site, and the belt body can be replaced according to the situation of the operation site such as construction equipment. For example, if the belt body using the slip prevention lug shape for winter and slip prevention function and cold-resistance rubber, and the belt body normally used are prepared, it is possible that the belt body for winter is equipped during winter season, and the normal belt body is equipped during the seasons other than winter.

## Claims

1. A rubber crawler, **characterized in that** blocks are each shaped like a rectangular parallelepiped, include two through-holes with a space left in a lengthwise direction of an under surface part and are arranged at the left and right with sprockets engaging hole therebetween, respectively, the rubber crawler comprises rod bodies which are inserted through the through-holes of the left and right blocks and connect the blocks, the blocks adjacent in a lengthwise direction of the rubber crawler are connected to each other, and these rectangular parallelepiped blocks are provided in the rubber crawler.

2. The rubber crawler according to claim 1, **characterized in that** both outer end portions of the rod body are projectingly provided at outer end portion sides of the block in a crawler width direction, and the rubber crawler comprises connecting members for connecting the projected end portions of the rod bodies.

3. The rubber crawler according to claim 1 or claim 2, **characterized in that** width of the connecting member or the block in a crawler width direction is formed to be larger on a ground contact surface side than on an inner circumference surface side.

4. The rubber crawler according to claim 2 or claim 3, **characterized in that** wing portions are provided at the ground contact surface side of the connecting members or the blocks.

5. The rubber crawler according to claim 4, **characterized in that** the wing portions are provided at an inner side in the crawler width direction.

6. The rubber crawler according to claim 5, **characterized in that** a ground contact lug is provided at a ground contact surface side of the wing portion, the ground contact lug is provided to be raised from the wing portion provided at the inner side and continue to the ground contact surface side of the wing portion provided at the outer side.

7. The rubber crawler according to any one of claims 2 to 6, **characterized in that** both end portions of the rod body are not located at an outer side from an outer end portion of the connecting member in the crawler width direction.

8. The rubber crawler according to any one of claims 1 to 7, **characterized in that** slip prevention parts are formed at both end portions of the block in the lengthwise direction, and the slip prevention parts are each formed by providing slip prevention projections at an upper portion of one of left and right sides of the block and at a lower portion of the other of left and right sides thereof at one end side of the block, and by providing the slip prevention projections at an upper portion of the other one side and a lower portion of the one side at the other end portion side of the block, so that the respective slip prevention portions overlap each other in a vertical direction, a lateral direction, and a longitudinal direction of the crawler.

9. The rubber crawler according to any one of claims 1 to 8, **characterized in that** the rubber crawler includes a structure in which a belt unit provided at the outer portion of the block in the crawler width direction is divided into a plurality of belt units attachable to the rod body at the outer side of the block in the crawler width direction to be attachable and detachable, and a ground contact lug and a middle lug are integrally formed at the belt unit.

10. The rubber crawler according to claim 9, **characterized in that** the ground contact lug and the middle lug, which are a rubber part on a ground contact side of the belt unit, are integrally formed.

11. The rubber crawler according to any one of claims 1 to 10, **characterized in that** the left and the right blocks are placed in a zigzag fashion at the left and the right with the sprocket engaging hole between them, connecting members including insertion portions, through which the two rod bodies located with a space left in the longitudinal direction of the crawler can be inserted, are placed at the outer sides of the blocks in the crawler width direction, the connecting members are placed to connect the two rod bodies projected outside in the crawler width direction respectively from the blocks located with a space left in the longitudinal direction of the crawler, the block at one of the left and the right and the connecting member at the other one of the left and the right are arranged correspondingly to each other, and the block at the other one of the left and the right and the connecting member of the residual one of the left and the right are arranged correspondingly to each other.

12. The rubber crawler according to any one of claims 1 to 10, **characterized in that** the left and the right blocks are placed to face each other at the left and the right with the sprocket engaging hole between them, connecting members including insertion portions, through which the two rod bodies located with a space left in the longitudinal direction of the crawler can be inserted, are placed at the outer sides of the blocks in the crawler width direction, the connecting members are placed to connect the two rod bodies projected outside in the crawler width direction respectively from the blocks located with a space left in the longitudinal direction of the crawler, the left and the right blocks are arranged to face each other, and the left and right connecting members are arranged correspondingly to each other.

13. The rubber crawler according to any one of claims 1 to 10, **characterized in that** the left and the right blocks are placed to face each other at the left and the right with the sprocket engaging hole between them, the front and the rear through-holes of the blocks adjacent in the crawler circumference direction are overlaid on each other, the rod bodies are inserted through the overlaid through-holes, and thereby the rod bodies are connected with the blocks.

14. The rubber crawler according to any one of claims 1 to 13, wherein a rubber crawler unit of the minimum unit constructed by at least one block and at least one rod body, connecting through-holes are provided at both end portions of the rubber crawler unit in the crawler circumference direction, the connecting rod body is inserted through the connecting through-holes to be connected to connect the rubber crawler units, and thereby the rubber crawler is made a rubber crawler in an endless form.
